(19) Europäisches Patentamt
European Patent Office
Office européen des brevets

(11) **EP 4 668 930 A1**

(12) **EUROPEAN PATENT APPLICATION**
published in accordance with Art. 153(4) EPC

(43) Date of publication:
**24.12.2025 Bulletin 2025/52**

(21) Application number: **23929117.2**

(22) Date of filing: **27.03.2023**

(51) International Patent Classification (IPC):
**H04W 72/04** (2023.01)

(52) Cooperative Patent Classification (CPC):
**H04W 72/04**

(86) International application number:
**PCT/CN2023/084052**

(87) International publication number:
**WO 2024/197515 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **LIU, Lei**
**Shenzhen, Guangdong 518129 (CN)**
• **BI, Xiaoyan**
**Shenzhen, Guangdong 518129 (CN)**
• **LIU, Yong**
**Shenzhen, Guangdong 518129 (CN)**
• **JIANG, Chenglong**
**Shenzhen, Guangdong 518129 (CN)**
• **GE, Yiqun**
**Shenzhen, Guangdong 518129 (CN)**
• **SHI, Wuxian**
**Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **COMMUNICATION METHOD AND RELATED APPARATUS, AND SYSTEM**

(57) This application provides a communication method, a related apparatus, and a system. The method includes: A network device sends generated indication information to a terminal device, where the indication information is used to determine M pairs of transmission resources from N pairs of candidate transmission resources, each of the N pairs of candidate transmission resources is obtained by combining one of a plurality of candidate antenna ports and one of a plurality of candidate frequency domain resource units, candidate antenna ports and/or candidate frequency domain resource units included in any two pairs of candidate transmission resources are different, each of antenna ports included in the M pairs of transmission resources corresponds to one or more frequency domain resource units, N is greater than or equal to M, and N and M are positive integers. The terminal device determines the M pairs of transmission resources based on the received indication information and the N pairs of candidate transmission resources, and sends reference information on the M pairs of transmission resources. This implements resource indication for a sparse reference signal.

300

FIG. 3

**Description**

## TECHNICAL FIELD

This application relates to the wireless communication field, and in particular, to a communication method, a related apparatus, and a system.

## BACKGROUND

A sounding reference signal (sounding reference signal, SRS) can be used to measure an uplink channel, and measure a downlink channel based on channel reciprocity in a time division duplex (time division duplex, TDD) system, and is an important reference signal in wireless communication.

Currently, a transmission resource of the SRS is usually in a "comb (comb)" shape in frequency domain. For example, values of a parameter $K_{TC}$ are 2, 4, and 8, respectively indicating that resources occupied by an SRS transmitted on each antenna port are evenly distributed in frequency domain, and are spaced by two subcarriers (corresponding to $K_{TC}$=2), four subcarriers (corresponding to $K_{TC}$=4), and eight subcarriers (corresponding to $K_{TC}$=8). However, with development of multi-antenna technologies, a quantity of antenna ports of a terminal increases sharply, and a quantity of users who can be supported by a network increases sharply. This may cause high air interface resource overheads.

To resolve the problem of high air interface overheads, a concept of a sparse SRS is proposed. The sparse SRS may be unevenly arranged in frequency domain, and resources occupied by SRSs of different antenna ports may also be arranged differently in frequency domain. Therefore, frequency domain resources of SRSs corresponding to antenna ports are more flexibly distributed. When a terminal device has a a plurality of antenna ports, introduction of the sparse SRS helps reduce high resource overheads that may be caused by the plurality of antenna ports.

Because the parse SRS may be unevenly arranged in frequency domain, and frequency domain resources corresponding to different antenna ports may also be arranged differently, a current resource indication manner is not suitable. Therefore, how to indicate a resource of the sparse SRS becomes an urgent technical problem to be resolved.

## SUMMARY

This application provides a communication method, a related apparatus, and a system, to indicate a resource of a sparse SRS.

According to a first aspect, this application provides a communication method. The method may be applied to a terminal device. For example, the method may be performed by the terminal device, or may be performed by a component (such as a chip or a chip system) configured in the terminal device, or may be implemented by a logical module or software that can implement all or a part of functions of the terminal device. This is not limited in this application.

For example, the method includes: receiving indication information from a network device, where the indication information is used to determine M pairs of transmission resources, the M pairs of transmission resources are from N pairs of candidate transmission resources, each of the N pairs of candidate transmission resources is obtained by combining one of a plurality of candidate antenna ports and one of a plurality of candidate frequency domain resource units, candidate antenna ports and/or candidate frequency domain resource units included in any two pairs of candidate transmission resources are different, each of antenna ports included in the M pairs of transmission resources corresponds to one or more frequency domain resource units, N is greater than or equal to M, and N and M are positive integers; determining the M pairs of transmission resources based on the indication information and the N pairs of candidate transmission resources; and sending a reference signal on the M pairs of transmission resources.

The reference signal may be, for example, an SRS, or may be another reference signal. This is not limited in this application.

The candidate frequency domain resource unit may be a subcarrier (subcarrier, SC), a physical resource block (physical resource block, PRB), a resource block group (resource block group, RBG), a subband (subband), or a frequency domain resource unit obtained through division by using another frequency domain granularity.

The N pairs of candidate transmission resources may be predefined in a protocol, or may be configured by the network device. The plurality of candidate antenna ports included in the N pairs of candidate transmission resources are all or a part of antenna ports that can be used by the terminal device to send a signal in a current time unit. Port numbers of the plurality of candidate antenna ports may be consecutive or inconsecutive. The plurality of candidate frequency domain resource units included in the N pairs of candidate transmission resources may be consecutive or inconsecutive in frequency domain. This is not limited in this application.

In the M pairs of transmission resources, one antenna port may correspond to one or more frequency domain resource units. That is, antenna ports do not correspond to a fixed quantity of frequency domain resource units. In other words, quantities of frequency domain resource units corresponding to different antenna ports may be the same, or may be different. It may be understood that each antenna port and one or more frequency domain resource units corresponding to the antenna port may be used to transmit a reference signal of the antenna port.

Based on the foregoing solution, a correspondence between candidate antenna ports and candidate frequency domain resource units in the candidate transmission resources may be flexibly designed, to support one antenna port in corresponding to any quantity of frequency domain resource units, and the N pairs of candidate transmission resources may be flexibly adjusted as a quantity of antenna ports increases, thereby avoiding causing huge resource overheads. In addition, a transmission resource used to transmit the reference signal may be determined from the N pairs of candidate transmission resources. The terminal device may determine the transmission resource based on a position, indicated by the network device, of the transmission resource in the N pairs of candidate transmission resources. Therefore, strong support is provided for application of a sparse SRS (or another sparsely distributed reference signal). In addition, because the transmission resource is indicated in the N pairs of candidate transmission resources, it is equivalent to defining a small resource pool in a large resource range, so that indication overheads can be reduced by indicating the transmission resource in the resource pool.

With reference to the first aspect, in some possible implementations of the first aspect, the indication information is obtained through source compression; and determining the M pairs of transmission resources based on the indication information and the N pairs of candidate transmission resources includes: decompressing the indication information to obtain decompressed indication information; and determining the M pairs of transmission resources based on the decompressed indication information and the N pairs of candidate transmission resources.

For example, a manner for the foregoing source compression includes an entropy encoding manner, a quadtree manner, a hybrid quadtree-binary tree manner, or the like.

Source compression is performed on the indication information, so that indication overheads of the indication information can be further reduced.

According to a second aspect, this application provides a communication method. The method may be applied to a network device. For example, the method may be performed by the network device, or may be performed by a component (such as a chip or a chip system) configured in the network device, or may be implemented by a logical module or software that can implement all or a part of functions of the network device. This is not limited in this application.

For example, the method includes: generating indication information, where the indication information is used to determine M pairs of transmission resources, the M pairs of transmission resources are from N pairs of candidate transmission resources, each of the N pairs of candidate transmission resources is obtained by combining one of a plurality of candidate antenna ports and one of a plurality of candidate frequency domain resource units, candidate antenna ports and/or candidate frequency domain resource units included in any two pairs of candidate transmission resources are different, each of antenna ports included in the M pairs of transmission resources corresponds to one or more frequency domain resource units, N is greater than or equal to M, and N and M are positive integers; and sending the indication information to a terminal device.

For concepts such as a reference signal, a frequency domain resource unit, a candidate antenna port, a candidate frequency domain resource unit, a relationship between candidate antenna ports and candidate frequency domain resource units, and a transmission resource, refer to the foregoing descriptions in the first aspect. Details are not described again.

Based on the foregoing solution, a correspondence between candidate antenna ports and candidate frequency domain resource units in the candidate transmission resources may be flexibly designed, to support one antenna port in corresponding to any quantity of frequency domain resource units, and the N pairs of candidate transmission resources may be flexibly adjusted as a quantity of antenna ports increases, thereby avoiding causing huge resource overheads. In addition, a transmission resource used to transmit a reference signal may be determined from the N pairs of candidate transmission resources. The network device indicates, by using the generated indication information, positions of the M pairs of transmission resources in the N pairs of candidate transmission resources, and sends the indication information to the terminal device, so that the terminal device can determine the transmission resource based on the indication information and the predefined N pairs of candidate transmission resources. Therefore, strong support is provided for application of a sparse reference signal. In addition, because the transmission resource is indicated in the N pairs of candidate transmission resources, it is equivalent to defining a small resource pool in a large resource range, so that indication overheads can be reduced by indicating the transmission resource in the resource pool.

With reference to the second aspect, in some possible implementations of the second aspect, the indication information is obtained through source compression.

In this application, source compression is performed on the indication information, so that indication overheads of the indication information can be further reduced.

With reference to the first aspect and the second aspect, in some possible implementations of the first aspect and the second aspect, bandwidths of the plurality of candidate frequency domain resource units are less than or equal to a bandwidth part (bandwidth part, BWP) configured by the network device for the terminal device. In other words, the plurality of candidate frequency domain resource units occupy a full or partial bandwidth of the BWP configured by the network device for the terminal device.

It should be understood that the network device may configure one or more BWPs for the terminal device, and a resource in each BWP may be used as a candidate frequency domain resource unit, to obtain the N pairs of candidate transmission resources through combination. In other words, the plurality of candidate frequency domain resource units used to obtain the N pairs of candidate transmission resources through combination belong to a BWP, and a bandwidth occupied by the plurality of candidate frequency domain resource units may be less than or equal to the BWP configured by the network device for the terminal device.

In a possible design, the plurality of candidate frequency domain resource units belong to a unit BWP (unit BWP), and the unit BWP is consecutive resources in the BWP.

To be specific, the BWP configured by the network device for the terminal device may be divided into one or more unit BWPs, each unit BWP may be a part of consecutive frequency domain resources in the BWP, and different unit BWPs may be consecutive or inconsecutive. This is not limited in this application.

Optionally, a quantity of unit BWPs included in the BWP is determined based on a size of the BWP, a start position of the BWP, and a size of the unit BWP.

Optionally, the BWP includes a plurality of unit BWPs.

In the plurality of unit BWPs, each candidate frequency domain resource unit may correspond to a respective number, for example, a two-dimensional index or one-dimensional index introduced below, in a unit BWP to which the candidate frequency domain resource unit belongs. Therefore, candidate frequency domain resource units identified by a same number in different unit BWPs may be different.

In a possible design, the plurality of unit BWPs correspond to a plurality of pieces of indication information, and a resource used to transmit the reference signal is determined based on the plurality of pieces of indication information.

In other words, frequency domain resources used to transmit the reference signal in different unit BWPs may be different, and a frequency domain resource used to transmit the reference signal in each unit BWP may be indicated by using one piece of indication information. In this way, different frequency domain resources may be configured in different unit BWPs, so that resource configuration and indication are more flexible.

In another possible design, the BWP includes a plurality of unit BWPs, the plurality of unit BWPs correspond to a same piece of indication information, and the resource used to transmit the reference signal is determined based on the indication information.

In other words, although frequency domain resources used to transmit the reference signal in different unit BWPs are different, numbers of the frequency domain resources in the different unit BWPs are the same (that is, relative positions of the frequency domain resources in the different unit BWPs are the same). Therefore, a same piece of indication information may be used for indication. In this way, indication overheads can be further reduced.

With reference to the first aspect and the second aspect, in some possible implementations of the first aspect and the second aspect, a quantity of the plurality of candidate antenna ports is less than or equal to a total quantity of antenna ports of the terminal device.

The plurality of candidate antenna ports in this application are all or a part of antenna ports that can be used by the terminal device to send a signal in a current time unit. Therefore, the quantity of the plurality of candidate antenna ports is supposed to be not greater than the total quantity of antenna ports of the terminal device.

In a possible design, the plurality of candidate antenna ports belong to an antenna port subset, and an antenna port included in the antenna port subset is an antenna port of the terminal device.

Similar to the unit BWPs, antenna ports of the terminal device may also be divided into one or more antenna port subsets.

Optionally, the terminal device includes a plurality of antenna port subsets.

In the plurality of antenna port subsets, each candidate antenna port may correspond to a respective number, for example, a two-dimensional index or one-dimensional index introduced below, in a subset to which the candidate antenna port belongs. Therefore, candidate antenna ports identified by a same number in different antenna port subsets may be different.

In a possible design, the plurality of antenna port subsets correspond to a plurality of pieces of indication information, and the resource used to transmit the reference signal is determined based on the plurality of pieces of indication information.

In other words, antenna ports used to transmit the reference signal in different antenna port subsets may be different, and an antenna port used to transmit the reference signal in each antenna port subset may be indicated by using one piece of indication information. In this way, different antenna ports may be configured in different antenna port subsets to transmit the reference signal, so that resource configuration and indication are more flexible.

In another possible design, the plurality of antenna port subsets correspond to a same piece of indication information, and the resource used to transmit the reference signal is determined based on the indication information.

In other words, although antenna ports used to transmit the reference signal in different antenna port subsets are different, numbers of the antenna ports in the different antenna port subsets may be the same. Therefore, a same piece of indication information may be used for indication. In this way, indication overheads can be further reduced.

With reference to the first aspect and the second aspect, in some possible implementations of the first aspect and the second aspect, the plurality of candidate frequency domain resource units are consecutive in frequency domain; or the plurality of candidate frequency domain resource units are inconsecutive in frequency domain, and the plurality of candidate frequency domain resource units are evenly or unevenly distributed in frequency domain.

It can be learned that the candidate frequency domain resource units in this application may be consecutive or inconsecutive in frequency domain, and may be evenly or unevenly distributed in frequency domain, without being limited by a parameter such as a frequency domain density. This helps with flexible resource allocation.

With reference to the first aspect and the second aspect, in some possible implementations of the first aspect and the second aspect, the indication information indicates one or more of the following: a value of M, frequency domain resource units included in the M pairs of transmission resources, or a correspondence between frequency domain resource units and antenna ports in the M pairs of transmission resources.

Alternatively, the indication information may indicate one or more of the following: a value of M, antenna ports included in the M pairs of transmission resources, or a correspondence between frequency domain resource units and antenna ports in the M pairs of transmission resources.

The following provides several possible implementations as examples for the indication information.

With reference to the first aspect and the second aspect, in some possible implementations of the first aspect and the second aspect, the N pairs of candidate transmission resources are represented by using a two-dimensional matrix, and the two-dimensional matrix includes L rows and K columns. The L rows represent L candidate frequency domain resource units, and the K columns represent K candidate antenna ports; or the L rows represent L candidate antenna ports, and the K columns represent K candidate frequency domain resource units. K and L are positive integers, and $K \times L = N$. Determining the M pairs of transmission resources based on the indication information and the N pairs of candidate transmission resources includes: determining the M pairs of transmission resources based on the indication information and the two-dimensional matrix.

For example, when configuring the N pairs of candidate transmission resources for the terminal device, the network device may configure L candidate frequency domain resource units and K candidate antenna ports. The terminal device may traverse the L candidate frequency domain resource units and the K candidate antenna ports based on the configuration, and combine each of the candidate frequency domain resource units and each of the candidate antenna ports, to obtain the N pairs of candidate transmission resources. A combination manner may be predefined or preconfigured. For example, the combination manner of the N pairs of candidate transmission resources is a two-dimensional matrix, that is, the L candidate frequency domain resource units correspond to L rows, and may be identified by using L row indexes; and the K candidate antenna ports correspond to K columns, and may be identified by using K column indexes. In the two-dimensional matrix, one pair of candidate transmission resources may be determined by using one row index and one column index. Therefore, the one row index and the one column index that correspond to the one pair of candidate transmission resources are referred to as a two-dimensional index.

In a first possible design of the implementation, the indication information indicates row indexes and column indexes respectively corresponding to the M pairs of transmission resources in the two-dimensional matrix, the row indexes respectively corresponding to the M pairs of transmission resources in the two-dimensional matrix are determined based on a mapping relationship between the L rows in the two-dimensional matrix and L row indexes, and the column indexes respectively corresponding to the M pairs of transmission resources in the two-dimensional matrix are determined based on a mapping relationship between the K columns in the two-dimensional matrix and K column indexes.

Because the N pairs of candidate transmission resources are represented by using the two-dimensional matrix, the terminal device may determine positions of the M pairs of transmission resources in the two-dimensional matrix based on a row index and a column index that correspond to each of the M pairs of transmission resources and that are indicated by the indication information.

Optionally, the indication information is carried in higher layer signaling, and the indication information indicates the following content: a row index and a column index that correspond to each of the M pairs of transmission resources in the two-dimensional matrix.

Because a message sent by using the higher layer signaling is usually statically or semi-statically configured, when the indication information is carried by using the higher layer signaling, indication overheads can be reduced, and reliability is high.

Optionally, the indication information includes first indication information and second indication information, and the second indication information is carried in physical layer signaling or medium access control (medium access control, MAC) layer signaling; the second indication information indicates the following content: at least one of a quantity L' of row indexes or a quantity K' of column indexes corresponding to the M pairs of transmission resources in the two-dimensional matrix, and L' row indexes and K' column indexes corresponding to the M pairs of transmission resources in the two-dimensional matrix; the first indication information indicates the following content: at least one of indication overheads of a value of L' or indication overheads of a value of K', indication overheads of each row index, and indication overheads of each column index; and L' is a positive integer less than or equal to L, and K' is a positive integer less than or equal to K.

Alternatively, optionally, the indication information includes first indication information and second indication information, and the second indication information is carried in physical layer signaling or MAC layer signaling; the second indication information indicates the following content: L' row indexes and K' column indexes corresponding to the M pairs of transmission resources in the two-dimensional matrix; the first indication information indicates the following content: a value of at least one of L' or K', indication overheads of each row index, and indication overheads of each column index; and L' is a positive integer less than or equal to L, and K' is a positive integer less than or equal to K.

In other words, the indication information may be sent in two stages of indication. The first indication information is a first-stage indication, and the second indication information is a second-stage indication. The first-stage indication may be higher layer signaling, or may be MAC layer signaling or physical layer signaling. The second-stage indication may be MAC layer signaling or physical layer signaling.

Because the second-stage indication may be MAC layer signaling or physical layer signaling, the network device may dynamically adjust the transmission resource of the reference signal based on a requirement.

Content of the first-stage indication may be predefined. For example, fields included in the first-stage indication, a sequence of the fields, and lengths of the fields may all be predefined. Overheads of fields in the second-stage indication may be determined by using the first-stage indication. In this way, small indication overheads may be reserved for the first-stage indication, and an indication field with high overheads is placed in the second-stage indication, so that a blind detection time and processing complexity of the terminal device can be reduced.

It may be understood that, because L' represents the quantity of row indexes corresponding to the M pairs of transmission resources in the two-dimensional matrix, the indication overheads of the value of L' in the first indication information may be replaced with indication overheads of the quantity L' of row indexes corresponding to the M pairs of transmission resources in the two-dimensional matrix; because K' represents the quantity of column indexes corresponding to the M pairs of transmission resources in the two-dimensional matrix, the indication overheads of the value of K' in the first indication information may be replaced with indication overheads of the quantity K' of column indexes corresponding to the M pairs of transmission resources in the two-dimensional matrix; and the value of at least one of L' or K' in the first indication information may be replaced with at least one of the quantity L' of row indexes or the quantity K' of column indexes corresponding to the M pairs of transmission resources in the two-dimensional matrix.

That L' is less than or equal to L and K' is less than or equal to K means that two or more of the M pairs of transmission resources may include a same frequency domain resource unit or a same antenna port.

Optionally, the first indication information further indicates a mapping manner, the mapping manner includes one-to-one mapping or one-to-many mapping, the one-to-one mapping includes that one antenna port corresponds to one frequency domain resource unit, and the one-to-many mapping includes that one antenna port corresponds to a plurality of frequency domain resource units and/or one frequency domain resource unit corresponds to a plurality of antenna ports.

When the mapping manner is the one-to-one mapping, that is, a row index and a column index that correspond to each of the M pairs of transmission resources in the two-dimensional matrix are indicated for each of the M pairs of transmission resources, a quantity of row indexes may be the same as a quantity of column indexes. When the mapping manner is the one-to-many mapping, that is, row indexes and column indexes are respectively indicated for rows and columns corresponding to the M pairs of transmission resources in the two-dimensional matrix, because two or more pairs of transmission resources may include a same antenna port or a same frequency domain resource unit, a quantity of row indexes may be the same as or different from a quantity of column indexes. Further, the mapping manner is the one-to-many mapping, L' is less than M and/or K' is less than M, the second indication information further indicates a mapping rule, the mapping rule indicates a quantity of frequency domain resource units corresponding to each antenna port or a quantity of antenna ports corresponding to each frequency domain resource unit, and the first indication information further indicates indication overheads of the mapping rule.

For example, the one-to-many mapping is mapping between one antenna port and a plurality of frequency domain resource units, and the mapping rule indicates a quantity of frequency domain resource units corresponding to each antenna port. Alternatively, the one-to-many mapping is mapping between one frequency domain resource unit and a plurality of antenna ports, and the mapping rule indicates a quantity of antenna ports corresponding to each frequency domain resource unit. When the indication information indicates the L' row indexes and the K' column indexes, the terminal device may determine the M pairs of transmission resources based on the indication information and a mapping rule between the L' row indexes and the K' column indexes.

In a second possible design of the implementation, the indication information indicates a column index of a target element included in each row of the two-dimensional matrix or a row index of a target element included in each column of the two-dimensional matrix, a transmission resource represented by each target element is included in the M pairs of transmission resources, a row index of each target element is determined based on a mapping relationship between the L rows in the two-dimensional matrix and L row indexes, and a column index of each target element is determined based on a mapping relationship between K column indexes in the two-dimensional matrix and K column indexes.

For example, the terminal device may determine positions of target elements in the two-dimensional matrix based on the column index of the target element included in each row or the row index of the target element included in each column, to obtain the M pairs of transmission resources.

In this design, in the M pairs of transmission resources, an antenna port may correspond to a plurality of frequency domain resource units, or a frequency domain resource unit may correspond to a plurality of antenna ports. In other words, the one-to-many mapping described above may occur. Therefore, when these transmission resources are indicated, a row index or a column index does not need to be repeatedly indicated for each pair of transmission resources, and a mapping rule does not need to be additionally indicated. Therefore, compared with the first design, this can reduce overheads of the indication information.

Optionally, the indication information is carried in higher layer signaling, and the indication information indicates the following content: a quantity of target elements included in each row of the two-dimensional matrix, and the column index of the target element included in each row; or the indication information indicates the following content: a quantity of target elements included in each column of the two-dimensional matrix, and the row index of the target element included in each column.

Because a message sent by using the higher layer signaling is usually statically or semi-statically configured, when the indication information is carried by using the higher layer signaling, indication overheads can be reduced, and reliability is high.

Optionally, the indication information includes first indication information and second indication information, and the second indication information is carried in physical layer signaling or MAC layer signaling. When the indication information indicates the column index of the target element included in each row in the two-dimensional matrix, the second indication information indicates the following content: a quantity of target elements included in each row of the two-dimensional matrix, the column index of the target element included in each row, and the value of M; and the first indication information indicates the following content: indication overheads of the quantity of target elements included in each row, indication overheads of each column index, indication overheads of the value of M, and a value of L. Alternatively, when the indication information indicates the row index of the target element included in each column of the two-dimensional matrix, the second indication information indicates the following content: a quantity of target elements included in each column of the two-dimensional matrix, the row index of the target element included in each column, and the value of M; and the first indication information indicates the following content: indication overheads of the quantity of target elements included in each column, indication overheads of each row index, indication overheads of the value of M, and a value of K.

Alternatively, optionally, the indication information includes first indication information and second indication information, and the second indication information is carried in physical layer signaling or MAC layer signaling. When the indication information indicates the column index of the target element included in each row of the two-dimensional matrix, the second indication information indicates the following content: a quantity of target elements included in each row of the two-dimensional matrix and the column index of the target element included in each row; and the first indication information indicates the following content: indication overheads of the quantity of target elements included in each row, indication overheads of each column index, the value of M, and a value of L. Alternatively, when the indication information indicates the row index of the target element included in each column of the two-dimensional matrix, the second indication information indicates the following content: a quantity of target elements included in each column of the two-dimensional matrix and the row index of the target element included in each column; and the first indication information indicates the following content: indication overheads of the quantity of target elements included in each column, indication overheads of each row index, the value of M, and a value of K.

It should be understood that the value of L may be replaced with the quantity of rows of the two-dimensional matrix, and the value of K may be replaced with the quantity of columns of the two-dimensional matrix.

For detailed descriptions of the two stages of indication, refer to the foregoing descriptions. Details are not described again.

The M pairs of transmission resources are indicated through two stages of indication, so that a blind detection time and processing complexity of the terminal device can be reduced.

In a third possible design of the implementation, the indication information indicates a bitmap, and the bitmap includes a plurality of bits in one-to-one correspondence with a plurality of elements in the two-dimensional matrix, and a value of each bit indicates whether a candidate transmission resource represented by a corresponding element belongs to the M pairs of transmission resources.

For example, if the two-dimensional matrix includes $L \times K = N$ elements, a quantity of bits included in the bitmap may be N, and the bits are in one-to-one correspondence with the N elements. A value of each bit may be "0" or "1". For example, "0" indicates that a candidate transmission resource represented by a corresponding element does not belong to the M pairs of transmission resources, and "1" indicates that a candidate transmission resource represented by a corresponding element belongs to the M pairs of transmission resources. Alternatively, "1" indicates that a candidate transmission resource represented by a corresponding element does not belong to the M pairs of transmission resources, and "0" indicates that a candidate transmission resource represented by a corresponding element belongs to the M pairs of transmission resources. Values of the bits and content indicated by the values may be predefined in a protocol or preconfigured. In the M pairs of transmission resources, an antenna port may correspond to a plurality of frequency domain resource units, or a frequency domain resource unit may correspond to a plurality of antenna ports. In other words, the one-to-many mapping described above may occur. Therefore, when the bitmap indicates whether a candidate transmission resource corresponding to each element belongs to the M pairs of transmission resources, a row index or a column index does not need to be repeatedly indicated for each pair of transmission resources, and a mapping rule does not need to be additionally indicated. Therefore, when there are a large quantity of transmission resources, compared with the first design, this can reduce overheads of the indication information.

Optionally, the indication information is carried in higher layer signaling, and the indication information indicates the following content: the quantity of rows included in the two-dimensional matrix, the quantity of columns included in the two-dimensional matrix, and the bitmap; and the bitmap includes L groups of bits corresponding to the L rows of the two-dimensional matrix, each group of bits includes K bits, the K bits in each group of bits are in one-to-one correspondence with K elements in a corresponding row, and a value of each bit indicates whether a candidate transmission resource represented by a corresponding element is included in the M pairs of transmission resources; or the bitmap includes K groups of bits corresponding to the K columns of the two-dimensional matrix, each group of bits includes L bits, the L bits in each group of bits are in one-to-one correspondence with L elements in a corresponding column, and a value of each bit indicates whether a candidate transmission resource represented by a corresponding element is included in the M pairs of transmission resources.

For example, when a row of the two-dimensional matrix represents a candidate frequency domain resource unit, and a column represents a candidate antenna port, the terminal device may divide the bitmap of L×K bits into K groups of bits with a length of L. In this case, each bit in each group of bits corresponds to one candidate antenna port, and each group of bits corresponds to one candidate frequency domain resource unit. Alternatively, the terminal device may divide the bitmap with a length of N into L groups of bits with a length of K. In this case, each bit in each group of bits corresponds to one candidate frequency domain resource unit, and each group of bits corresponds to one candidate antenna port.

Optionally, the indication information is carried in higher layer signaling, M target elements corresponding to the M pairs of transmission resources in the two-dimensional matrix are distributed in L' rows, and L' is a positive integer less than or equal to L; the indication information indicates the following content: L' row indexes corresponding to the L' rows, a value of K, and the bitmap; and the bitmap includes L' groups of bits corresponding to the L' rows, each group of bits includes K bits, the K bits in each group of bits are in one-to-one correspondence with K elements in a corresponding row, and a value of each bit indicates whether a candidate transmission resource represented by a corresponding element is included in the M pairs of transmission resources. Alternatively, the M target elements corresponding to the M pairs of transmission resources in the two-dimensional matrix are distributed in K' columns, and K' is a positive integer less than or equal to K; the indication information indicates the following content: K' column indexes corresponding to the K' columns, a value of L, and the bitmap; the bitmap includes K' groups of bits corresponding to the K' columns, each group of bits includes L bits, the L bits in each group of bits are in one-to-one correspondence with L elements in a corresponding column, and a value of each bit indicates whether a candidate transmission resource represented by a corresponding element is included in the M pairs of transmission resources. It should be understood that, when content indicated by the indication information includes the L' row indexes corresponding to the L' rows, the value of K, and the bitmap, the bitmap may include L'×K bits. When content indicated by the indication information includes the K' column indexes corresponding to the K' columns, the value of L, and the bitmap, the bitmap may include K'×L bits.

Because a message sent by using the higher layer signaling is usually statically or semi-statically configured, when the indication information is carried by using the higher layer signaling, indication overheads can be reduced, and reliability is high.

Optionally, the indication information includes first indication information and second indication information, and the second indication information is carried in physical layer signaling or MAC layer signaling. The second indication information indicates the bitmap; the bitmap includes L groups of bits corresponding to the L rows in the two-dimensional matrix, each group of bits includes K bits, the K bits in each group of bits are in one-to-one correspondence with K elements in a corresponding row, and a value of each bit indicates whether a candidate transmission resource represented by a corresponding element is included in the M pairs of transmission resources; or the bitmap includes K groups of bits corresponding to the K columns in the two-dimensional matrix, each group of bits includes L bits, the L bits in each group of bits are in one-to-one correspondence with L elements in a corresponding column, and a value of each bit indicates whether a candidate transmission resource represented by a corresponding element is included in the M pairs of transmission resources; and the first indication information indicates the following content: a value of K and a value of L.

Alternatively, optionally, the indication information includes first indication information and second indication information, and the second indication information is carried in physical layer signaling or MAC layer signaling. M target elements corresponding to the M pairs of transmission resources in the two-dimensional matrix are distributed in L' rows in the L rows, and L' is an integer less than or equal to L; the second indication information indicates the following content: L' row indexes corresponding to the L' rows and the bitmap, the bitmap includes L' groups of bits corresponding to the L' rows, each group of bits includes K bits, the K bits in each group of bits are in one-to-one correspondence with K elements in a corresponding row, and a value of each bit indicates whether a candidate transmission resource represented by a corresponding element is included in the M pairs of transmission resources; and the first indication information indicates the following content: a value of K, indication overheads of each row index, and a value of L'. Alternatively, the M target elements corresponding to the M pairs of transmission resources in the two-dimensional matrix are distributed in K' columns in the K columns, and K' is an integer less than or equal to K; the second indication information indicates the following content: K' column indexes corresponding to the K' columns and the bitmap, the bitmap includes K' groups of bits corresponding to the K' columns, each group of bits includes L bits, the L bits in each group of bits are in one-to-one correspondence with L elements in a corresponding column, and a value of each bit indicates whether a candidate transmission resource represented by a corresponding element is included in the M pairs of transmission resources; and the first indication information indicates the following content: a value of L, indication overheads of each column index, and a value of K'.

Alternatively, optionally, the indication information includes first indication information and second indication information, and the second indication information is carried in physical layer signaling or MAC layer signaling. M target elements corresponding to the M pairs of transmission resources in the two-dimensional matrix are distributed in L' rows in the L rows, and L' is an integer less than or equal to L; the second indication information indicates the following content: L' row indexes corresponding to the L' rows, the bitmap, and a value of L', the bitmap includes L' groups of bits corresponding to the L' rows, each group of bits includes K bits, the K bits in each group of bits are in one-to-one correspondence with K elements in a corresponding row, and a value of each bit indicates whether a candidate transmission resource represented by a corresponding element is included in the M pairs of transmission resources; and the first indication information indicates the following content: a value of K, indication overheads of each row index, and indication overheads of the value of L'. Alternatively, the M target elements corresponding to the M pairs of transmission resources in the two-dimensional matrix are distributed in K' columns in the K columns, and K' is an integer less than or equal to K; the second indication information indicates the following content: K' column indexes corresponding to the K' columns, the bitmap, and a value of K', the bitmap includes K' groups of bits corresponding to the K' columns, each group of bits includes L bits, the L bits in each group of bits are in one-to-one correspondence with L elements in a corresponding column, and a value of each bit indicates whether a candidate transmission resource represented by a corresponding element is included in the M pairs of transmission resources; and the first indication information indicates the following content: a value of L, indication overheads of each column index, and indication overheads of the value of K'.

For detailed descriptions of the two stages of indication, refer to the foregoing descriptions. Details are not described again.

The M pairs of transmission resources are indicated through two stages of indication, so that a blind detection time and processing complexity of the terminal device can be reduced.

It should be understood that, the one-to-one correspondence between the N bits in the foregoing example of the bitmap and the N elements of the two-dimensional matrix is merely a possible design, and a quantity of bits corresponding to each element in the bitmap is not limited in this application.

With reference to the first aspect and the second aspect, in some possible implementations of the first aspect and the second aspect, the N pairs of candidate transmission resources are represented by using a one-dimensional array, the one-dimensional array includes N elements, each element represents one pair of candidate transmission resources, the one-dimensional array is obtained by arranging the N pairs of candidate transmission resources according to a combination rule, and the combination rule indicates a dimension in which traversal is preferentially performed by a transmission antenna port in an antenna port dimension and a frequency domain resource unit dimension when the N pairs of candidate transmission resources are obtained by combining the plurality of candidate antenna ports and the plurality of candidate frequency domain resource units. Determining the M pairs of transmission resources based on the indication information and the N pairs of candidate transmission resources includes: determining the M pairs of transmission resources based on the indication information and the one-dimensional array.

Because each of the N pairs of candidate transmission resources is obtained by combining one of a plurality of candidate antenna ports and one of a plurality of candidate frequency domain resource units, the one-dimensional array obtained by arranging the N pairs of candidate transmission resources according to the combination rule is a one-dimensional array obtained by combining the plurality of candidate antenna ports and the plurality of candidate frequency domain resource units according to the combination rule.

For example, when configuring the N pairs of candidate transmission resources for the terminal device, the network device may configure the combination rule, the plurality of candidate frequency domain resource units, and the plurality of candidate antenna ports. The terminal device determines the N pairs of candidate transmission resources based on the configuration.

It may be understood that the foregoing two-dimensional matrix may be converted into a one-dimensional array. When the two-dimensional matrix is converted into a one-dimensional array, the conversion may be performed row by row in a sequence from top to bottom, where elements in each row are sequentially concatenated, to obtain a one-dimensional array, or the conversion may be performed column by column in a sequence from left to right, where elements in each column are sequentially concatenated, to obtain a one-dimensional array. This is not limited in this application.

Because rows and columns in the two-dimensional matrix respectively correspond to candidate frequency domain resource units and candidate antenna ports, the foregoing two manners of converting the two-dimensional matrix into a one-dimensional array are as follows: The plurality of candidate frequency domain resource units are first traversed, each candidate antenna port is combined with each of the plurality of candidate frequency domain resource units in a one-to-one manner, then the candidate antenna ports are traversed, and each of the plurality of candidate antenna ports is combined with each candidate frequency domain resource unit in a one-to-one manner, to obtain $L \times M$ (that is, N) pairs of candidate transmission resources. Alternatively, the plurality of candidate antenna ports are first traversed, each frequency domain resource unit is combined with each of the plurality of candidate antenna ports in a one-to-one manner, then the candidate frequency domain resource units are traversed, and each of the plurality of candidate frequency domain resource units is combined with each candidate antenna port in a one-to-one manner, to obtain $L \times M$ pairs of candidate transmission resources.

A two-dimensional index in the two-dimensional matrix may also be converted into a one-dimensional index in the one-dimensional array, and a correspondence between each element and a candidate transmission resource may be identified by using a one-dimensional index (referred to as an index for short below).

In a first possible design of the implementation, the indication information indicates M indexes corresponding to the M pairs of transmission resources in the one-dimensional array, and the M indexes are determined based on a mapping relationship between the N elements in the one-dimensional array and N indexes.

The terminal device may determine the M pairs of transmission resources from the N pairs of candidate transmission resources based on the correspondence between the N pairs of candidate transmission resources and the N indexes and the M indexes indicated by the indication information.

Optionally, the indication information is carried in higher layer signaling, and the indication information indicates the M indexes.

Because a message sent by using the higher layer signaling is usually statically or semi-statically configured, when the indication information is carried by using the higher layer signaling, indication overheads can be reduced, and reliability is high.

Optionally, the indication information includes first indication information and second indication information, and the second indication information is carried in physical layer signaling or MAC layer signaling; the second indication information indicates the following content: the M indexes and the value of M; and the first indication information indicates the following content: indication overheads of each index and indication overheads of the value of M.

Alternatively, optionally, the indication information includes first indication information and second indication information, and the second indication information is carried in physical layer signaling or MAC layer signaling; the second indication information indicates the following content: the M indexes; and the first indication information indicates the following content: indication overheads of each index and the value of M.

In a second possible design of the implementation, the indication information indicates a bitmap, the bitmap includes N bits, the N bits are in one-to-one correspondence with the N elements in the one-dimensional array, and a value of each bit indicates whether a candidate transmission resource represented by a corresponding element belongs to the M pairs of transmission resources.

For detailed descriptions of the bitmap, refer to related descriptions in the foregoing implementation. Details are not described again.

Optionally, the indication information is carried in higher layer signaling, and the indication information indicates the bitmap.

Because a message sent by using the higher layer signaling is usually statically or semi-statically configured, in this manner in which the indication information is carried by using the higher layer signaling, indication overheads can be reduced, and reliability is high.

Optionally, the indication information includes first indication information and second indication information, and the second indication information is carried in physical layer signaling or MAC layer signaling; the second indication information indicates the bitmap; and the first indication information indicates a quantity of the plurality of candidate antenna ports and a quantity of the plurality of candidate frequency domain resource units.

Alternatively, optionally, the indication information includes first indication information and second indication information, and the second indication information is carried in physical layer signaling or MAC layer signaling; the second indication information indicates the following content: a quantity of the plurality of candidate antenna ports, a quantity of the plurality of candidate frequency domain resource units, and the bitmap; and the first indication information includes indication overheads of the quantity of the plurality of candidate antenna ports and indication overheads of the quantity of the plurality of candidate frequency domain resource units.

For detailed descriptions of the two stages of indication, refer to the foregoing descriptions. Details are not described again.

The M pairs of transmission resources are indicated through two stages of indication, so that a blind detection time and processing complexity of the terminal device can be reduced.

Further, the indication information further indicates one or more of the following: the combination rule and/or a length of the bitmap.

The combination rule and/or the length of the bitmap may be configured by the network device, that is, the combination rule and/or the length of the bitmap is adjustable. The network device may configure, by using signaling, a combination rule and/or a length of a bitmap that are/is used recently for one or more times. The recent one or more times may be one or more times in a preset time period. The preset time period may be, for example, a time period that starts from a current time and whose duration is preset duration, or a time period that starts from a specified time and whose duration is preset duration.

Certainly, the combination rule and/or the length of the bitmap may alternatively be predefined in a protocol, that is, may be fixed. This is not limited in this application.

It may be understood that the length of the bitmap is related to a value of N. Because the N pairs of transmission resources are obtained by combining the plurality of candidate antenna ports and the plurality of candidate frequency domain resource units, the indication of the length of the bitmap by the indication information may be exchanged with the indication of the values of L and K.

With reference to the first aspect and the second aspect, in some possible implementations of the first aspect and the second aspect, the indication of the bitmap by the indication information includes the bitmap or a q-nary value corresponding to values represented by a plurality of bits in the bitmap.

It should be understood that the bitmap may be represented by using a binary value, or may be represented by using a value in a higher number system, for example, an octal, decimal, or hexadecimal value. For example, if the bitmap is represented in decimal notation, a decimal value of a bitmap 00000011 is 3. For ease of differentiation, the binary value or the value in the higher number system is collectively referred to as the q-nary value in this specification. It can be learned that, when the bitmap is represented by using the value in the higher number system, indication overheads can be further reduced.

Optionally, the indication information further indicates a number system of the q-nary value.

The number system of the q-nary value may be indicated by the network device, and the network device may configure, by using signaling, a number system that corresponds to a bitmap and that is indicated recently for one or more times. In this case, the number system is adjustable. Certainly, the number system of the q-nary value may alternatively be predefined in a protocol, that is, may be fixed. This is not limited in this application. The recent one or more times may be one or more times in a preset time period. The preset time period may be, for example, a time period that starts from a current time and whose duration is preset duration, or a time period that starts from a specified time and whose duration is preset duration.

With reference to the first aspect and the second aspect, in some possible implementations of the first aspect and the second aspect, the M pairs of transmission resources are included in at least one of a plurality of resource groups, and the plurality of resource groups are obtained by dividing the N pairs of candidate transmission resources according to a division rule. The indication information is carried in at least one group of fields, the at least one group of fields corresponds to the at least one resource group, and information carried in each group of fields is used to determine a transmission resource included in a corresponding resource group.

It should be understood that the division rule may be predefined in a protocol or configured by the network device. For example, when the N pairs of candidate transmission resources are represented by using a two-dimensional matrix, the two-dimensional matrix may be divided into a plurality of two-dimensional matrices in a smaller dimension according to the division rule, and indexes corresponding to elements included in each two-dimensional matrix in the smaller dimension may be renumbered. When the N pairs of candidate transmission resources are represented by using a one-dimensional array, the one-dimensional array may be divided into one-dimensional arrays of a smaller length according to the division rule, and an index corresponding to each element in each one-dimensional array, obtained through division, of the smaller length may be renumbered.

When the transmission resources exist only in a few small-dimension two-dimensional matrices in the two-dimensional matrix, only the transmission resources in the few small-dimension two-dimensional matrices need to be indicated. In addition, with the small two-dimensional matrices, values of indexes are controlled within a small range, and values of indexes of the indicated transmission resources are small. This helps reduce indication overheads.

With reference to the first aspect and the second aspect, in some possible implementations of the first aspect and the second aspect, the indication information further indicates a group index of the resource group corresponding to each group of fields.

When the M pairs of transmission resources are centralized in some of the plurality of resource groups, a resource group in which the M pairs of transmission resources are not distributed may not be indicated. In this way, indication overheads can be reduced to a greater extent.

According to a third aspect, this application provides a communication apparatus, including a module or a unit configured to implement the method according to any one of the first aspect and the possible implementations of the first aspect, or including a module or a unit configured to implement the method according to any one of the second aspect and the possible implementations of the second aspect.

It should be understood that each module or unit may implement a corresponding function by executing a computer program.

According to a fourth aspect, this application provides a communication apparatus, including a processor. The processor is configured to perform the method according to any one of the first aspect and the possible implementations of the first aspect, or the processor is configured to perform the method according to any one of the second aspect and the possible implementations of the second aspect.

The apparatus may further include a memory, configured to store instructions and data. The memory is coupled to the processor, and when executing the instructions stored in the memory, the processor can implement the methods described in the foregoing aspects. The apparatus may further include a communication interface. The communication interface is used by the apparatus to communicate with another device. For example, the communication interface may be a transceiver, a circuit, a bus, a module, or another type of communication interface.

In a possible design, the communication apparatus is the foregoing terminal device or network device. In another possible design, the communication apparatus is a chip, a chip system, or the like configured in the terminal device or the network device.

According to a fifth aspect, this application provides a processing apparatus, including a processor and a memory. The processor is configured to: read instructions stored in the memory, receive a signal via a receiver, and transmit a signal via a transmitter, to perform the method according to any one of the first aspect, the possible implementations of the first aspect, the second aspect, or the possible implementations of the second aspect.

Optionally, there are one or more processors, and there are one or more memories.

Optionally, the memory may be integrated together with the processor, or the memory and the processor are separately disposed.

In a specific implementation process, the memory may be a non-transitory (non-transitory) memory, such as a read-only memory (read-only memory, ROM). The memory and the processor may be integrated onto one chip, or may be separately disposed on different chips. A type of the memory and a manner in which the memory and the processor are disposed are not limited in this embodiment of this application.

It should be understood that, a related data exchange process such as sending of indication information may be a process of outputting the indication information from the processor, and receiving of indication information may be a process of receiving the input indication information by the processor. Specifically, data output by the processor may be output to the transmitter, and input data received by the processor may be from the receiver. The transmitter and the receiver may be collectively referred to as a transceiver.

Optionally, the processing apparatus in the fifth aspect is a chip or a chip system. The processor may be implemented by using hardware or software. When the processor is implemented by using hardware, the processor may be a logic circuit, an integrated circuit, or the like. When the processor is implemented by using software, the processor may be a general-purpose processor implemented by reading software code stored in a memory, where the memory may be integrated into the processor, or may be located outside the processor and exist independently.

According to a sixth aspect, this application provides a computer-readable storage medium, including a computer program. When the computer program is run on a computer, the computer is enabled to implement the method according to any one of the first aspect and the possible implementations of the first aspect.

According to a seventh aspect, this application provides a computer program product. The computer program product includes a computer program (which may also be referred to as code or instructions). When the computer program is run, a computer is enabled to perform the method according to any one of the first aspect and the possible implementations of the first aspect.

According to an eighth aspect, this application provides a communication system, including the foregoing terminal device and network device.

It should be understood that the technical solutions in the third aspect to the eighth aspect of this application correspond to the technical solutions in the first aspect of this application, and beneficial effects achieved by the aspects and corresponding feasible implementations are similar. Details are not described again.

## BRIEF DESCRIPTION OF DRAWINGS

FIG. 1 is a diagram of an architecture of a communication system suitable for a method according to an embodiment of this application;
FIG. 2 is a diagram of distribution of SRSs in frequency domain;
FIG. 3 is a schematic flowchart of a communication method according to an embodiment of this application;

FIG. 4 is a diagram of a plurality of distribution manners of a plurality of candidate frequency domain resource units in frequency domain according to an embodiment of this application;

FIG. 5 is a diagram of a transmission resource of a reference signal according to an embodiment of this application;

FIG. 6 is a diagram of a two-dimensional matrix according to an embodiment of this application;

FIG. 7 and FIG. 8 are diagrams of indication information according to an embodiment of this application;

FIG. 9 is a diagram of determining M pairs of transmission resources by a terminal device according to an embodiment of this application;

FIG. 10 to FIG. 14 are diagrams of indication information according to an embodiment of this application;

FIG. 15 is a diagram of determining M pairs of transmission resources by a terminal device according to an embodiment of this application;

FIG. 16 to FIG. 18 are diagrams of indication information according to an embodiment of this application;

FIG. 19 is a diagram of determining M pairs of transmission resources by a terminal device according to an embodiment of this application;

FIG. 20 is a diagram of a one-dimensional array according to an embodiment of this application;

FIG. 21 and FIG. 22 are diagrams of indication information according to an embodiment of this application;

FIG. 23 is a diagram of determining M pairs of transmission resources by a terminal device according to an embodiment of this application;

FIG. 24 and FIG. 25 are diagrams of indication information according to an embodiment of this application;

FIG. 26 is a diagram of determining M pairs of transmission resources by a terminal device according to an embodiment of this application;

FIG. 27 is a diagram of a division manner according to an embodiment of this application;

FIG. 28 is a diagram of another division manner according to an embodiment of this application;

FIG. 29 is a diagram of a BWP including a plurality of unit BWPs according to an embodiment of this application;

FIG. 30 and FIG. 31 are diagrams of correspondences between a plurality of unit BWPs and indication information according to an embodiment of this application;

FIG. 32 is a diagram of a correspondence between a matrix P and a transmission resource of a reference signal according to an embodiment of this application;

FIG. 33 and FIG. 34 are block diagrams of a communication apparatus according to an embodiment of this application;

FIG. 35 is a diagram of a structure of a terminal device according to an embodiment of this application; and

FIG. 36 is a diagram of a structure of a network device according to an embodiment of this application.

## DESCRIPTION OF EMBODIMENTS

The following describes technical solutions of this application with reference to accompanying drawings.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a sidelink (sidelink, SL) communication system, a worldwide interoperability for microwave access (worldwide interoperability for microwave access, WiMAX) communication system, a 5th generation (5th generation, 5G) mobile communication system or a new radio access technology (new radio access technology, NR), and a satellite communication system. The 5G mobile communication system may include non-standalone (non-standalone, NSA) networking and/or standalone (standalone, SA) networking.

The technical solutions provided in this application may be further applied to a future communication system, for example, a 6th generation (6th generation, 6G) mobile communication system. This is not limited in this application.

A radio access network (radio access network, RAN) device in this application is a device having a wireless transceiver function. The radio access network device may provide a wireless communication function service, and may connect a terminal to a radio network. The radio access network device may be a node in a radio access network, referred to as a RAN node for short.

In a possible scenario, the RAN node may be a base station (base station, BS), an evolved NodeB (evolved NodeB, eNodeB), a transmission reception point (transmission reception point, TRP), a home NodeB (home evolved NodeB or home NodeB, HNB), an access point (access point, AP) of wireless fidelity (wireless fidelity, Wi-Fi), a mobile switching center, a next generation NodeB (next generation NodeB, gNB) in a 5G mobile communication system, a next generation NodeB in a 6G mobile communication system, a base station in a future mobile communication system, or the like. Alternatively, the RAN node may be a device that functions as a base station in a device-to-device (device-to-device, D2D) communication system, a vehicle-to-everything (vehicle-to-everything, V2X) communication system, a machine-to-machine (machine-to-machine, M2M) communication system, or an internet of things (internet of things, IoT) communication system. Alternatively, the RAN node may be a RAN node in a non-terrestrial network (non-terrestrial network, NTN). In other words, the RAN node may be deployed on a high-altitude platform or a satellite. The RAN node may be a macro base station, or may be a micro base station or an indoor base station, or may be a relay node, a donor node, or the like, or may be a radio controller in a cloud radio access network (cloud radio access network, CRAN) scenario, a node in an open radio access network (open radio access network, O-RAN or ORAN) scenario, or the like. Optionally, the RAN node may alternatively be a server, a wearable device, a vehicle, a vehicle-mounted device, or the like. For example, a RAN node in a V2X technology may be a road side unit (road side unit, RSU). Certainly, the RAN node may alternatively be a node in a core network.

In another possible scenario, a plurality of RAN nodes coordinate to assist the terminal in implementing radio access, and different RAN nodes respectively implement parts of functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art may understand their meanings. For example, in an ORAN system, the CU may also be referred to as an open CU (O-CU), the DU may also be referred to as an open DU (O-DU), the CU-CP may also be referred to as an open CU-CP (O-CU-CP), the CU-UP may also be referred to as an open CU-UP (O-CU-UP), and the RU may also be referred to as an open RU (O-RU).

Any unit in the CU (or the CU-CP or the CU-UP), the DU, and the RU may be implemented by using a software module, a hardware module, or a combination of a software module and a hardware module.

A terminal device in this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of the terminal device may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), an uncrewed aerial vehicle, a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), and the like.

The wearable device may also be referred to as a wearable intelligent device, and is a general term of wearable devices that are intelligently designed and developed for daily wear by using a wearable technology, for example, glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, the wearable intelligent device includes full-featured and large-sized devices that can implement all or a part of functions without depending on smartphones, for example, smart watches or smart glasses, and includes devices that focus on one specific type of application function and need to collaboratively work with other devices such as smartphones, for example, various smart bands or smart jewelry for monitoring physical signs.

In addition, the terminal device may alternatively be a terminal device in an IoT system. The IoT is an important part of future information technology development. A main technical feature of the IoT is to connect things to a network by using a communication technology, to implement a smart network for human-machine interconnection and thing-thing interconnection. In an IoT technology, massive connections, deep coverage, and terminal power saving may be implemented by using, for example, a narrowband (narrowband, NB) technology.

In addition, the terminal device may further include a sensor such as an intelligent printer, a train detector, or a gas station, which mainly functions to collect data (a part of terminal devices), receive control information and downlink data from a network device, send an electromagnetic wave, and transmit uplink data to the network device.

It should be understood that specific forms of the network device and the terminal device are not limited in this application.

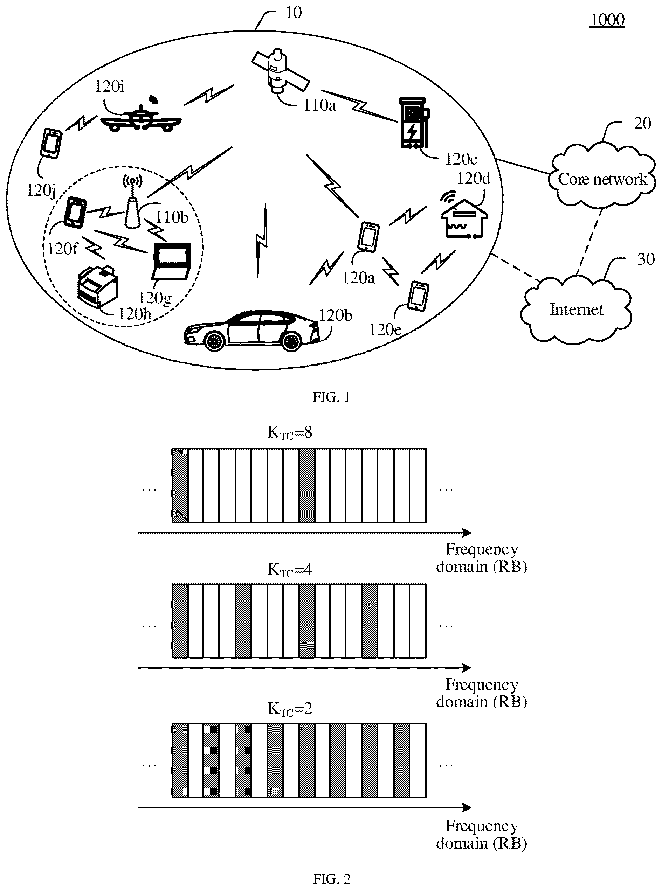

FIG. 1 is a diagram of an architecture of a communication system 1000 suitable for a method according to an embodiment of this application. As shown in FIG. 1, the communication system 1000 includes a radio access network 10 and a core network 20. Optionally, the communication system 1000 may further include the internet 30. The radio access network 10 may include at least one radio access network device (for example, 110a and 110b in FIG. 1), and may further include at least one terminal (for example, 120a to 120j in FIG. 1).

The terminal may be connected to the radio access network device in a wireless manner, and the radio access network device may be connected to the core network in a wireless or wired manner. A core network device and a radio access network device may be different independent physical devices, or functions of the core network device and logical functions of the radio access network device may be integrated into a same physical device, or a part of functions of the core network device and a part of functions of the radio access network device may be integrated into one physical device. A wired or wireless manner may be used for connection between terminals and between radio access network devices.

Communication between a radio access network device and a terminal, between radio access network devices, and between terminals may be performed by using a licensed spectrum, an unlicensed spectrum, or both, and may be performed by using a spectrum below 6 gigahertz (gigahertz, GHz), a spectrum above 6 GHz, or both. A spectrum resource used for wireless communication is not limited in this embodiment of this application.

The radio access network device may be a base station deployed in the air, for example, may be a satellite base station 110a; or may be a base station deployed indoors, for example, may be a micro base station or indoor base station 110b.

The terminal may be a terminal deployed in the air, for example, a helicopter or uncrewed aerial vehicle 120i in FIG. 1; or may be a terminal deployed on the ground, for example, mobile phones 120a, 120e, 120f, and 120j, a vehicle 120b, a computer 110b, and a printer 120h in FIG. 1.

The radio access network device and the terminal may be at fixed positions, or may move. For example, the radio access network device and the terminal may be deployed on land, including an indoor device, an outdoor device, a handheld device, or a vehicle-mounted device; or may be deployed on water; or may be deployed on an airplane, a balloon, or an artificial satellite in the air.

Roles of the radio access network device and the terminal may be relative. For example, the helicopter or uncrewed aerial vehicle 120i in FIG. 1 may be configured as a mobile base station. For 120j that accesses the radio access network 10 via 120i, 120i is a base station, while for 110a, 120i is a terminal, that is, 110a and 120i communicate with each other by using a radio air interface protocol. Certainly, 110a and 120i may alternatively communicate with each other by using an interface protocol between radio access network devices. In this case, for 110a, 120i is also a base station. Therefore, both the radio access network device and the terminal may be collectively referred to as a communication device. 110a, 110b, and 120a to 120j in FIG. 1 may be referred to as communication devices having respective corresponding functions, for example, a communication device having a base station function or a communication device having a terminal function.

It should be understood that FIG. 1 is merely an example diagram. The communication system may further include other devices, for example, may further include a wireless relay device and a wireless backhaul device, which are not shown in FIG. 1.

In a multiple-input multiple-output (multiple-input multiple-output, MIMO) system, a transmit end and a receive end may use a plurality of transmit antennas and a plurality of receive antennas to transmit and receive signals respectively. To obtain better communication quality, the transmit end and the receive end may measure channel quality to obtain channel state information (channel state information, CSI).

An SRS is an important reference signal used to measure a channel. Currently, a transmission resource of the SRS is usually in a comb shape in frequency domain. To be specific, for an antenna port, the SRS is sent every $K_{TC}$ subcarriers in frequency domain, where $K_{TC}$ is a comb density, and may be configured to 2, 4, or 8. FIG. 2 shows distribution of SRSs with $K_{TC}=2$, $K_{TC}=4$, and $K_{TC}=8$ respectively in frequency domain. For an antenna port, after a comb density is determined, a comb offset (combOffset) further needs to be configured. When $K_{TC}$ is 2, combOffset may be further configured to {0, 1}. When $K_{TC}$ is 4, combOffset may be further configured to {0, 1, 2, 3}. When $K_{TC}$ is 8, combOffset may be further configured to {0, 1, 2, 3, 4, 5, 6, 7}. Different comb densities and offsets may be configured for different terminals, to implement frequency division multiplexing on different subcarriers.

As a quantity of antenna ports of a terminal device increases, the SRS may cause high air interface resource overheads. For example, assuming that a quantity of terminal devices is 30, and a quantity of antenna ports of each terminal device is 30, a total quantity of antenna ports reaches 900. If the parameter $K_{TC}=4$ is used, and a maximum quantity of antenna ports multiplexed on each time-frequency resource is 12, all time-frequency resources included in a full frequency domain bandwidth and 19 time-frequency symbols (symbol) are needed, and resource overheads are huge.

For the problem of high air interface overheads, a concept of a sparse SRS is proposed. The sparse SRS may be unevenly arranged in frequency domain, and resources occupied by SRSs of different antenna ports may be arranged differently in frequency domain. Therefore, resources of SRSs corresponding to antenna ports are more flexibly distributed. The foregoing resource indication manner of configuring a comb density and offset is not suitable. Therefore, how to indicate a resource of the sparse SRS becomes an urgent technical problem to be resolved.

In view of this, this application provides a method. In the method, N pairs of candidate transmission resources are predefined, each pair of candidate transmission resources includes a candidate antenna port and a candidate frequency domain resource unit corresponding to the candidate antenna port, and each candidate antenna port may correspond to one or more candidate frequency domain resources. A correspondence between antenna ports and frequency domain resource units may be flexibly designed, where one antenna port can correspond to any quantity of frequency domain resource units, instead of being limited to corresponding to two, four, or eight subcarriers. In addition, the N pairs of candidate transmission resources may be flexibly adjusted as a quantity of antenna ports increases, thereby avoiding huge resource overheads. In addition, a transmission resource used to transmit an SRS may be determined from the N pairs of candidate transmission resources. A network device indicates a position of the transmission resource in the N pairs of candidate transmission resources, so that a terminal device can determine the transmission resource accordingly. Therefore, strong support is provided for application of the sparse SRS. In addition, because the transmission resource is indicated in the N pairs of candidate transmission resources, it is equivalent to defining a small resource pool in a large resource range, so that indication overheads can be reduced by indicating the transmission resource in the resource pool.

For ease of understanding the method provided in this application, the following several points are first described.

First, for ease of description, the method provided in this application is described below by using interaction between a network device and a terminal device as an example. However, this should not constitute any limitation on the scope to which this application is applicable. A relay device may further assist in communication between the network device and the terminal device. Based on different networking forms, the relay device may implement single-hop forwarding (corresponding to a single-hop relay system), or may implement multi-hop forwarding (corresponding to a multi-hop relay system). This is not limited in this application.

Second, for ease of clearly describing technical solutions in embodiments of this application, words such as "first" and "second" are used in embodiments of this application to distinguish between same items or similar items that provide basically same functions or effects. For example, first indication information and second indication information are merely used to distinguish between different indication information. A person skilled in the art may understand that "first," "second," and the like do not limit a quantity or an execution sequence.

Third, "sending" and "receiving" in embodiments of this application indicate signal transfer directions. For example, "sending configuration information to a terminal device" may be understood as that a destination end of the configuration information is the terminal device, and may include direct sending through an air interface, or indirect sending via another unit or module through an air interface. "Receiving configuration information from a network device" may be understood as that a source end of the configuration information is the network device, and may include direct receiving from the network device through an air interface, or indirect receiving from the network device via another unit or module through the air interface. "Sending" may alternatively be understood as "outputting" of a chip interface, and "receiving" may alternatively be understood as "inputting" of a chip interface.

In other words, sending and receiving may be performed between devices, for example, between the network device and the terminal device, or may be performed in a device, for example, sending or receiving is performed between components, modules, chips, software modules, or hardware modules in a device through a bus, a cable, or an interface.

It may be understood that necessary processing, for example, encoding and modulation, may be performed on information between a source end and a destination end between which the information is sent, but the destination end can understand valid information from the source end. Similar descriptions in this application may be understood similarly. Details are not described again.

Fourth, in embodiments of this application, "indication" may include direct indication and indirect indication, or may include explicit indication and implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like; indirectly indicating the to-be-indicated information by indicating other information, where there is an association relationship between the other information and the to-be-indicated information; or indicating only a part of the to-be-indicated information, where another part of the to-be-indicated information is known or pre-agreed on. For example, specific information may be indicated by using a pre-agreed on (for example, predefined in a protocol) arrangement sequence of pieces of information, to reduce indication overheads to some extent. A specific indication manner is not limited in this application. It may be understood that, for a sender of the indication information, the indication information may indicate the to-be-indicated information, and for a receiver of the indication information, the indication information may be used to determine the to-be-indicated information.

Fifth, the indication information is described below in detail in a plurality of examples with reference to two stages of indication. In the two stages of indication, fields and positions of fields in first-stage indication information may change. Fields specifically included in the first-stage indication information, a sequence of the fields, and lengths of the fields may all be predefined, or may be preconfigured by using other higher layer signaling. Lengths of fields in second-stage indication information may need to be determined based on information in the first-stage indication information, and a length of a subsequent field may need to be determined based on a previous field in the second-stage indication information. Therefore, a sequence of the fields in the second-stage indication information may not be adjusted.

Sixth, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be single or plural.

Seventh, tables in embodiments of this application are merely examples. Values of information in the tables are merely examples, and other values may be configured. This is not limited in this application. The tables do not constitute a limitation on the protection scope of this application. For example, appropriate transformation or adjustment, such as splitting or combination, may be performed based on the foregoing tables. For another example, names of parameters shown in titles of the tables may alternatively be other names that can be understood by communication apparatuses, and values or representation manners of the parameters may alternatively be other values or representation manners that can be understood by the communication apparatuses. For still another example, during implementation of the foregoing tables, another data structure, such as an array, a queue, a container, a stack, a linear table, a pointer, a linked list, a tree, a graph, a structure, a class, a pile, or a hash table, may alternatively be used.

The following describes, in detail with reference to accompanying drawings, the method provided in this application.

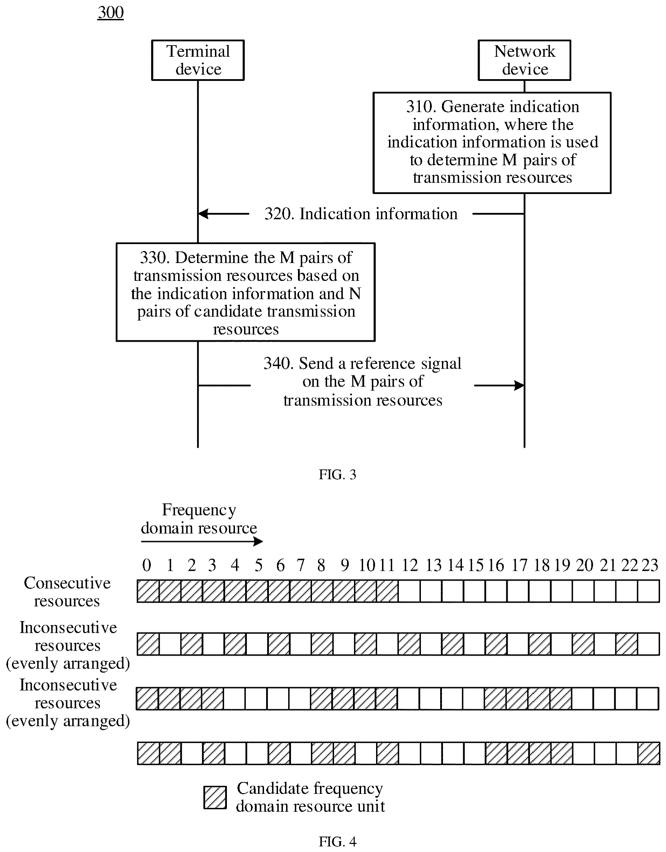

FIG. 3 shows the method from a perspective of device interaction. It may be understood that a terminal device in the method may be replaced with a component in the terminal device, for example, a chip, a chip system, or another module that can be configured to implement a part of or all functions of the terminal device; and a network device in the method may be replaced with a component in the network device, for example, a chip, a chip system, or another module that can be configured to implement a part of or all functions of the network device. This is not limited in this application.

The method 300 shown in FIG. 3 includes step 310 to step 340. The following describes in detail the steps in the method 300.

In step 310, a network device generates indication information, where the indication information is used to determine M pairs of transmission resources.

The M pairs of transmission resources are from N pairs of candidate transmission resources, each of the N pairs of candidate transmission resources is obtained by combining one of a plurality of candidate antenna ports and one of a plurality of candidate frequency domain resource units, candidate antenna ports and/or candidate frequency domain resource units included in any two pairs of candidate transmission resources are different, N is greater than or equal to M, and N and M are positive integers.

In this embodiment of this application, the indication information may indicate one or more of the following: a value of M, frequency domain resource units included in the M pairs of transmission resources, or a correspondence between frequency domain resource units and antenna ports in the M pairs of transmission resources. Alternatively, the indication information indicates one or more of the following: a value of M, antenna ports included in the M pairs of transmission resources, or a correspondence between frequency domain resource units and antenna ports in the M pairs of transmission resources. By indicating one or more of the foregoing, the network device may indicate the M pairs of transmission resources in the N pairs of candidate transmission resources.

In the antenna ports included in the M pairs of transmission resources, each antenna port corresponds to one or more frequency domain resource units. In other words, in the frequency domain resource units included in the M pairs of transmission resources, each frequency domain resource unit corresponds to one or more antenna ports.

Optionally, the plurality of candidate frequency domain resource units are consecutive in frequency domain; or the plurality of candidate frequency domain resource units are inconsecutive in frequency domain, and the plurality of candidate frequency domain resource units are evenly or unevenly distributed in frequency domain. FIG. 4 shows a plurality of distribution manners of a plurality of candidate frequency domain resource units in frequency domain. It should be understood that a distribution manner of the plurality of candidate frequency domain resource units in frequency domain may be predefined in a protocol, or may be configured by the network device.

A candidate frequency domain resource unit may be an SC, a PRB, an RBG, a subband, or a frequency domain resource obtained through division by using another frequency domain granularity. This is not limited in this application.

Optionally, port numbers of the plurality of candidate antenna ports are consecutive or inconsecutive.

The plurality of candidate antenna ports are all or a part of antenna ports that can be used to send a signal in a current time unit (time unit). Therefore, a quantity of the plurality of candidate antenna ports is less than or equal to a total quantity of antenna ports of a terminal device.

A time unit may be, for example, one or more orthogonal frequency division multiplexing (orthogonal frequency division multiplexing, OFDM) symbols, one or more slots (slot), one or more transmission time intervals (transmission time interval, TTI), or a time domain resource obtained through division by using another time domain granularity. This is not limited in this application.

In step 320, the network device sends the indication information to the terminal device. Correspondingly, the terminal device receives the indication information from the network device.

In step 330, the terminal device determines the M pairs of transmission resources based on the indication information and the N pairs of candidate transmission resources.

As described above, the indication information may indicate the M pairs of transmission resources in the N pairs of candidate transmission resources. If the terminal device can predetermine the N pairs of candidate transmission resources, the terminal device may determine the M pairs of transmission resources from the N pairs of candidate transmission resources based on the received indication information.

The N pairs of candidate transmission resources in this embodiment of this application may be predefined in a protocol or configured by the network device. This is not limited in this application.

Optionally, before step 330, the method further includes: The network device sends configuration information to the terminal device, where the configuration information indicates a plurality of candidate frequency domain resource units and a plurality of candidate antenna ports. Correspondingly, the terminal device receives the configuration information from the network device.

It may be understood that the plurality of candidate frequency domain resource units and the plurality of candidate antenna ports are candidate frequency domain resource units and candidate antenna ports used to obtain the N pairs of candidate transmission resources through combination. Based on the configuration information, the terminal device may determine the N pairs of candidate transmission resources based on the plurality of candidate frequency domain resource units, the plurality of candidate antenna ports, and a combination manner of the candidate frequency domain resource units and the candidate antenna ports. The combination manner may be predefined or preconfigured. For example, the combination manner of the N pairs of candidate transmission resources is a two-dimensional matrix or a one-dimensional array.

In this way, the N pairs of candidate transmission resources can be configured.

After determining the N pairs of candidate transmission resources, the terminal device may determine the M pairs of transmission resources based on the indication information and the N pairs of candidate transmission resources. Specific designs of the indication information are described in detail below with reference to accompanying drawings, and details are not described herein.

In step 340, the terminal device sends a reference signal on the M pairs of transmission resources. Correspondingly, the network device receives the reference signal on the M pairs of transmission resources.

The reference signal in this application may be an SRS or another type of reference signal, for example, a demodulation reference signal (demodulation reference signal, DMRS).

It should be understood that the solution provided in this application is not limited to uplink reference signal transmission, but may also be used for downlink reference signal transmission. If the solution is applied to downlink reference signal transmission, the foregoing step 340 may be replaced with that the network device sends a reference signal on the M pairs of transmission resources. Correspondingly, the terminal device receives the reference signal on the M pairs of transmission resources.

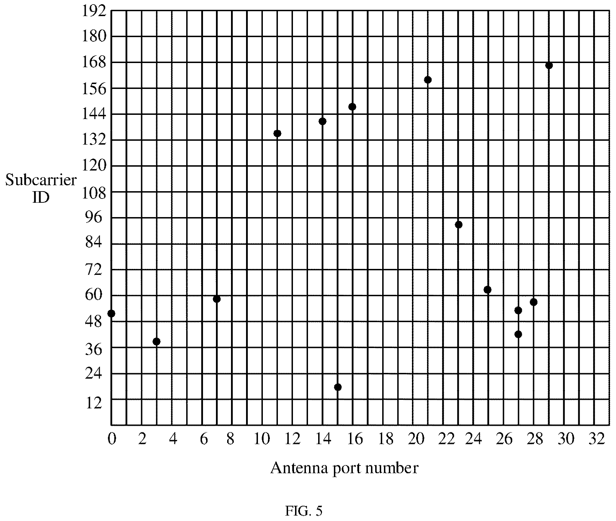

It should be further understood that the reference signal is unevenly and/or sparsely distributed in frequency domain. FIG. 5 shows a distribution manner of a reference signal. As shown in FIG. 5, a horizontal coordinate represents an antenna port number, a vertical coordinate represents a subcarrier identifier (identifier, ID), and a black dot represents a reference signal.

In this embodiment of this application, a correspondence between candidate antenna ports and candidate frequency domain resource units in the candidate transmission resources may be flexibly designed, to support one antenna port in corresponding to any quantity of frequency domain resource units, and the N pairs of candidate transmission resources may be flexibly adjusted as a quantity of antenna ports increases, thereby avoiding causing huge resource overheads. In addition, a transmission resource used to transmit the reference signal may be determined from the N pairs of candidate transmission resources. The terminal device may determine the transmission resource based on a position, indicated by the network device, of the transmission resource in the N pairs of candidate transmission resources. Therefore, strong support is provided for application of a sparse SRS (or another sparsely distributed reference signal). In addition, because the transmission resource is indicated in the N pairs of candidate transmission resources, it is equivalent to defining a small resource pool in a large resource range, so that indication overheads can be reduced by indicating the transmission resource in the resource pool.

The N pairs of candidate transmission resources in this application may be represented by using a two-dimensional matrix (or a two-dimensional array) or a one-dimensional array (a one-dimensional matrix). The following separately describes the two representation manners of the N pairs of candidate transmission resources and manners in which the indication information indicates the M pairs of transmission resources in the two representation manners.

**Manner 1: The N pairs of candidate transmission resources are represented by using a two-dimensional matrix.**

The two-dimensional matrix includes L rows and K columns. The L rows represent L candidate frequency domain resource units, and the K columns represent K candidate antenna ports; or the L rows represent L candidate antenna ports, and the K columns represent K candidate frequency domain resource units. K and L are positive integers, and K×L=N.

In the two-dimensional matrix, each element may correspond to one row index and one column index. In other words, one row index and one column index may be used to identify one element, that is, one pair of candidate transmission resources. A combination of the one row index and the one column index may be referred to as a two-dimensional index.

When the N pairs of candidate resources are represented by using the two-dimensional matrix, determining the M pairs of transmission resources based on the indication information and the N pairs of candidate transmission resources in step 330 includes: determining the M pairs of transmission resources based on the indication information and the two-dimensional matrix.

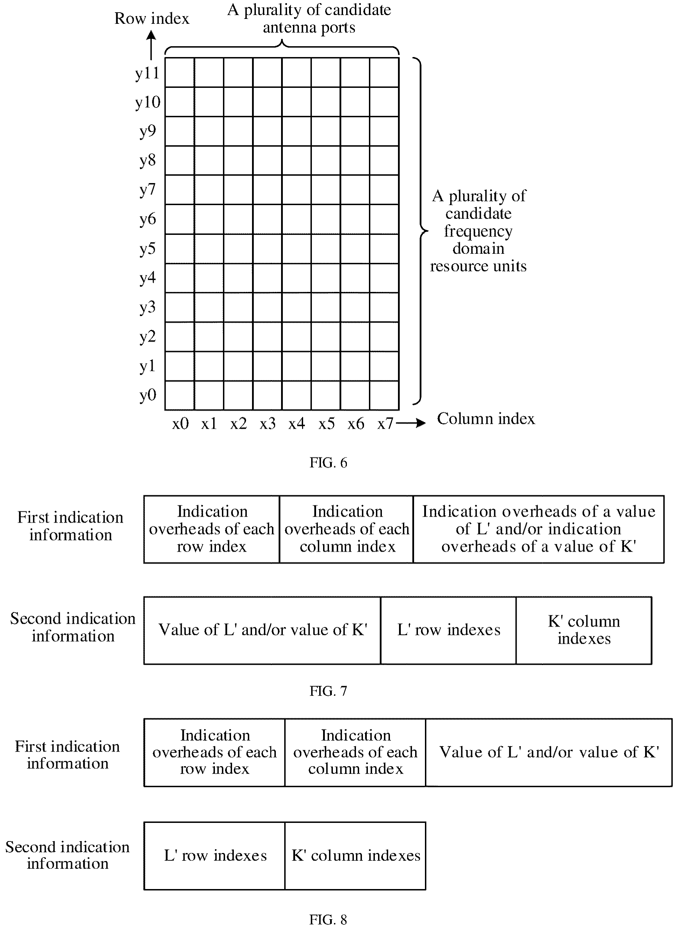

The N pairs of candidate transmission resources represented by using the two-dimensional matrix are described below with reference to FIG. 6 by using an example in which a row represents a candidate antenna port and a column represents a candidate frequency domain resource unit.

As shown in FIG. 6, a horizontal coordinate is a row index, there are a total of eight candidate antenna ports, a vertical coordinate is a column index, and there are a total of 12 candidate transmission resources. Each small box in the figure represents one pair of candidate transmission resources, and there are a total of 96 pairs of candidate transmission resources. In other words, each pair of candidate transmission resources is obtained by combining one candidate antenna port and one candidate frequency domain resource unit.

The following shows three possible designs of the indication information in Manner 1.

Design 1: The indication information indicates row indexes and column indexes respectively corresponding to the M pairs of transmission resources in the two-dimensional matrix.

The row indexes respectively corresponding to the M pairs of transmission resources in the two-dimensional matrix are determined based on a mapping relationship between the L rows in the two-dimensional matrix and L row indexes, and the column indexes respectively corresponding to the M pairs of transmission resources in the two-dimensional matrix are determined based on a mapping relationship between the K columns in the two-dimensional matrix and K column indexes. With reference to FIG. 6, row indexes corresponding to 12 rows are respectively y0, y1, y2, ..., and y11, and column indexes corresponding to eight columns are respectively x0, x1, ..., and x7.

Optionally, the indication information is carried in higher layer signaling, and the indication information indicates the following content: a row index and a column index that correspond to each of the M pairs of transmission resources in the two-dimensional matrix.

The higher layer signaling may be, for example, radio resource control (radio resource control, RRC) signaling.

Because a message sent by using the higher layer signaling is usually statically or semi-statically configured, in this manner in which the indication information is carried by using the higher layer signaling, indication overheads can be reduced, and reliability is high.

For example, the terminal device may determine a unique pair of transmission resources in the two-dimensional matrix based on a row index and a column index that are indicated in the indication information, and the transmission resources belong to the M pairs of transmission resources. With reference to the two-dimensional matrix shown in FIG. 6, if the row index and the column index that are indicated by the indication information are respectively x0 and x3, and y0 and y4, the terminal device determines a small box corresponding to x0 and y0 and a small box corresponding to x3 and y4 as one of the M pairs of transmission resources.

In another implementation, the indication information may alternatively be sent through multi-stage indication, for example, sent through two stages of indication. In this case, the indication information may include first indication information and second indication information.

The first indication information may be carried in higher layer signaling, physical layer signaling, or MAC layer signaling, and the second indication information may be carried in physical layer signaling or MAC layer signaling. The physical layer signaling may be, for example, downlink control information (downlink control information, DCI), and the MAC layer signaling may be, for example, a MAC control element (control element, CE).

When both the first indication information and the second indication information are carried in physical layer signaling or MAC layer signaling, the physical layer signaling or the MAC layer signaling in which the first indication information is located may be referred to as first-stage physical layer signaling or first-stage MAC layer signaling, the physical layer signaling or the MAC layer signaling in which the second indication information is located may be referred to as second-stage physical layer signaling or second-stage MAC layer signaling. The physical layer or MAC layer signaling is used for indication, so that the transmission resources can be dynamically indicated. This is more flexible than the previous implementation.

Optionally, the second indication information indicates the following content: at least one of a quantity L' of row indexes or a quantity K' of column indexes corresponding to the M pairs of transmission resources in the two-dimensional matrix, and L' row indexes and K' column indexes corresponding to the M pairs of transmission resources in the two-dimensional matrix; and the first indication information indicates the following content: at least one of indication overheads of a value of L' or indication overheads of a value of K', indication overheads of each row index, and indication overheads of each column index. L' is a positive integer less than or equal to L, and K' is a positive integer less than or equal to K.

It should be noted that, when each of the M pairs of transmission resources is indicated by using one row index and one column index, the quantity L' of row indexes and the quantity K' of column indexes are equal, and both are equal to M. Therefore, one of the value of L' and the value of K' may be indicated, and the indication of the value of L' or the value of K' is the indication of the value of M.

The indication overheads may be understood as overheads required for indicating specific information, or a length of a field indicating specific information, and may be represented by using a quantity of bits. For example, the indication overheads of the value of L' is a quantity of bits of a field indicating the value of L'.

FIG. 7 shows an example of indication information according to an embodiment of this application. As shown in FIG. 7, fields included in the first indication information are sequentially as follows: the indication overheads of each row index, the indication overheads of each column index, and the indication overheads of the value of L' and/or the indication overheads of the value of K'; and fields included in the second indication information are sequentially as follows: the value of L' and/or the value of K', the L' row indexes, and the K' column indexes. The fields included in the first indication information, a sequence of the fields, and lengths of the fields may be predefined in a protocol.

It should be understood that the sequence of the fields included in the first indication information is not limited in this application. In other words, the fields and positions of the fields in the first indication information shown in FIG. 7 may change. In the fields included in the second indication information, a part of fields may be determined based on the first indication information, and a part of fields may be determined based on the first indication information and another field in the second indication information, and whether a sequence of these fields may change depends on whether lengths of these fields are determined depending on a previous field.

For example, in the second indication information in FIG. 7, the terminal device may first determine a length of the field of the value of L' based on the field of the indication overheads of the value of L', and then determine the value of L' by parsing the field of the value of L'. The terminal device may determine the indication overheads of each row index based on the field of the indication overheads of each row index, and then determine the L' row indexes with reference to the value of L'. In the second indication information, lengths of the field of the L' row indexes and the field of the K' column indexes need to be determined with reference to the field of the indication overheads of the value of L' and/or the field of the indication overheads of the value of K' in the first indication information, and the field of the value of L' and/or the value of K' in the second indication information. Therefore, the field of the value of L' and/or the value of K' needs to be located before the field of the L' row indexes and the field of the K' column indexes. The field of the L' row indexes and the field of the K' column indexes do not affect each other, and therefore, a sequence of the two may change.

In this way, a quantity of bits occupied by each field included in the second indication information is flexibly indicated by using the first indication information, so that a blind detection time and processing complexity of the terminal device can be reduced. Optionally, the second indication information indicates the following content: L' row indexes and K' column indexes corresponding to the M pairs of transmission resources in the two-dimensional matrix; and the first indication information indicates the following content: a value of at least one of L' or K', indication overheads of each row index, and indication overheads of each column index. L' is a positive integer less than or equal to L, and K' is a positive integer less than or equal to K.

FIG. 8 shows another example of indication information according to an embodiment of this application. As shown in FIG. 8, fields included in the first indication information are sequentially as follows: the indication overheads of each row index, and the indication overheads of each column index; and fields included in the second indication information are sequentially as follows: the L' row indexes, and the K' column indexes. Fields included in the first indication information and the second indication information, a sequence of the fields, and lengths of the fields may be predefined in a protocol.

It should be understood that a sequence of the fields included in the first indication information is not limited in this application. In other words, the fields and positions of the fields in the first indication information shown in FIG. 8 may change. A sequence of the fields included in the second indication information is not limited. For example, different from FIG. 7, in FIG. 8, the value of at least one of L' or K' is carried in the first indication information, and the first indication information does not indicate the indication overheads of L' and/or the indication overheads of K'. In addition, because lengths of the fields included in the second indication information in FIG. 8 are determined based on the first indication information, the sequence of the fields included in the second indication information may change.

Optionally, the indication overheads may be further indicated by using indexes corresponding to the indication overheads. A correspondence between indication overheads and indication overhead indexes may be determined based on the first column and the third column, or based on the first column, the second column, and the third column in Table 1.

Table 1

| Index | x | Indication overheads |
|-------|---|---------------------|
| 0 | $1 \leq x \leq 2$ | 1 |
| 1 | $2 < x \leq 4$ | 2 |
| 2 | $4 < x \leq 8$ | 3 |
| 3 | $8 < x \leq 16$ | 4 |
| 4 | $16 < x \leq 34$ | 5 |
| 5 | $32 < x \leq 64$ | 6 |
| 6 | $64 < x \leq 128$ | 7 |
| 7 | $128 < x \leq 256$ | 8 |
| 8 | $256 < x \leq 512$ | 9 |
| 9 | $512 < x \leq 1024$ | 10 |
| 10 | $1024 < x \leq 2048$ | 11 |
| 11 | $x > 2048$ | 12 |
| ... | ... | ... |

Table 1 shows a correspondence between indication overheads of each row index and an indication overhead index, or a correspondence between indication overheads of each column index and an indication overhead index. x represents a quantity of rows of a two-dimensional matrix or a quantity of columns of the two-dimensional matrix. In this embodiment, a value of x meets as follows: $1 \leq x \leq L$, $1 \leq x \leq M$, and x is an integer.

For example, x represents a maximum value of the value of L' or a maximum value of the value of K', and Table 1 shows a correspondence between the indication overheads of the value of L' and an indication overhead index, or a correspondence between the indication overheads of the value of K' and an indication overhead index.

It should be understood that the correspondence between the indication overheads and the indication overhead indexes shown in Table 1 may be predefined in a protocol, or may be preconfigured by the network device for the terminal device.

In an optional embodiment, the first indication information further indicates a mapping manner, and the mapping manner includes one-to-one mapping or one-to-many mapping.

The one-to-one mapping includes that one antenna port corresponds to one frequency domain resource unit, and the one-to-many mapping includes that one antenna port corresponds to a plurality of frequency domain resource units and/or one frequency domain resource unit corresponds to a plurality of antenna ports.

It should be understood that, when the mapping manner is the one-to-one mapping, quantities of row indexes and column indexes indicated by the first indication information are the same, that is, L'=K'. When the mapping manner is the one-to-many mapping, quantities of row indexes and column indexes indicated by the first indication information may be the same, or may be different.

For example, when a row represents a quantity of candidate antenna ports and a column represents a quantity of candidate frequency domain resource units, in the M pairs of transmission resources, one antenna port may be mapped to a plurality of frequency domain resource units, that is, L'>K', or one frequency domain resource unit may be mapped to a plurality of antenna ports, that is, L'<K'. It may be understood that, in the M pairs of transmission resources, one antenna port may correspond to a plurality of frequency domain resource units, and one frequency domain resource unit may correspond to a plurality of antenna ports.

It should be further understood that when the mapping manner is the one-to-many mapping, L'<M and/or K'<M. In this case, the second indication information further indicates a mapping rule, and the first indication information further indicates indication overheads of the mapping rule. The mapping rule is used to determine a correspondence between a plurality of row indexes and a plurality of column indexes.

For example, the mapping rule may indicate a quantity of frequency domain resource units corresponding to each antenna port, or a quantity of antenna ports corresponding to each frequency domain resource unit. For example, the K' column indexes (antenna ports) indicated by the indication information are x0, x3, and x5, the L' row indexes (frequency domain resource units) indicated by the indication information are y10, y0, y8, y4, and y2, and the mapping rule indicates that quantities of frequency domain resource units corresponding to the antenna ports are 2, 2, and 1, that is, row indexes corresponding to x0 are y10 and y0, row indexes corresponding to x3 are y8 and y4, and a row index corresponding to x3 is y2.

For example, the mapping manner indicated in the indication information may be indicated by using 1 bit. For example, a bit "0" indicates that the mapping manner is the one-to-one mapping, and a bit "1" indicates that the mapping manner is the one-to-many mapping. Alternatively, the bit "0" indicates that the mapping manner is the one-to-many mapping, and the bit "1" indicates that the mapping manner is the one-to-one mapping.

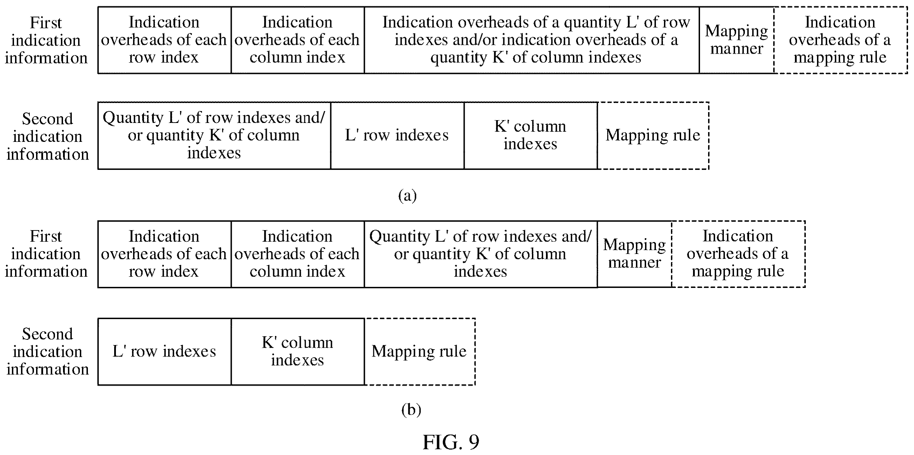

FIG. 9 shows still another example of indication information according to an embodiment of this application. As shown in (a) in FIG. 9, two fields, namely, the mapping manner and the indication overheads of the mapping rule, are added after the indication fields included in the first indication information shown in FIG. 7, and an indication field of the mapping rule is added after the indication fields included in the second indication information shown in FIG. 7. As shown in (b) in FIG. 9, two indication fields, namely, the mapping manner and the indication overheads of the mapping rule, are added after the indication fields included in the first indication information shown in FIG. 8, and an indication field of the mapping rule is added after the indication fields included in the second indication information shown in FIG. 8. It should be noted that, positions of the fields of the mapping manner and the indication overheads of the mapping rule in the first indication information and a position of the field of the mapping rule in the second indication information in FIG. 9 are not limited in this application.

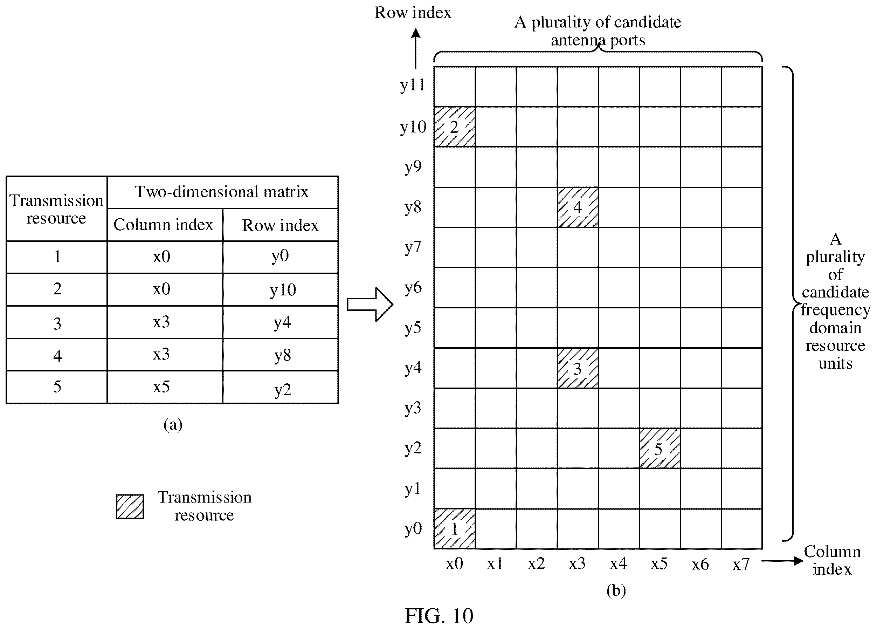

With reference to FIG. 10, the following describes a process in which the terminal device determines the M pairs of transmission resources based on the indication method shown in Design 1. As shown in (a) in FIG. 10, based on the content indicated by the indication information, the terminal device determines that the column indexes are x0, x3, and x5 and the row indexes are y0, y2, y4, y8, and y10, and determines that row indexes corresponding to x0 are y10 and y0, row indexes corresponding to x3 are y8 and y4, and a row index corresponding to x3 is y2. Therefore, five pairs of transmission resources determined by the terminal device based on the determined row indexes and column indexes and the two-dimensional matrix shown in FIG. 6 are shown in (b) in FIG. 10.

Design 2: The indication information indicates a column index of a target element included in each row of the two-dimensional matrix or a row index of a target element included in each column of the two-dimensional matrix.

A transmission resource represented by each target element is included in the M pairs of transmission resources, a row index of each target element is determined based on a mapping relationship between the L rows in the two-dimensional matrix and L row indexes, and a column index of each target element is determined based on a mapping relationship between K column indexes in the two-dimensional matrix and K column indexes.

Optionally, the indication information is carried in higher layer signaling, and the indication information indicates the following content: a quantity of target elements included in each row of the two-dimensional matrix, and the column index of the target element included in each row; or a quantity of target elements included in each column of the two-dimensional matrix, and the row index of the target element included in each column.

For descriptions of the higher layer signaling, refer to related descriptions in Example 1. Details are not described herein again.

With reference to the two-dimensional matrix shown in FIG. 6, the content indicated by the indication information may be understood as a quantity of target elements included in each of the 12 rows, and a column (that is, a column index) in which the target element included in each row is located in the eight columns; or a quantity of target elements included in each of the eight columns, and a row (that is, a row index) in which the target element included in each column is located in the 12 rows. It should be understood that the quantity of target elements included in each row or each column may be 0, 1, or more.

In another implementation, the indication information may alternatively be sent through multi-stage indication, for example, sent through two stages of indication. In this case, the indication information may include first indication information and second indication information. For descriptions of the two stages of indication, refer to related descriptions in Design 1. Details are not described herein again.

Optionally, when the indication information indicates the column index of the target element included in each row in the two-dimensional matrix, the second indication information indicates the following content: a quantity of target elements included in each row of the two-dimensional matrix, the column index of the target element included in each row, and the value of M; and the first indication information indicates the following content: indication overheads of the quantity of target elements included in each row, indication overheads of each column index, indication overheads of the value of M, and a value of L.

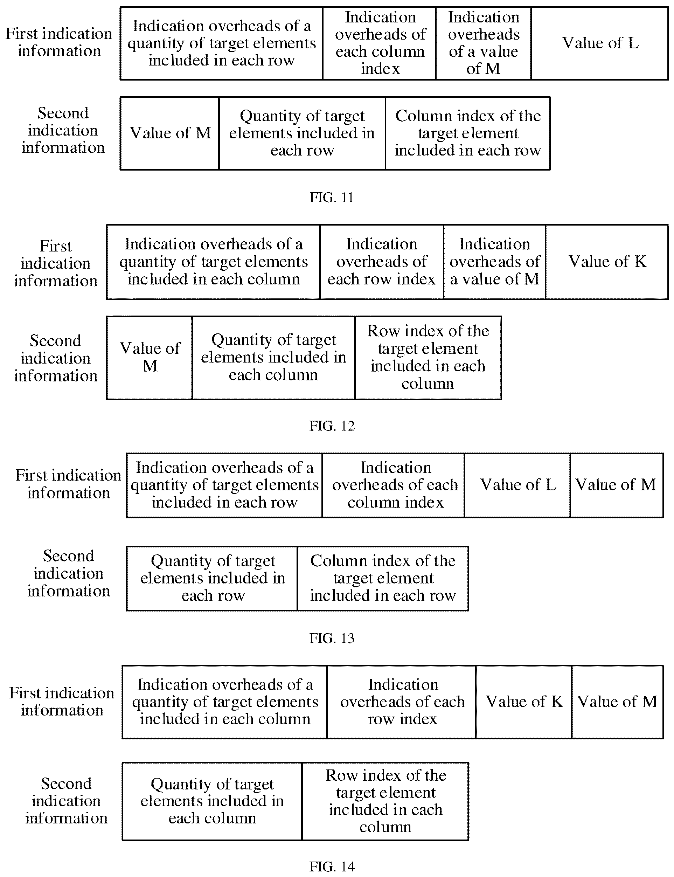

FIG. 11 shows still another example of indication information according to an embodiment of this application. As shown in FIG. 11, fields included in the first indication information are sequentially as follows: the indication overheads of the quantity of target elements included in each row, the indication overheads of each column index, the indication overheads of the value of M, and the value of L; and indication fields included in the second indication information are sequentially as follows: the value of M, the quantity of target elements included in each row, and the column index of the target element included in each row. The fields included in the first indication information, a sequence of the fields, and lengths of the fields may be predefined in a protocol.

It should be understood that the sequence of the fields included in the first indication information is not limited in this application. In other words, the fields and positions of the fields in the first indication information shown in FIG. 11 may change. The second indication information includes a part of fields whose lengths are determined based on the first indication information, and a part of fields whose lengths are determined with reference to the first indication information and another field in the second indication information, and whether a sequence of these fields may change depends on whether lengths of these fields are determined depending on a previous field. For example, a length of the field of the column index of the target element included in each row is determined based on the value of M and the indication overheads of each column index. Therefore, the field of the value of M is located before the field of the column index of the target element included in each row. The quantity of target elements included in each row and the value of M do not affect each other, and the quantity of target elements included in each row and the column index of the target element included in each row do not affect each other, and therefore, a position of the field of the quantity of target elements included in each row may be before or between the field of the value of M and the field of the quantity of target elements included in each row. This is not limited.

For example, the terminal device may first determine a length of the field of the value of M based on the indication overheads of the value of M, and then determine the value of M by parsing the field of the value of M; determine the indication overheads of each column index based on the field of the indication overheads of each column index, and then determine, with reference to the value of M, the column index of the target element included in each row; and determine, based on the value of L and the indication overheads of the quantity of target elements included in each row, the quantity of target elements included in each row. In this way, a quantity of bits occupied by the content included in the second indication information is flexibly indicated by using the first indication information, so that a blind detection time and processing complexity of the terminal device can be reduced.

Optionally, when the indication information indicates the row index of the target element included in each column of the two-dimensional matrix, the second indication information indicates the following content: a quantity of target elements included in each column of the two-dimensional matrix, the row index of the target element included in each column, and the value of M; and the first indication information indicates the following content: indication overheads of the quantity of target elements included in each column, indication overheads of each row index, indication overheads of the value of M, and a value of K.

FIG. 12 shows still another example of indication information according to an embodiment of this application. As shown in FIG. 12, fields included in the first indication information are sequentially as follows: the indication overheads of the quantity of target elements included in each column, the indication overheads of each row index, the indication overheads of the value of M, and the value of K; and indication fields included in the second indication information are sequentially as follows: the value of M, the quantity of target elements included in each column, and the column index of the target element included in each column. The fields included in the first indication information, a sequence of the fields, and lengths of the fields may be predefined in a protocol.

It should be understood that the sequence of the fields included in the first indication information is not limited in this application. In other words, the fields and positions of the fields in the first indication information shown in FIG. 12 may change. The second indication information includes a part of fields whose lengths are determined based on the first indication information, and a part of fields whose lengths are determined with reference to the first indication information and another field in the second indication information, and whether a sequence of these fields may change depends on whether lengths of these fields are determined depending on a previous field. For example, a length of the field of the row index of the target element included in each column is determined based on the value of M and the indication overheads of each row index. Therefore, the field of the value of M is located before the field of the row index of the target element included in each column. The quantity of target elements included in each column and the value of M do not affect each other, and the quantity of target elements included in each column and the row index of the target element included in each column do not affect each other, and therefore, a position of the field of the quantity of target elements included in each column may be before or between the field of the value of M and the field of the quantity of target elements included in each column. This is not limited.

For example, the terminal device may first determine a length of the field of the value of M based on the indication overheads of the value of M, and then determine the value of M by parsing the field of the value of M; determine the indication overheads of each row index based on the field of the indication overheads of each row index, and then determine, with reference to the value of M, the row index of the target element included in each column; and determine, based on the value of K and the indication overheads of the quantity of target elements included in each column, the quantity of target elements included in each column. In this way, a quantity of bits occupied by the content included in the second indication information is flexibly indicated by using the first indication information, so that a blind detection time and processing complexity of the terminal device can be reduced.

Optionally, when the indication information indicates the column index of the target element included in each row of the two-dimensional matrix, the second indication information indicates the following content: a quantity of target elements included in each row of the two-dimensional matrix and the column index of the target element included in each row; and the first indication information indicates the following content: indication overheads of the quantity of target elements included in each row, indication overheads of each column index, the value of M, and a value of L.

FIG. 13 shows still another example of indication information according to an embodiment of this application. As shown in FIG. 13, fields included in the first indication information are sequentially as follows: the indication overheads of the quantity of target elements included in each row, the indication overheads of each column index, the value of L, and the value of M; and indication fields included in the second indication information are sequentially as follows: the quantity of target elements included in each row and the column index of the target element included in each row. The fields included in the first indication information, a sequence of the fields, and lengths of the fields may be predefined in a protocol. Optionally, when the indication information indicates the row index of the target element included in each column of the two-dimensional matrix, the second indication information indicates the following content: a quantity of target elements included in each column of the two-dimensional matrix and the row index of the target element included in each column; and the first indication information indicates the following content: indication overheads of the quantity of target elements included in each column, indication overheads of each row index, the value of M, and a value of K.

FIG. 14 shows still another example of indication information according to an embodiment of this application. As shown in FIG. 14, fields included in the first indication information are sequentially as follows: the indication overheads of the quantity of target elements included in each column, the indication overheads of each row index, the value of K, and the value of M; and indication fields included in the second indication information are sequentially as follows: the quantity of target elements included in each column, and the column index of the target element included in each column. The fields included in the first indication information, a sequence of the fields, and lengths of the fields may be predefined in a protocol.

It should be understood that the sequence of the fields included in the first indication information is not limited in this application. In other words, the fields included in the first indication information shown in FIG. 13 or FIG. 14 and positions of the fields may change. For example, different from FIG. 11, in FIG. 13, the value of M is carried in the first indication information, and the first indication information does not indicate the indication overheads of the value of M. For another example, different from FIG. 12, in FIG. 14, the value of M is carried in the first indication information, and the first indication information does not indicate the indication overheads of the value of M.

In addition, because lengths of fields included in the second indication information shown in FIG. 13 and FIG. 14 are determined based on the first indication information, a sequence of the fields in the second indication information may change.

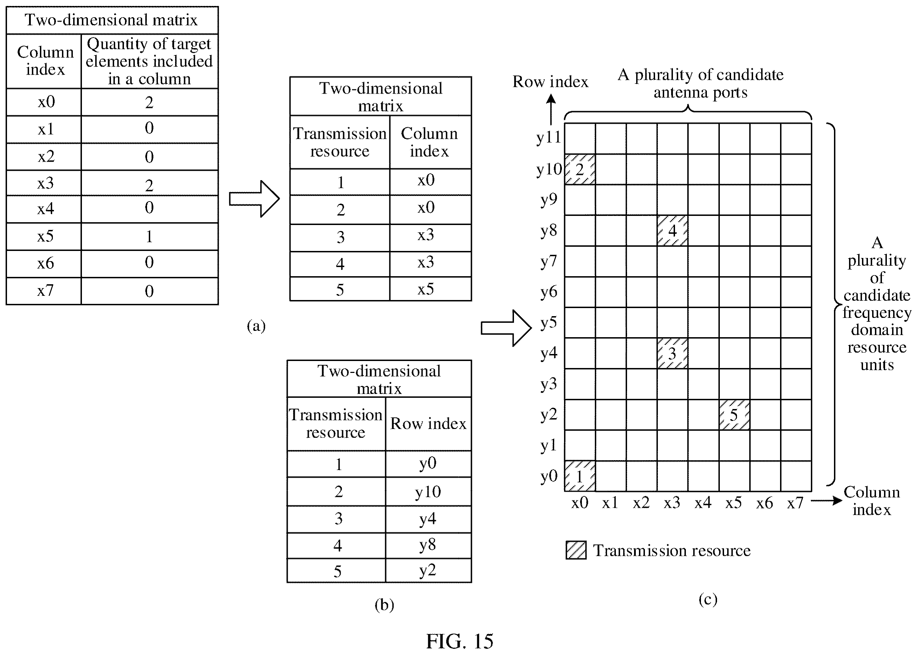

With reference to FIG. 15, the following describes a process in which the terminal device determines the M pairs of transmission resources based on the indication method shown in Design 2. As shown in (a) in FIG. 15, the indication information indicates that quantities of target elements included in columns x0 to x7 are respectively 2, 0, 0, 2, 0, 1, 0, and 0, and the terminal device determines, based on the quantity of target elements included in each column, that columns in which the target elements are located are respectively x0, x3, and x5, and there are a total of five target elements. As shown in (b) in FIG. 15, the indication information indicates a row index of each target element in the columns including a target element. For example, row indexes of two target elements included in the column x0 are respectively y0 and y10, row indexes of two target elements included in the column x3 are respectively y4 and y8, and a row index of a target element included in the column x5 is y2. The five target elements determined by the terminal device based on the determined row indexes and column indexes and the two-dimensional matrix shown in FIG. 6 are shown in (c) in FIG. 15.

If M $\times$ a quantity of bits of a row (or column) index is greater than a quantity of bits of a target element in a row (or column) $\times$ a quantity of rows (or columns), overheads of the second indication information in Example 2 are less than overheads of the second indication information in Example 1.

Design 3: The indication information indicates a bitmap, and the bitmap includes a plurality of bits in one-to-one correspondence with a plurality of elements in the two-dimensional matrix, and a value of each bit indicates whether a candidate transmission resource represented by a corresponding element belongs to the M pairs of transmission resources.

The two-dimensional matrix in this embodiment includes N elements, and the bitmap may include N bits in one-to-one correspondence with the N elements. For example, a value of each bit may be "1" or "0." For example, "0" indicates that a corresponding candidate transmission resource does not belong to the M pairs of transmission resources, and "1" indicates that a corresponding candidate transmission resource belongs to the M pairs of transmission resources. Alternatively, "1" indicates that a corresponding candidate transmission resource does not belong to the M pairs of transmission resources, and "0" indicates that the corresponding candidate transmission resources belong to the M pairs of transmission resources.

Optionally, the indication information is carried in higher layer signaling.

In an example, the indication information indicates the following content: the quantity of rows included in the two-dimensional matrix, the quantity of columns included in the two-dimensional matrix, and the bitmap.

The indication information may perform indication row by row, the bitmap may include L groups of bits corresponding to the L rows of the two-dimensional matrix, each group of bits includes K bits, the K bits in each group of bits are in one-to-one correspondence with K elements in a corresponding row, that is, the bitmap includes L$\times$K bits, and a value of each bit indicates whether a candidate transmission resource represented by a corresponding element is included in the M pairs of transmission resources. Alternatively, the indication information may perform indication column by column, the bitmap may include K groups of bits corresponding to the K columns of the two-dimensional matrix, each group of bits includes L bits, the L bits in each group of bits are in one-to-one correspondence with L elements in a corresponding column, that is, the bitmap includes K×L bits, and a value of each bit indicates whether a candidate transmission resource represented by a corresponding element is included in the M pairs of transmission resources.

For example, L=2, K=4, and the bitmap includes 2×4=8 bits. The bitmap includes two groups of bits corresponding to two rows (or columns), and each group of bits includes 4 bits. For example, a group of bits corresponding to a first row (or column) is 1000, and a group of bits corresponding to a second row (or column) is 0010. If "0" indicates that a candidate transmission resource is not included in the M pairs of transmission resources, and "1" indicates that a candidate transmission resource is included in the M pairs of transmission resources, the candidate transmission resources include two pairs of transmission resources. If "0" indicates that a candidate transmission resource is included in the M pairs of transmission resources, and "1" indicates that a candidate transmission resource is not included in the M pairs of transmission resources, the candidate transmission resources include six pairs of transmission resources.

Because M target elements corresponding to the M pairs of transmission resources may be centrally distributed in several rows or several columns of the two-dimensional matrix, the rows or columns in which target elements are distributed in the two-dimensional matrix may be indicated, while another row or column is not indicated.

In another example, the M target elements corresponding to the M pairs of transmission resources in the two-dimensional matrix are distributed in L' rows, and L' is a positive integer less than or equal to L; the indication information indicates the following content: L' row indexes corresponding to the L' rows, a value of K, and the bitmap; and the bitmap includes L' groups of bits corresponding to L' rows, each group of bits includes K bits, the K bits in each group of bits are in one-to-one correspondence with K elements in a corresponding row, that is, the bitmap includes L'×K bits, and a value of each bit indicates whether a candidate transmission resource represented by a corresponding element is included in the M pairs of transmission resources. In this way, the indication information indicates, row by row, the rows in which the target elements are distributed in the two-dimensional matrix, and does not indicate a row in which no target element is distributed.

Alternatively, the M target elements corresponding to the M pairs of transmission resources in the two-dimensional matrix are distributed in K' columns, and K' is a positive integer less than or equal to K; the indication information indicates the following content: K' column indexes corresponding to the K' columns, a value of L, and the bitmap; the bitmap includes K' groups of bits corresponding to the K' columns, each group of bits includes L bits, the L bits in each group of bits are in one-to-one correspondence with L elements in a corresponding column, and a value of each bit indicates whether a candidate transmission resource represented by a corresponding element is included in the M pairs of transmission resources. In this way, the indication information indicates, column by column, the columns in which the target elements are distributed in the two-dimensional matrix, and does not indicate a column in which no target element is distributed.

For example, L=2 (row indexes of two rows are respectively an index 0 and an index 1), L'=1, K=4, and the bitmap includes 1×4 bits. If the M target elements are distributed in the row whose row index is 0, and a group of bits corresponding to the row is 1000, when "0" indicates that a candidate transmission resource is not included in the M pairs of transmission resources, and "1" indicates that a candidate transmission resource is included in the M pairs of transmission resources, the candidate transmission resources include one pair of transmission resources. Alternatively, when "0" indicates that a candidate transmission resource is included in the M pairs of transmission resources, and "1" indicates that a candidate transmission resource is not included in the M pairs of transmission resources, the candidate transmission resources include three pairs of transmission resources.

In another implementation, the indication information may alternatively be sent through multi-stage indication, for example, sent through two stages of indication. In this case, the indication information may include first indication information and second indication information.

It should be understood that, for descriptions of the two stages of indication, refer to related descriptions in Design 1. Details are not described herein again.

Optionally, the second indication information indicates the bitmap; the bitmap includes L groups of bits corresponding to the L rows in the two-dimensional matrix, each group of bits includes K bits, the K bits in each group of bits are in one-to-one correspondence with K elements in a corresponding row, and a value of each bit indicates whether a candidate transmission resource represented by a corresponding element is included in the M pairs of transmission resources; or the bitmap includes K groups of bits corresponding to the K columns in the two-dimensional matrix, each group of bits includes L bits, the L bits in each group of bits are in one-to-one correspondence with L elements in a corresponding column, and a value of each bit indicates whether a candidate transmission resource represented by a corresponding element is included in the M pairs of transmission resources; and the first indication information indicates the following content: a value of K and a value of L.

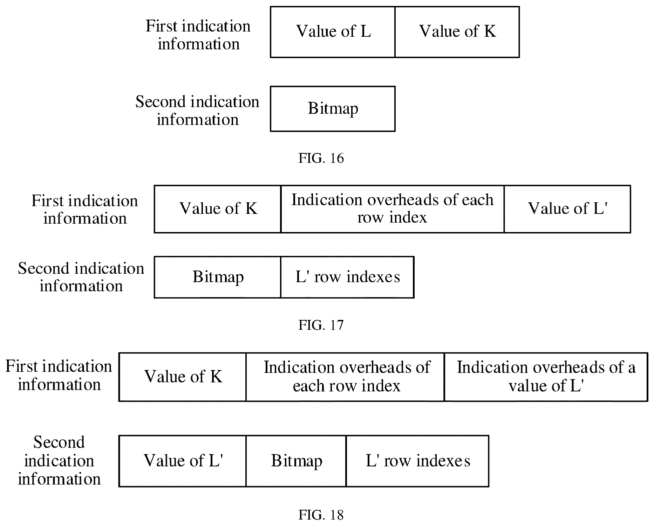

FIG. 16 shows still another example of indication information according to an embodiment of this application. As shown in FIG. 16, fields included in the first indication information are sequentially as follows: the value of L, and the value of K; and a field included in the second indication information is the bitmap. In this way, a quantity of bits occupied by each field included in the second indication information is flexibly indicated by using the first indication information, so that a blind detection time and processing complexity of the terminal device can be reduced. For example, the terminal device may determine the quantity of bits of the bitmap based on the value of L and the value of K, and does not need to reserve a fixed length of bits in first-stage physical layer signaling or MAC layer signaling to indicate the bitmap. A length of the bitmap is usually long, and is not suitable to be indicated in the first-stage physical layer signaling or the MAC layer signaling.

Optionally, M target elements corresponding to the M pairs of transmission resources in the two-dimensional matrix are distributed in L' rows in the L rows, and L' is an integer less than or equal to L; the second indication information indicates the following content: L' row indexes corresponding to the L' rows and the bitmap, the bitmap includes L' groups of bits corresponding to the L' rows, each group of bits includes K bits, the K bits in each group of bits are in one-to-one correspondence with K elements in a corresponding row, and a value of each bit indicates whether a candidate transmission resource represented by a corresponding element is included in the M pairs of transmission resources; and the first indication information indicates the following content: a value of K, indication overheads of each row index, and a value of L'. Alternatively, the M target elements corresponding to the M pairs of transmission resources in the two-dimensional matrix are distributed in K' columns in the K columns, and K' is an integer less than or equal to K; the second indication information indicates the following content: K' column indexes corresponding to the K' columns and the bitmap, the bitmap includes K' groups of bits corresponding to the K' columns, each group of bits includes L bits, the L bits in each group of bits are in one-to-one correspondence with L elements in a corresponding column, and a value of each bit indicates whether a candidate transmission resource represented by a corresponding element is included in the M pairs of transmission resources; and the first indication information indicates the following content: a value of L, indication overheads of each column index, and a value of K'.

FIG. 17 shows still another example of indication information according to an embodiment of this application. As shown in FIG. 17, fields included in the first indication information are sequentially as follows: the value of K, the indication overheads of each row index, and the value of L'; and fields included in the second indication information are sequentially as follows: the bitmap, and the L' row indexes. The fields indicated by the first indication information, a sequence of the fields, and lengths of the fields may be predefined in a protocol.

It should be understood that the sequence of fields included in the first indication information is not limited in this application. In other words, the fields and positions of the fields in the first indication information shown in FIG. 17 may change. Lengths of the fields included in the second indication information are determined based on the first indication information, and therefore, a sequence of the fields may change. For example, the terminal device determines the bitmap based on the value of K, and determines the L' row indexes based on the indication overheads of each row index and the value of L'.

Optionally, M target elements corresponding to the M pairs of transmission resources in the two-dimensional matrix are distributed in L' rows in the L rows, and L' is an integer less than or equal to L; the second indication information indicates the following content: L' row indexes corresponding to the L' rows, the bitmap, and a value of L', the bitmap includes L' groups of bits corresponding to the L' rows, each group of bits includes K bits, the K bits in each group of bits are in one-to-one correspondence with K elements in a corresponding row, and a value of each bit indicates whether a candidate transmission resource represented by a corresponding element is included in the M pairs of transmission resources; and the first indication information indicates the following content: a value of K, indication overheads of each row index, and indication overheads of the value of L'. Alternatively, the M target elements corresponding to the M pairs of transmission resources in the two-dimensional matrix are distributed in K' columns in the K columns, and K' is an integer less than or equal to K; the second indication information indicates the following content: K' column indexes corresponding to the K' columns, the bitmap, and a value of K', the bitmap includes K' groups of bits corresponding to the K' columns, each group of bits includes L bits, the L bits in each group of bits are in one-to-one correspondence with L elements in a corresponding column, and a value of each bit indicates whether a candidate transmission resource represented by a corresponding element is included in the M pairs of transmission resources; and the first indication information indicates the following content: a value of L, indication overheads of each column index, and indication overheads of the value of K'.

FIG. 18 shows still another example of indication information according to an embodiment of this application. As shown in FIG. 18, fields included in the first indication information are sequentially as follows: the value of K, the indication overheads of each row index, and the indication overheads of the value of L'; and fields included in the second indication information are sequentially as follows: the value of L', the bitmap, and the L' row indexes.

It should be understood that a sequence of the fields included in the first indication information is not limited in this application. In other words, the fields included in the first indication information may change. For example, different from FIG. 17, in FIG. 18, the value of L' is carried in the second indication information, and the first indication information indicates the indication overheads of the value of L'. The second indication information includes a part of fields whose lengths are determined based on the first indication information, and a part of fields whose lengths are determined with reference to the first indication information and another field in the second indication information, and whether a sequence of these fields may change depends on whether lengths of these fields are determined depending on a previous field. For example, lengths of the field of the L' row indexes and the field of the bitmap need to be determined with reference to the indication overheads of the value of L' in the first indication information and the value of L', and therefore in the second indication information, the field of the value of L' is located before the field of the L' row indexes and the field of the bitmap, and the field of the L' row indexes and the field of the bitmap do not affect each other, so that a sequence of the two may change.

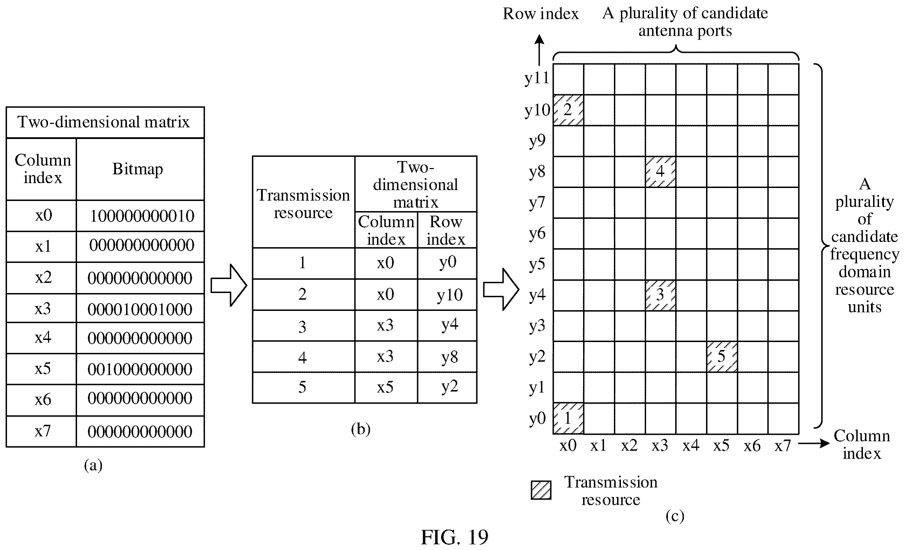

With reference to FIG. 19, the following describes a process in which the terminal device determines the M pairs of transmission resources based on the indication method shown in Design 3. As shown in (a) in FIG. 19, the indication information indicates a group of bitmaps corresponding to each column of x0 to x7, and each group of bitmaps includes 12 bits. For example, a group of bits corresponding to x0 is 100000000010, and a group of bits corresponding to x1 is 000000000000. If " 1" indicates that a candidate transmission resource corresponding to the bit belongs to the M pairs of transmission resources, and "0" indicates that a candidate transmission resource corresponding to the bit does not belong to the M pairs of transmission resources, the first candidate transmission resource and the eleventh candidate transmission resource in the column x0 belong to the M pairs of transmission resources, and other candidate resources in the column x0 do not belong to the M pairs of transmission resources. The terminal device may determine, based on the group of bits corresponding to each column, positions of five pairs of transmission resources shown in (b) in FIG. 19, that is, row indexes and column indexes of the five pairs of transmission resources. The five pairs of transmission resources determined by the terminal device with reference to the two-dimensional matrix shown in FIG. 6 and the positions of the transmission resources shown in (b) in FIG. 19 are shown in (c) in FIG. 19.

Further, the indication of the bitmap by the indication information may include the bitmap or a q-nary value corresponding to values represented by a plurality of bits in the bitmap.

In other words, the indication of the bitmap is not limited to a binary value, and the network device may alternatively indicate the bitmap by using a value in a higher number system, for example, an octal, decimal, or hexadecimal value. In an example, if the bitmap is represented in decimal notation, a bitmap 00000011 may be represented as a decimal value 3.

When the bitmap is represented by using the value in the higher number system, indication overheads can be further reduced.

When the bitmap is represented by using the q-nary value, a number system of the q-nary value may be predefined, or may be configured by the network device. Optionally, the indication information further indicates the number system of the q-nary value. Alternatively, the number system of the q-nary value may be configured by using other signaling, for example, an RRC message sent before the indication information. This is not limited in this application.

**Manner 2: The N pairs of candidate transmission resources are represented by using a one-dimensional array.**

Corresponding to the N pairs of candidate transmission resources, the one-dimensional array may include N elements, each element represents one pair of candidate transmission resources, and the one-dimensional array is obtained by arranging the N pairs of candidate transmission resources according to a combination rule. Because each of the N pairs of candidate transmission resources is obtained by combining one of a plurality of candidate antenna ports and one of a plurality of candidate frequency domain resource units, the one-dimensional array obtained by arranging the N pairs of candidate transmission resources according to the combination rule is a one-dimensional array obtained by combining the plurality of candidate antenna ports and the plurality of candidate frequency domain resource units according to the combination rule.

The combination rule indicates a dimension in which traversal is preferentially performed in an antenna port dimension and a frequency domain resource dimension when the N pairs of candidate transmission resources are obtained by combining the plurality of candidate antenna ports and the plurality of candidate frequency domain resource units.

In an example, if the combination rule indicates that the antenna port dimension in which traversal is preferentially performed, the plurality of candidate antenna ports may be first traversed, and one of the plurality of candidate frequency domain resource units is combined with each of the plurality of candidate antenna ports in a one-to-one manner, to obtain a plurality of pairs of candidate transmission resources. Then, another of the plurality of candidate frequency domain resource units is combined with each of the plurality of candidate antenna ports in a one-to-one manner, to obtain a plurality of pairs of candidate transmission resources. The rest can be deduced by analogy until all of the plurality of frequency domain resource units are traversed, to obtain N pairs of candidate transmission resources.

In another example, if the combination rule indicates that the frequency domain resource dimension in which traversal is preferentially performed, the plurality of candidate frequency domain resource units may be first traversed, and one of the plurality of candidate antenna ports is combined with each of the plurality of candidate frequency domain resource units in a one-to-one manner, to obtain a plurality of pairs of candidate transmission resources. Then, another of the plurality of candidate antenna ports is combined with each of the plurality of candidate frequency domain resource units in a one-to-one manner, to obtain a plurality of pairs of candidate transmission resources. The rest can be deduced by analogy until all of the plurality of candidate antenna ports are traversed, to obtain N pairs of candidate transmission resources.

In the one-dimensional array, each element may correspond to one index. In other words, one index may be used to identify one element, that is, one pair of candidate transmission resources. Different from the two-dimensional matrix, the index corresponding to each element in the one-dimensional array may be a one-dimensional index.

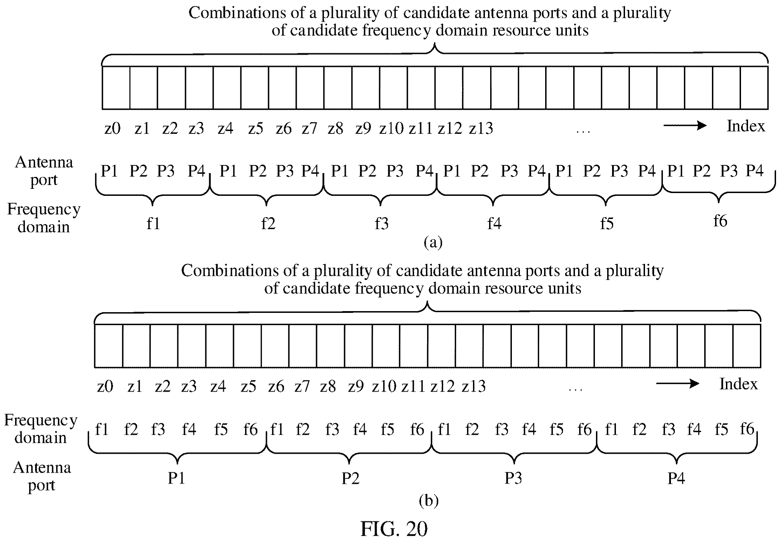

FIG. 20 shows one-dimensional arrays obtained based on different combination rules. As shown in (a) and (b) in FIG. 20, a length of a one-dimensional array is determined according to a combination rule of a plurality of candidate frequency domain resource units and a plurality of candidate antenna ports that can be used to transmit a reference signal in a current time unit. There is a mapping relationship between indexes in the one-dimensional array and the plurality of candidate frequency domain resource units and the plurality of candidate antenna ports, and the mapping relationship is related to the combination rule of the plurality of candidate frequency domain resource units and the plurality of candidate antenna ports in the one-dimensional array. As shown in (a) in FIG. 20, in the one-dimensional array, 24 (that is, an example of a value of N) pairs of candidate transmission resources are determined according to a combination rule of first traversing antenna ports (P1, P2, P3, and P4) and then traversing frequency domain resource units (f1, f2, f3, f4, f5, and f6). The 24 pairs of candidate transmission resources may be respectively identified by using indexes z0 to z23. For example, as shown in (a) in FIG. 20, a candidate transmission resource corresponding to the index z3 in the one-dimensional array is obtained by combining the antenna port P4 and the frequency domain resource unit f1. As shown in (b) in FIG. 20, in the one-dimensional array, 24 pairs of candidate transmission resources are determined by first traversing the frequency domain resource units (f1, f2, f3, f4, f5, and f6) and then traversing the antenna ports (P1, P2, P3, and P4). The 24 pairs of candidate transmission resources may also be respectively identified by using the indexes z0 to z23. For example, as shown in (b) in FIG. 20, a candidate transmission resource corresponding to the index z3 in the one-dimensional array is obtained by combining the frequency domain resource unit f4 and the antenna port P1.

It can be learned that in different N pairs of candidate transmission resources obtained according to different combination rules, a same index may correspond to different resources.

When the N pairs of candidate transmission resources are represented by using the one-dimensional array, determining the M pairs of transmission resources based on the indication information and the N pairs of candidate transmission resources in step 330 includes: determining the M pairs of transmission resources based on the indication information and the one-dimensional array.

The following shows two possible designs of the indication information in Manner 2.

Design 1: The indication information indicates M indexes corresponding to the M pairs of transmission resources in the one-dimensional array, and the M indexes are determined based on a mapping relationship between the N elements in the one-dimensional array and N indexes.

Optionally, the indication information is carried in higher layer signaling, and the indication information indicates the M indexes.

For descriptions of the higher layer signaling, refer to related descriptions in Design 1. Details are not described herein again.

The terminal device may determine a unique pair of transmission resources in the one-dimensional array based on an index indicated in the indication information, and the transmission resources belong to the M pairs of transmission resources. With reference to the one-dimensional array shown in FIG. 20, if the index indicated by the indication information is z0, the terminal device determines a small box corresponding to z0 as one of the M pairs of transmission resources.

In another implementation, the indication information may alternatively be sent through multi-stage indication, for example, sent through two stages of indication. In this case, the indication information includes first indication information and second indication information.

It should be understood that, for descriptions of the two stages of indication, refer to related descriptions in Design 1 in Manner 1. Details are not described herein again.

Optionally, the second indication information indicates the following content: the M indexes and the value of M. The first indication information indicates the following content: indication overheads of each index and indication overheads of the value of M.

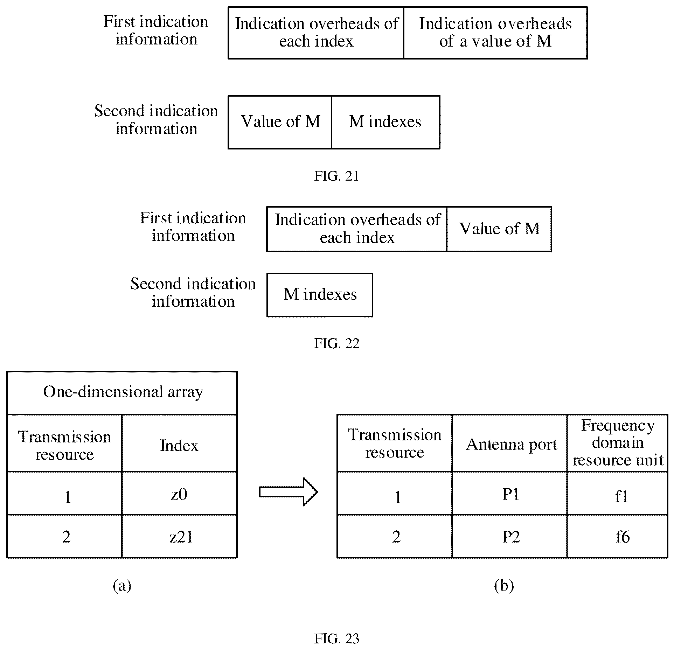

FIG. 21 shows still another example of indication information according to an embodiment of this application. As shown in FIG. 21, fields included in the first indication information are sequentially as follows: the indication overheads of each index, and the indication overheads of the value of M; and fields included in the second indication information are sequentially as follows: the value of M, and the M indexes. The fields included in the first indication information, a sequence of the fields, and lengths of the fields may be predefined in a protocol.

It should be understood that the sequence of the fields included in the first indication information is not limited in this application. In other words, the fields and positions of the fields in the first indication information shown in FIG. 21 may change. A length of the field of the value of M included in the second indication information is determined based on the indication overheads of the value of M in the first indication information, and a length of the field of the M indexes needs to be determined with reference to the value of the M and the indication overheads of each index, and therefore, the field of the value of M is located before the field of the M indexes.

In this way, a quantity of bits occupied by the content included in the second indication information is flexibly indicated by using the first indication information, so that a blind detection time and processing complexity of the terminal device can be reduced.

Optionally, the second indication information indicates the following content: the M indexes; and the first indication information indicates the following content: indication overheads of each index and the value of M.

FIG. 22 shows still another example of indication information according to an embodiment of this application. As shown in FIG. 22, fields included in the first indication information are sequentially as follows: the indication overheads of each index, and the value of M; and a field included in the second indication information is the M indexes. The fields included in the first indication information, a sequence of the fields, and lengths of the fields may be predefined in a protocol.

It should be understood that the sequence of the fields included in the first indication information in this application may change. In other words, the fields and positions of the fields in the first indication information shown in FIG. 22 may change. For example, different from FIG. 21, in FIG. 22, the value of M is carried in the first indication information.

With reference to FIG. 23, the following describes a process in which the terminal device determines the M pairs of transmission resources based on the indication method shown in Example 1. As shown in (a) in FIG. 23, indexes indicated by the indication information are z0 and z21. In other words, the N pairs of candidate transmission resources include two pairs of transmission resources. The two pairs of transmission resources determined by the terminal device based on the indexes z0 and z21 and the combination rule (for example, the combination rule shown in (a) in FIG. 20) corresponding to the one-dimensional array are shown in (b) in FIG. 23: an antenna port and a frequency domain resource unit that correspond to one pair of transmission resources are respectively P1 and f1, and an antenna port and a frequency domain resource unit that correspond to the other pair of transmission resources are respectively P2 and f6.

Design 2: The indication information indicates a bitmap, the bitmap includes N bits, the N bits are in one-to-one correspondence with the N elements in the one-dimensional array, and a value of each bit indicates whether a candidate transmission resource represented by a corresponding element belongs to the M pairs of transmission resources.

For example, when the one-dimensional array includes 24 elements, the bitmap also includes 24 bits, and a value of each bit may be "1" or "0." For example, "0" indicates that a corresponding candidate transmission resource does not belong to the M pairs of transmission resources, and "1" indicates that a corresponding candidate transmission resource belongs to the M pairs of transmission resources. Alternatively, "1" indicates that a corresponding candidate transmission resource does not belong to the M pairs of transmission resources, and "0" indicates that the corresponding candidate transmission resources belong to the M pairs of transmission resources.

In this embodiment of this application, the M pairs of transmission resources are indicated by using a bitmap, so that overheads of the indication information can be reduced.

Optionally, the indication information is carried in higher layer signaling, and the indication information indicates the bitmap.

For descriptions of the higher layer signaling, refer to related descriptions in Manner 1. Details are not described herein again.

The terminal device may determine at least one pair of transmission resources in the one-dimensional array based on the bitmap indicated in the indication information. For example, with reference to results indicated by values in the bitmap, candidate transmission resources corresponding to "1" in the bitmap indicated by the indication information may be determined as the M pairs of transmission resources, or candidate transmission resources corresponding to "0" may be determined as the M pairs of transmission resources.

In another implementation, the indication information may alternatively be sent through multi-stage indication, for example, sent through two stages of indication. In this case, the indication information includes first indication information and second indication information.

It should be understood that, for descriptions of the two stages of indication, refer to related descriptions in Design 1 in Manner 1. Details are not described herein again. Optionally, the second indication information indicates the bitmap, and the first indication information indicates a quantity of the plurality of candidate antenna ports and a quantity of the plurality of candidate frequency domain resource units.

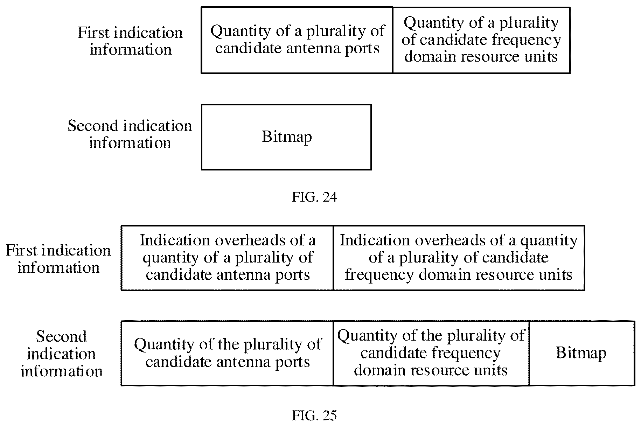

FIG. 24 shows still another example of indication information according to an embodiment of this application. As shown in FIG. 24, fields included in the first indication information are sequentially as follows: the quantity of the plurality of candidate antenna ports, and the quantity of the plurality of candidate frequency domain resource units; and a field included in the second indication information is the bitmap. The fields included in the first indication information, a sequence of the fields, and lengths of the fields may be predefined in a protocol.

It should be understood that the sequence of the fields included in the first indication information is not limited in this application. In other words, the fields and positions of the fields in the first indication information shown in FIG. 24 may change.

For example, the terminal device may determine, based on a quantity A of the plurality of candidate antenna ports and a quantity B of the plurality of candidate frequency domain resource units, a quantity A×B of bits of the bitmap.

Optionally, the second indication information indicates the following content: a quantity of the plurality of candidate antenna ports, a quantity of the plurality of candidate frequency domain resource units, and the bitmap; and the first indication information includes indication overheads of the quantity of the plurality of candidate antenna ports and indication overheads of the quantity of the plurality of candidate frequency domain resource units.

FIG. 25 shows still another example of indication information according to an embodiment of this application. As shown in FIG. 25, fields included in the first indication information are sequentially as follows: the indication overheads of the quantity of the plurality of candidate antenna ports, and the indication overheads of the quantity of the plurality of candidate frequency domain resource units; and fields included in the second indication information are sequentially as follows: the quantity of the plurality of candidate antenna ports, the quantity of the plurality of candidate frequency domain resource units, and the bitmap. The fields included in the first indication information, a sequence of the fields, and lengths of the fields may be predefined in a protocol.

It should be understood that the sequence of the fields included in the first indication information is not limited in this application. In other words, the fields and positions of the fields in the first indication information shown in FIG. 25 may change. A length of the field of the bitmap included in the second indication information is determined based on the quantity of the plurality of candidate antenna ports and the quantity of the plurality of candidate frequency domain resource units in the second indication information, and therefore, the field of the bitmap is located after the field of the quantity of the plurality of candidate antenna ports and the field of the quantity of the plurality of candidate frequency domain resource units, while a sequence of the field of the quantity of the plurality of candidate antenna ports and the field of the quantity of the plurality of candidate frequency domain resource units may change.

For example, the terminal device determines a quantity A of the plurality of candidate antenna ports based on the indication overheads of the quantity of the plurality of candidate antenna ports, determines a quantity B of the plurality of candidate frequency domain resource units based on the indication overheads of the quantity of the plurality of candidate frequency domain resource units, and then may determine a quantity A×B of bits of the bitmap based on A and B.

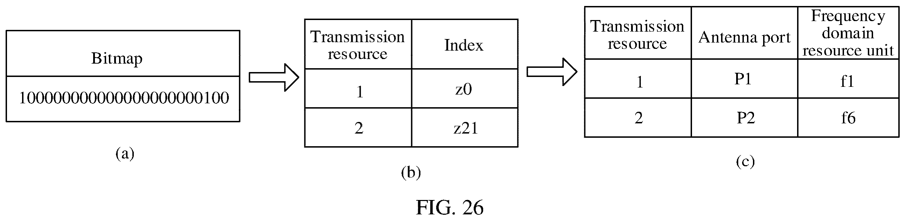

With reference to FIG. 26, the following describes a process in which the terminal device determines the M pairs of transmission resources based on the indication method shown in Example 2. As shown in (a) in FIG. 26, the bitmap indicated by the indication information is 10000000000000000001000. If "1" indicates that a corresponding candidate transmission resource belongs to the M pairs of transmission resources, and "0" indicates that a corresponding candidate transmission resource does not belong to the M pairs of transmission resources, indexes that correspond to two pairs of transmission resources and that are determined by the terminal device based on the bitmap indicated in the indication information and the one-dimensional array shown in FIG. 20 are shown in (b) in FIG. 26, and the indexes corresponding to the two pairs of transmission resources are respectively $z_0$ and $z_{21}$. The two pairs of transmission resources determined by the terminal device based on the determined indexes and the combination rule (for example, the combination rule shown in (a) in FIG. 20) corresponding to the one-dimensional array are shown in (c) in FIG. 26: an antenna port and a frequency domain resource unit that correspond to one pair of transmission resources are respectively $P_1$ and $f_1$, and an antenna port and a frequency domain resource unit that correspond to the other pair of transmission resources are respectively $P_2$ and $f_6$.

For the indication of the bitmap, refer to related descriptions in Design 3 in Manner 1. Details are not described herein again.

The combination rule and/or the length of the bitmap may be preconfigured by the network device. Optionally, the indication information in Design 2 further indicates one or more of the following: the combination rule and/or the length of the bitmap.

For example, when the indication information includes the first indication information and the second indication information, the combination rule and/or the length of the bitmap may be carried in the first indication information, or may be carried in other signaling, for example, carried in an RRC message sent before the indication information. This is not limited in this application.

The network device configures the combination rule and/or the length of the bitmap, so that the combination rule and/or the length of the bitmap can be flexibly adjusted.

Certainly, the combination rule and/or the length of the bitmap may alternatively be predefined in a protocol, that is, may be fixed. This is not limited in this application.

It may be understood that the length of the bitmap is related to the value of N. Because the N pairs of transmission resources are obtained by combining the plurality of candidate antenna ports and the plurality of candidate frequency domain resource units, the indication of the length of the bitmap by the indication information may be exchanged with the indication of the values of L and K.

The foregoing provides, with reference to a plurality of accompanying drawings, two possible implementations and a plurality of possible designs of fields in the indication information in different implementations. These examples are shown merely for ease of understanding, and should not constitute any limitation on this application.

As described above, the indication information sent by the network device to the terminal device may indicate one or more of the following: the value of M, the frequency domain resource units included in the M pairs of transmission resources, or the correspondence between the frequency domain resource units and the antenna ports in the M pairs of transmission resources. Alternatively, the indication information indicates one or more of the following: the value of M, the antenna ports included in the M pairs of transmission resources, or the correspondence between the frequency domain resource units and the antenna ports in the M pairs of transmission resources. By indicating one or more of the foregoing, the network device may indicate the M pairs of transmission resources in the N pairs of candidate transmission resources.

It should be understood that the indication information may directly indicate or indirectly indicate one or more of the foregoing, or may directly indicate or indirectly indicate one or more of the foregoing. For example, in the plurality of examples shown with reference to the accompanying drawings, the value of M may be directly indicated by using a field, for example, the field of the value of M in the indication information shown in FIG. 11, FIG. 12, FIG. 13, FIG. 14, FIG. 21, or FIG. 22; or may be indirectly indicated by using another field, for example, determined by using the field of the value of L' and/or the value of K' in the indication information shown in FIG. 7 or FIG. 8, or determined by using the field of the value of L' and/or the value of K' and the field of the mapping rule in the indication information shown in FIG. 9 or FIG. 10, or determined by using the field of the bitmap in the indication information shown in FIG. 16, FIG. 17, FIG. 18, FIG. 24, or FIG. 25. Details are not described.

In addition, the foregoing separately shows a plurality of possible designs of the indication information with reference to the higher layer signaling and the multi-stage indication manner. It may be understood that the higher layer signaling has advantages such as low indication overheads and high reliability, and the multi-stage indication has advantages of flexibility and convenience. The network device may indicate the transmission resources in different manners based on different service requirements.

In the plurality of designs, index or bitmap indication is introduced. It may be understood that a larger value of the index or a longer length of the bitmap requires higher indication overheads. If the N pairs of candidate transmission resources are divided into a plurality of resource groups, a quantity of resources in each resource group is less than N, and required overheads are reduced accordingly. Therefore, if resources are indicated based on a resource group in which the M pairs of transmission resources are located, indication overheads can be further reduced.

In an optional embodiment, the M pairs of transmission resources are included in at least one of a plurality of resource groups, and the plurality of resource groups are obtained by dividing the N pairs of candidate transmission resources according to a division rule. The indication information is carried in at least one group of fields, the at least one group of fields corresponds to the at least one resource group, and information carried in each group of fields is used to determine a transmission resource included in a corresponding resource group.

Optionally, the indication information further indicates a group index of the resource group corresponding to each group of fields.

It should be understood that the division rule may be predefined in a protocol or configured by the network device.

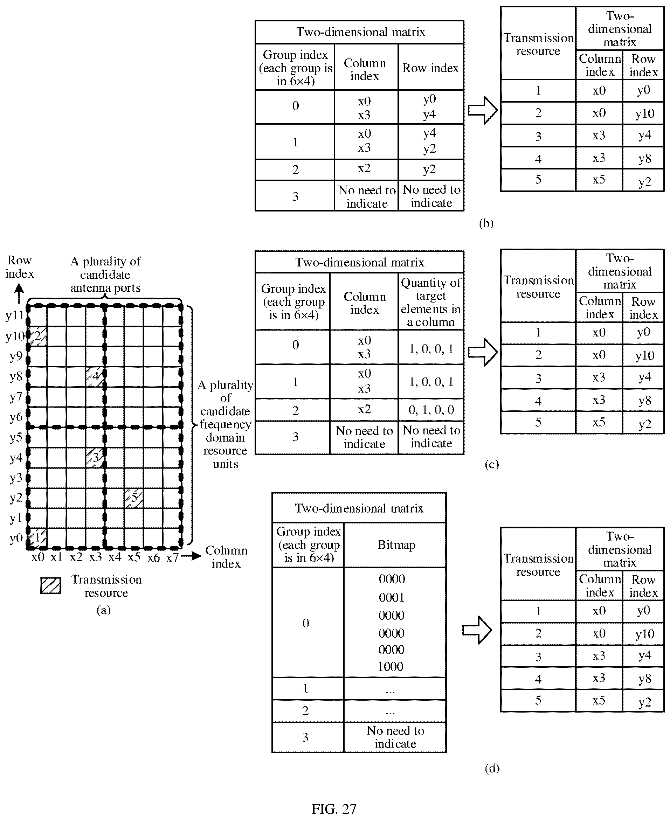

FIG. 27 shows a division manner according to an embodiment of this application. As shown in (a) in FIG. 27, there are 12 rows × 8 columns = 96 pairs of candidate transmission resources, the 96 pairs of candidate transmission resources are divided into four resource groups, each resource group includes 24 pairs of candidate transmission resources, and indexes of the resource groups are respectively 0, 1, 2, and 3. In other words, a 12×8 two-dimensional matrix is divided into four 6×4 two-dimensional matrices, and the four two-dimensional matrices may be numbered first from left to right and then from bottom to top, to obtain corresponding group indexes 0, 1, 2, and 3. If a resource group does not include a transmission resource of the reference signal, the network device may not perform transmission resource indication on the resource group. As shown in (b) in FIG. 27, the network device sends, in the indication manner shown in Design 1 in Manner 1, indication information in a group of fields corresponding to a resource group that includes a transmission resource of the reference signal. An indication manner of the indication information is not described herein again. For example, the indication information is carried in three groups of fields corresponding to the group indexes 0, 1, and 2 respectively.

As shown in (c) in FIG. 27, the network device sends, in the indication manner shown in Design 2 in Manner 1, indication information in a group of fields corresponding to a resource group that includes a transmission resource of the reference signal. An indication manner of the indication information is not described herein again. For example, the indication information is carried in three groups of fields corresponding to the group indexes 0, 1, and 2 respectively. As shown in (d) in FIG. 27, the network device sends, in the indication manner shown in Design 3 in Manner 1, indication information in a group of fields corresponding to a resource group that includes a transmission resource of the reference signal. An indication manner of the indication information is not described herein again. For example, the indication information is carried in three groups of fields corresponding to the group indexes 0, 1, and 2 respectively.

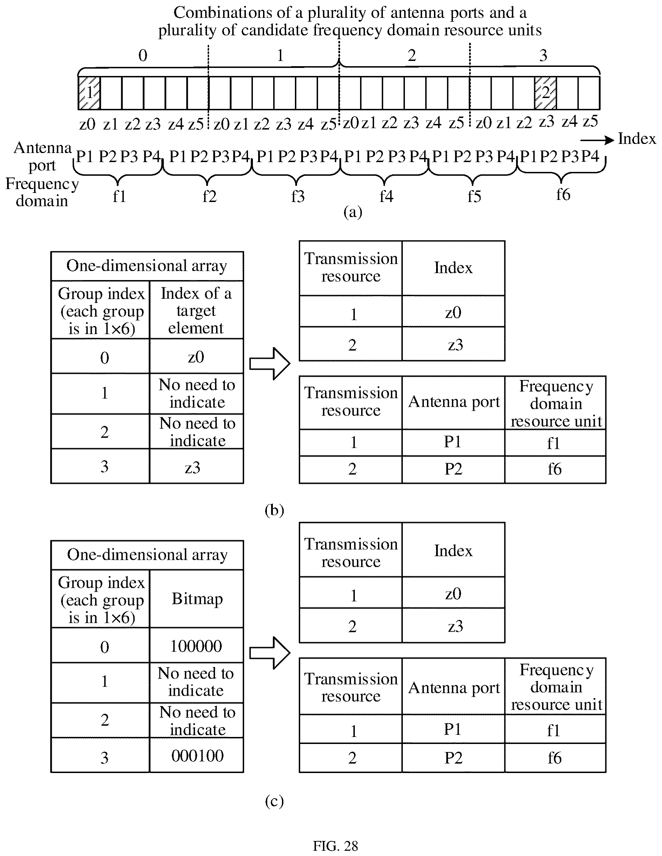

FIG. 28 shows another division manner according to an embodiment of this application. As shown in (a) in FIG. 28, a one-dimensional array including 24 elements is evenly divided into four resource groups, each resource group includes six consecutive elements, and group indexes of the four resource groups are respectively 0, 1, 2, and 3. The M pairs of transmission resources are distributed in two resource groups whose group indexes are 0 and 3. Therefore, the indication information is carried in two groups of fields whose group indexes are respectively 0 and 3.

As shown in (b) in FIG. 28, the index z0 is carried in the group of fields corresponding to the group index 0, and the index z3 is carried in the group of fields corresponding to the group index 3. In this case, transmission resources determined by the terminal device are a transmission resource corresponding to the index z0 in the resource group 0, that is, an antenna port P1 and a frequency domain resource unit f1, and a transmission resource corresponding to the index z3 in the resource group 3, that is, an antenna port P3 and a frequency domain resource unit f6.

As shown in (c) in FIG. 28, a bitmap 100000 is carried in the group of fields corresponding to the group index 0, and a bitmap 000100 is carried in the group of fields corresponding to the group index 3. In this case, transmission resources determined by the terminal device are a transmission resource corresponding to the index z0 in the resource group 0, that is, an antenna port P1 and a frequency domain resource unit f1, and a transmission resource corresponding to the index z3 in the resource group 3, that is, an antenna port P3 and a frequency domain resource unit f6.

It should be understood that, with reference to FIG. 27 and FIG. 28, the foregoing shows two examples in which the N pairs of candidate transmission resources are grouped into a plurality of resource groups. When the network device generates the indication information to indicate the M pairs of transmission resources, refer to the foregoing designs in Manner 1 and Manner 2 for understanding. Details are not described herein again. In addition, the value of N, the value of M, a quantity of resource groups, and a resource group division manner are not limited in this application.

In this embodiment of this application, bandwidths of the plurality of candidate frequency domain resource units used to form the N pairs of candidate transmission resources may be a part of a bandwidth part (bandwidth part, BWP) configured by the network device for the terminal device, that is, less than or equal to the BWP.

Optionally, the BWP includes a plurality of unit BWPs.

The unit BWP is a block of consecutive frequency domain resources in the BWP, for example, may be one SC or a plurality of consecutive SCs in the BWP, one RB or a plurality of consecutive RBs in the BWP, one RBG or a plurality of consecutive RBGs in the BWP, one subband or a plurality of consecutive subbands in the BWP, or the like. This is not limited in this application.

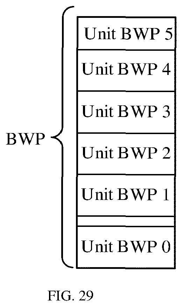

As shown in FIG. 29, one BWP includes six unit BWPs: a unit BWP 0, a unit BWP 1, a unit BWP 2, a unit BWP 3, a unit BWP 4, and a unit BWP 5. It can be learned that resources in each unit BWP are consecutive. In addition, unit BWPs may be consecutive or inconsecutive. For example, the BWP 0 and the BWP 1 are inconsecutive (as shown by a blank block in the figure).

The plurality of candidate frequency domain resource units may belong to a unit BWP, or in other words, the plurality of candidate frequency domain resource units may be a part of or all resources in the unit BWP. The plurality of candidate frequency domain resource units may be consecutive or inconsecutive resources in the unit BWP. This is not limited in this application.

Optionally, a quantity of unit BWPs included in the BWP is determined based on a size of the BWP, a start position of the BWP, and a size of the unit BWP.

For example, the quantity $N_{\text{UnitBWP}}$ of unit BWPs included in the BWP meets as follows:

$$N_{\text{UnitBWP}} = \left\lceil \left( N_{\text{BWP},i}^{size} + \left( N_{\text{BWP},i}^{start} \bmod P \right) \right) / P \right\rceil.$$

$N_{\text{BWP},i}^{size}$ represents a size of an $i^{th}$ BWP configured by the network device for the terminal device; $N_{\text{BWP},i}^{start}$ represents a number of a start RB (that is, an example of the frequency domain resource unit) of the $i^{th}$ BWP configured for the terminal device; P represents a size of a unit BWP, and may be represented by using a quantity of RBs included in the unit BWP, where P is a positive integer; mod represents a modulo operation; and $\lceil \ \rceil$ represents rounding up.

In the $N_{\text{UnitBWP}}$ unit BWPs, a size of the first unit BWP and a size of the last unit BWP are affected by a start position and an end position of the BWP, and may not be in "full configuration", that is, may not definitely be *P*. A size of another unit BWP between the first unit BWP and the last unit BWP is P.

For example, in the $i^{th}$ BWP configured by the network device for the terminal device, the size $\text{UnitBWP}_0^{size}$ of the first unit BWP may meet $\text{UnitBWP}_0^{size} = P - N_{\text{BWP},i}^{start} \bmod P$. When $\left( N_{\text{BWP},i}^{start} + N_{\text{BWP},i}^{size} \right) \bmod P > 0$, the size $\text{UnitBWP}_{last}^{size}$ of the last unit BWP may meet $\text{UnitBWP}_{last}^{size} = \dfrac{N_{\text{BWP},i}^{start} + N_{\text{BWP},i}^{size}}{P}$. When $\left( N_{\text{BWP},i}^{start} + N_{\text{BWP},i}^{size} \right) \bmod P = 0$, the size of the last unit BWP is also P.

Optionally, the BWP includes a plurality of unit BWPs, the plurality of unit BWPs correspond to a plurality of pieces of indication information, and a resource used to transmit the reference signal is determined based on the plurality of pieces of indication information. In other words, the network device may indicate, by using the plurality of pieces of indication information respectively corresponding to the plurality of unit BWPs, the transmission resource used by the terminal device to transmit the reference signal. When each piece of indication information indicates a transmission resource, a frequency domain resource of a used candidate transmission resource is from a candidate frequency domain resource unit of a corresponding unit BWP. Each piece of indication information may indicate, based on the implementations provided above, a frequency domain resource that is in the unit BWP corresponding to the indication information and that is used to transmit the reference signal. In this way, the network device may configure, in different unit BWPs, different frequency domain resources used to transmit the reference signal, so that resource configuration and indication are more flexible.

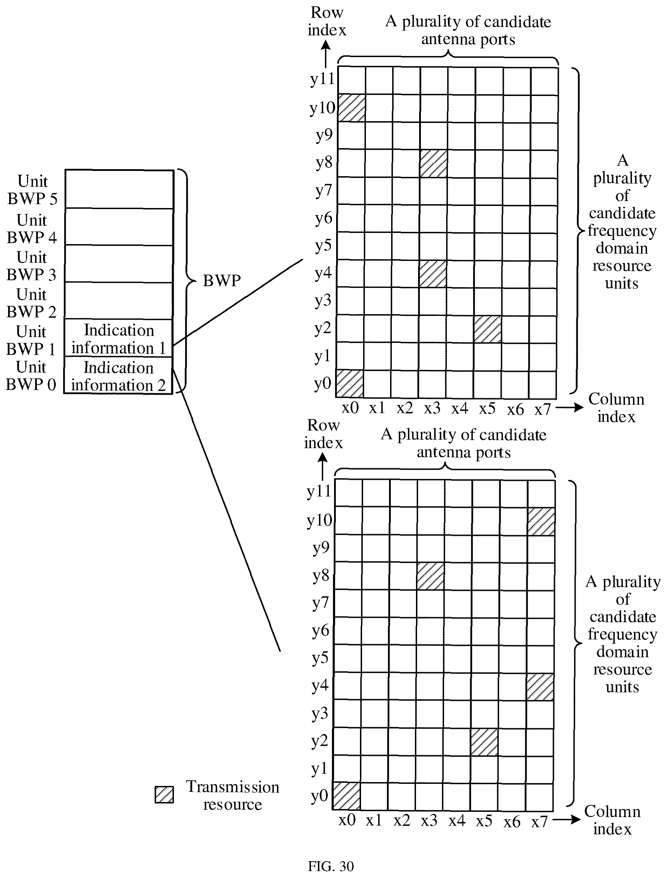

As shown in FIG. 30, a unit BWP 0 and a unit BWP 1 each correspond to one piece of indication information, transmission resources determined by using the two pieces of indication information are different, and relative positions of resource pairs of the transmission resources distributed in the unit BWP 0 and the unit BWP 1 are also different.

Optionally, the BWP includes a plurality of unit BWPs, the plurality of unit BWPs correspond to a same piece of indication information, and the resource used to transmit the reference signal is determined based on the indication information. In other words, although transmission resources used to transmit the reference signal may be distributed in a plurality of unit BWPs, relative positions of the transmission resources in the unit BWPs in which the transmission resources are located are the same, and the network device may indicate the transmission resources by using one piece of indication information. In this way, the network device may indicate, by using one piece of indication information, the transmission resources that are distributed in the entire BWP and that are used to transmit the reference signal, so that indication overheads can be further reduced.

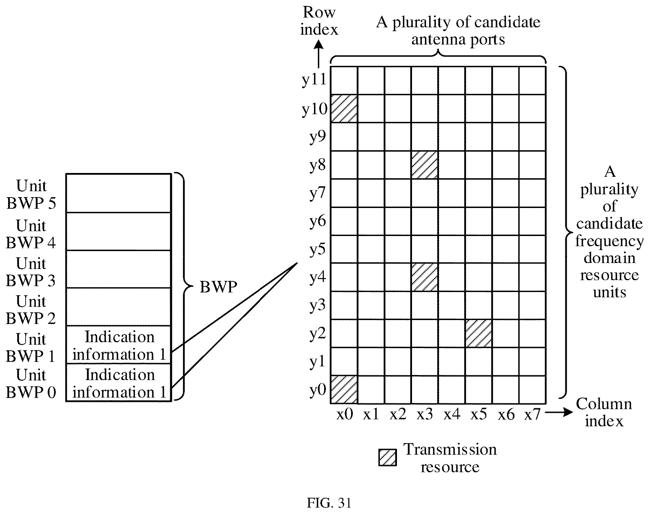

As shown in FIG. 31, a unit BWP 0 and a unit BWP 1 correspond to a same piece of indication information. In other words, relative positions of frequency domain resources of transmission resources distributed in the unit BWP 0 and the unit BWP 1 are the same.

Similar to the frequency domain, the plurality of candidate antenna ports in this embodiment of this application may belong to an antenna port subset, and an antenna port included in the antenna port subset is an antenna port of the terminal device.

In this embodiment of this application, the plurality of candidate antenna ports used to form the N pairs of candidate transmission resources may be a part of a plurality of antenna ports included in the terminal device, that is, less than or equal to a quantity of antenna ports included in the terminal device.

Optionally, the terminal device may include a plurality of antenna port subsets. The plurality of candidate antenna ports may belong to an antenna port subset, or in other words, the plurality of candidate antenna ports may be a part of or all antenna ports in the antenna port subset. The plurality of candidate antenna ports may be antenna ports with consecutive or inconsecutive port numbers in the antenna port subset. This is not limited in this application.

It should be understood that a quantity of antenna port subsets included in the terminal device may be predefined in a protocol or configured by the network device.

Optionally, the terminal device includes a plurality of antenna port subsets, the plurality of antenna port subsets correspond to a plurality of pieces of indication information, and the resource used to transmit the reference signal is determined based on the plurality of pieces of indication information. In other words, the network device may indicate, by using the plurality of pieces of indication information respectively corresponding to the plurality of antenna port subsets, the transmission resource used by the terminal device to transmit the reference signal. When each piece of indication information indicates a transmission resource, an antenna port of a used candidate transmission resource is an antenna port included in a corresponding antenna port subset. Each piece of indication information may indicate, based on the implementations provided above, a frequency domain resource in the antenna port subset corresponding to the indication information. In this way, the network device may configure different transmission resources in different antenna port subsets, so that resource configuration and indication are more flexible.

Optionally, the terminal device includes a plurality of antenna port subsets, the plurality of antenna port subsets correspond to a same piece of indication information, and the resource used to transmit the reference signal is determined based on the indication information. In other words, although transmission resources used to transmit the reference signal may be distributed in a plurality of antenna port subsets, relative positions of the transmission resources in the antenna port subsets in which the transmission resources are located are the same, and the network device may indicate the transmission resources by using one piece of indication information. In this way, the network device may indicate, by using one piece of indication information, the transmission resources distributed on all the antenna ports of the terminal device, so that indication overheads can be further reduced.

To further reduce signaling overheads, when generating the indication information, the network device may perform source compression on the to-be-sent indication information, to obtain compressed indication information. Correspondingly, the indication information received by the terminal device is the compressed indication information, the compressed indication information needs to be decompressed to obtain decompressed indication information, and then the M pairs of transmission resources are determined.

For example, a manner for the source compression includes an entropy encoding manner, a quadtree manner, a hybrid quadtree-binary tree manner, a portable network graphics (portable network graphics, PNG) manner, or the like.

Entropy encoding includes arithmetic encoding, encoding performed by using a Lempel-Ziv-Markov chain algorithm (lempel-ziv-markov chain algorithm, LZMA), Huffman encoding, run-length encoding, and the like.

In the quadtree manner, a two-dimensional bitmap may be expanded layer by layer based on a quadtree. If all positions corresponding to a node at a layer of the quadtree are zero, the node is a leaf node, a value of the node is zero, and downward expansion stops. If a position corresponding to a node at a layer of the quadtree includes a non-zero position, downward expansion continues.

In the hybrid quadtree-binary tree manner, a two-dimensional bitmap may be expanded layer by layer based on a quadtree. If all positions corresponding to a node at a layer of the quadtree are zero, the node is a leaf node, a value of the node is zero, and downward expansion stops. If a position corresponding to a node at a layer of the quadtree includes a non-zero position, downward expansion continues. When the quadtree is expanded to a layer, and further division cannot be performed by using the quadtree, but may be performed by using a binary tree, further expansion is performed in a form of the binary tree based on the quadtree.

It should be understood that, if the indication information includes a one-dimensional array (for example, an array of row indexes, an array of column indexes, an array of quantities of pilots in rows, or an array of quantities of pilots in columns) of a non-bit string, the one-dimensional array may be compressed in the entropy encoding manner.

Optionally, before the network device generates the indication information, the method 300 further includes: The network device determines the transmission resource of the reference signal.

In an implementation, the network device may determine the transmission resource of the reference signal based on a channel matrix in a historical time period. For example, that the network device determines the transmission resource may include the following steps.

Step 1: A network device collects g groups of channel data, that is, $\{H_1, H_2, ... ,H_g\}$. The g groups of channel data may be channel data at g time points in a historical time period.

Each group of channel data is a three-dimensional tensor, and dimensions are a quantity of transmit antenna ports of the terminal device, a quantity of receive antenna ports of the network device, and a quantity of frequency domain resources.

Step 2: The network device vectorizes the g groups of channel data to obtain a channel matrix

$$\mathbf{A} = \left\{ \mathbf{H}_1^{vec}, \mathbf{H}_2^{vec}, ..., \mathbf{H}_g^{vec} \right\} .$$

A dimension of the channel matrix A may be $n \times g$, where n is a product of the quantity $n_{Tx}$ of transmit antenna ports of the terminal device, the quantity $n_{Rx}$ of receive antenna ports of the network device, and the quantity $n_{SC}$ of frequency domain resources (for example, subcarriers), that is, $n = n_{SC} \times n_{Tx} \times n_{Rx}$; and g is a positive integer.

Step 3: The network device obtains a base matrix U through singular value decomposition (singular value decomposition, SVD) based on the channel matrix A.

For example, the base matrix U meets $U = U_1(:,1,r)$. $U_1(:,1,r)$ indicates that the first column to the $r^{th}$ column in $U_1$ are selected; and $U_1$ meets $A = U_1 S_1 V_1^H$.

A dimension of the matrix $U_1$ is $n \times n$, a dimension of the matrix $S_1$ is $n \times g$, a dimension of the matrix $V_1$ is $g \times g$, the matrix $\mathbf{V_1^H}$ is a conjugate transpose of the matrix $\mathbf{V_1,}$ and a dimension of the matrix $\mathbf{U}$ is $n \times r$ (r<g), where r may be a rank of the matrix $\mathbf{A.}$

Step 4: The network device obtains a matrix $\mathbf{P}$ through quadrature rectangle (quadrature rectangle, QR) decomposition with column permutation. The matrix $\mathbf{P}$ may be used to determine the transmission resource of the reference signal.

For example, the matrix $\mathbf{P}$ meets $\mathbf{U^H} \times \mathbf{P^T} = \mathbf{QR}$. The matrix $\mathbf{P^T}$ is a transposed matrix of the matrix $\mathbf{P,}$ a dimension of $\mathbf{P}$ is $r \times n$, a dimension of $\mathbf{Q}$ is $n \times r$, and a dimension of $\mathbf{R}$ is $r \times r$.

It should be understood that the matrix $\mathbf{P}$ is a permutation matrix, and a column index of "1" in each row in the matrix $\mathbf{P}$ indicates a transmission resource of the reference signal. Because the dimension of the matrix $\mathbf{P}$ is $r \times n$, there are r transmission resources of the reference signal, where r is less than n, and r may be far less than n (represented as r<<n), that is, the reference signal is super sparse. In this embodiment, the transmission resource of the reference signal includes resources in a frequency domain dimension and an antenna port dimension, and the reference signal is sparse in both of the two dimensions.

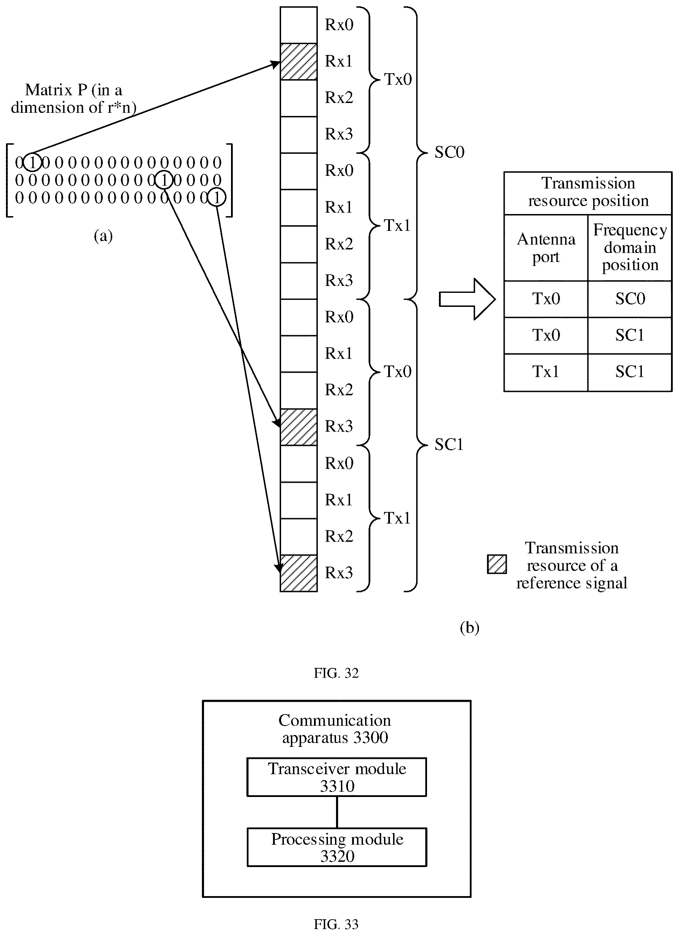

FIG. 32 shows a correspondence between the matrix $\mathbf{P}$ and the transmission resource of the reference signal according to an embodiment of this application. As shown in (a) in FIG. 32, the matrix $\mathbf{P}$ is a $3 \times 16$ two-dimensional matrix. A position whose value is 1 indicates that a candidate transmission resource corresponding to the position is used to transmit the reference signal, and a position whose value is 0 indicates that a candidate transmission resource corresponding to the position is not used to transmit the reference signal, that is, positions of transmission resources of the reference signal that are determined based on the matrix $\mathbf{P}$ are shown in (b) in FIG. 32.

It should be understood that the method provided above for determining the M pairs of transmission resources is merely a possible implementation. Because determining the M pairs of transmission resources is internal behavior of the device, device vendors may implement the determining by using different algorithms. This is not limited in this application.

In this embodiment of this application, a correspondence between candidate antenna ports and candidate frequency domain resource units in the candidate transmission resources may be flexibly designed, to support one antenna port in corresponding to any quantity of frequency domain resource units, and the N pairs of candidate transmission resources may be flexibly adjusted as a quantity of antenna ports increases, thereby avoiding causing huge resource overheads. In addition, a transmission resource used to transmit the reference signal may be determined from the N pairs of candidate transmission resources. The terminal device may determine the transmission resource based on a position, indicated by the network device, of the transmission resource in the N pairs of candidate transmission resources. Therefore, strong support is provided for application of a sparse SRS (or another sparsely distributed reference signal). In addition, because the transmission resource is indicated in the N pairs of candidate transmission resources, it is equivalent to defining a small resource pool in a large resource range, so that indication overheads can be reduced by indicating the transmission resource in the resource pool.

It should be understood that, sequence numbers of the foregoing processes do not mean a particular execution sequence. The execution sequence of the processes should be determined based on functions and internal logic of the processes, and should not be construed as any limitation on implementation processes of embodiments of this application.

The foregoing describes in detail the method according to embodiments of this application with reference to FIG. 1 to FIG. 32. The following describes in detail a communication apparatus according to embodiments of this application with reference to FIG. 33 to FIG. 36.

FIG. 33 shows a communication apparatus 3300 according to an embodiment of this application. As shown in FIG. 33, the communication apparatus 3300 includes a transceiver module 3310 and a processing module 3320.

In a possible implementation, the communication apparatus 3300 is the foregoing terminal device or a chip of the terminal device.

The transceiver module 3310 is configured to receive indication information from a network device, where the indication information is used to determine M pairs of transmission resources, the M pairs of transmission resources are from N pairs of candidate transmission resources, each of the N pairs of candidate transmission resources is obtained by combining one of a plurality of candidate antenna ports and one of a plurality of candidate frequency domain resource units, candidate antenna ports and/or candidate frequency domain resource units included in any two pairs of candidate transmission resources are different, each of antenna ports included in the M pairs of transmission resources corresponds to one or more frequency domain resource units, N is greater than or equal to M, and N and M are positive integers. The processing module 3320 is configured to determine the M pairs of transmission resources based on the indication information and the N pairs of candidate transmission resources. The transceiver module 3310 is further configured to send a reference signal on the M pairs of transmission resources.

In an optional example, a person skilled in the art may understand that the communication apparatus 3300 may be specifically the terminal device in the foregoing embodiments, and the communication apparatus 3300 may be configured to perform procedures and/or steps corresponding to the terminal device in the method 300. To avoid repetition, details are not described herein again.

In another possible implementation, the communication apparatus 3300 is a network device or a chip of the network device.

The processing module 3320 is configured to generate indication information, where the indication information is used to determine M pairs of transmission resources, the M pairs of transmission resources are from N pairs of candidate transmission resources, each of the N pairs of candidate transmission resources is obtained by combining one of a plurality of candidate antenna ports and one of a plurality of candidate frequency domain resource units, candidate antenna ports and/or candidate frequency domain resource units included in any two pairs of candidate transmission resources are different, each of antenna ports included in the M pairs of transmission resources corresponds to one or more frequency domain resource units, N is greater than or equal to M, and N and M are positive integers. The transceiver module 3310 is configured to send the indication information to a terminal device.

In an optional example, a person skilled in the art may understand that the communication apparatus 3300 may be specifically the network device in the foregoing embodiments, and the communication apparatus 3300 may be configured to perform procedures and/or steps corresponding to the network device in the method 300. To avoid repetition, details are not described herein again.

Optionally, bandwidths of the plurality of candidate frequency domain resource units are less than or equal to a BWP configured by the network device for the terminal device.

Optionally, the plurality of candidate frequency domain resource units belong to a unit BWP, and the unit BWP is consecutive resources in the BWP.

Optionally, a quantity of unit BWPs included in the BWP is determined based on a size of the BWP, a start position of the BWP, and a size of the unit BWP.

Optionally, the BWP includes a plurality of unit BWPs, the plurality of unit BWPs correspond to a plurality of pieces of indication information, and a resource used to transmit the reference signal is determined based on the plurality of pieces of indication information; or the BWP includes a plurality of unit BWPs, the plurality of unit BWPs correspond to a same piece of indication information, and the resource used to transmit the reference signal is determined based on the indication information.

Optionally, a quantity of the plurality of candidate antenna ports is less than or equal to a total quantity of antenna ports of the terminal device.

Optionally, the plurality of candidate antenna ports belong to an antenna port subset, and an antenna port included in the antenna port subset is an antenna port of the terminal device; and the terminal device includes a plurality of antenna port subsets, the plurality of antenna port subsets correspond to a plurality of pieces of indication information, and the resource used to transmit the reference signal is determined based on the plurality of pieces of indication information; or the terminal device includes a plurality of antenna port subsets, the plurality of antenna port subsets correspond to a same piece of indication information, and the resource used to transmit the reference signal is determined based on the indication information.

Optionally, the plurality of candidate frequency domain resource units are consecutive in frequency domain; or the plurality of candidate frequency domain resource units are inconsecutive in frequency domain, and the plurality of candidate frequency domain resource units are evenly or unevenly distributed in frequency domain.

Optionally, the indication information indicates one or more of the following: a value of M, frequency domain resource units included in the M pairs of transmission resources, or a correspondence between frequency domain resource units and antenna ports in the M pairs of transmission resources.

Optionally, the N pairs of candidate transmission resources are represented by using a two-dimensional matrix, and the two-dimensional matrix includes L rows and K columns. The L rows represent L candidate frequency domain resource units, and the K columns represent K candidate antenna ports; or the L rows represent L candidate antenna ports, and the K columns represent K candidate frequency domain resource units. K and L are positive integers, and $K \times L=N$. The processing module 3320 is specifically configured to determine the M pairs of transmission resources based on the indication information and the two-dimensional matrix.

Optionally, the indication information indicates row indexes and column indexes respectively corresponding to the M pairs of transmission resources in the two-dimensional matrix, the row indexes respectively corresponding to the M pairs of transmission resources in the two-dimensional matrix are determined based on a mapping relationship between the L rows in the two-dimensional matrix and L row indexes, and the column indexes respectively corresponding to the M pairs of transmission resources in the two-dimensional matrix are determined based on a mapping relationship between the K columns in the two-dimensional matrix and K column indexes.

Optionally, the indication information is carried in higher layer signaling, and the indication information indicates the following content: a row index and a column index that correspond to each of the M pairs of transmission resources in the two-dimensional matrix.

Optionally, the indication information includes first indication information and second indication information, and the second indication information is carried in physical layer signaling or medium access control MAC layer signaling; the second indication information indicates the following content: at least one of a quantity L' of row indexes or a quantity K' of column indexes corresponding to the M pairs of transmission resources in the two-dimensional matrix, and L' row indexes and K' column indexes corresponding to the M pairs of transmission resources in the two-dimensional matrix; the first indication information indicates the following content: at least one of indication overheads of a value of L' or indication overheads of a value of K', indication overheads of each row index, and indication overheads of each column index; and L' is a positive integer less than or equal to L, and K' is a positive integer less than or equal to K.

Optionally, the indication information includes first indication information and second indication information, and the second indication information is carried in physical layer signaling or MAC layer signaling; the second indication information indicates the following content: L' row indexes and K' column indexes corresponding to the M pairs of transmission resources in the two-dimensional matrix; the first indication information indicates the following content: a value of at least one of L' or K', indication overheads of each row index, and indication overheads of each column index; and L' is a positive integer less than or equal to L, and K' is a positive integer less than or equal to K.

Optionally, the first indication information further indicates a mapping manner, the mapping manner includes one-to-one mapping or one-to-many mapping, the one-to-one mapping includes mapping between one antenna port and one frequency domain resource unit, and the one-to-many mapping includes mapping between one antenna port and a plurality of frequency domain resource units and/or mapping between one frequency domain resource unit and a plurality of antenna ports.

Optionally, the mapping manner is the one-to-many mapping, L' is less than M and/or K' is less than M, the second indication information further indicates a mapping rule, the mapping rule indicates a quantity of frequency domain resource units corresponding to each antenna port or a quantity of antenna ports corresponding to each frequency domain resource unit, and the first indication information further indicates indication overheads of the mapping rule.

Optionally, the indication information indicates a column index of a target element included in each row of the two-dimensional matrix or a row index of a target element included in each column of the two-dimensional matrix, a transmission resource represented by each target element is included in the M pairs of transmission resources, a row index of each target element is determined based on a mapping relationship between the L rows in the two-dimensional matrix and L row indexes, and a column index of each target element is determined based on a mapping relationship between K column indexes in the two-dimensional matrix and K column indexes.

Optionally, the indication information is carried in higher layer signaling, and the indication information indicates the following content: a quantity of target elements included in each row of the two-dimensional matrix, and the column index of the target element included in each row; or a quantity of target elements included in each column of the two-dimensional matrix, and the row index of the target element included in each column.

Optionally, the indication information includes first indication information and second indication information, and the second indication information is carried in physical layer signaling or MAC layer signaling. When the indication information indicates the column index of the target element included in each row in the two-dimensional matrix, the second indication information indicates the following content: a quantity of target elements included in each row of the two-dimensional matrix, the column index of the target element included in each row, and the value of M; and the first indication information indicates the following content: indication overheads of the quantity of target elements included in each row, indication overheads of each column index, indication overheads of the value of M, and a value of L. Alternatively, when the indication information indicates the row index of the target element included in each column of the two-dimensional matrix, the second indication information indicates the following content: a quantity of target elements included in each column of the two-dimensional matrix, the row index of the target element included in each column, and the value of M; and the first indication information indicates the following content: indication overheads of the quantity of target elements included in each column, indication overheads of each row index, indication overheads of the value of M, and a value of K.

Optionally, the indication information includes first indication information and second indication information, and the second indication information is carried in physical layer signaling or MAC layer signaling. When the indication information indicates the column index of the target element included in each row of the two-dimensional matrix, the second indication information indicates the following content: a quantity of target elements included in each row of the two-dimensional matrix and the column index of the target element included in each row; and the first indication information indicates the following content: indication overheads of the quantity of target elements included in each row, indication overheads of each column index, the value of M, and a value of L. Alternatively, when the indication information indicates the row index of the target element included in each column of the two-dimensional matrix, the second indication information indicates the following content: a quantity of target elements included in each column of the two-dimensional matrix and the row index of the target element included in each column; and the first indication information indicates the following content: indication overheads of the quantity of target elements included in each column, indication overheads of each row index, the value of M, and a value of K.

Optionally, the indication information indicates a bitmap, and the bitmap includes a plurality of bits in one-to-one correspondence with a plurality of elements in the two-dimensional matrix, and a value of each bit indicates whether a candidate transmission resource represented by a corresponding element belongs to the M pairs of transmission resources.

Optionally, the indication information is carried in higher layer signaling, and the indication information indicates the following content: the quantity of rows included in the two-dimensional matrix, the quantity of columns included in the two-dimensional matrix, and the bitmap; and the bitmap includes L groups of bits corresponding to the L rows of the two-dimensional matrix, each group of bits includes K bits, the K bits in each group of bits are in one-to-one correspondence with K elements in a corresponding row, and a value of each bit indicates whether a candidate transmission resource represented by a corresponding element is included in the M pairs of transmission resources; or the bitmap includes K groups of bits corresponding to the K columns of the two-dimensional matrix, each group of bits includes L bits, the L bits in each group of bits are in one-to-one correspondence with L elements in a corresponding column, and a value of each bit indicates whether a candidate transmission resource represented by a corresponding element is included in the M pairs of transmission resources.

Optionally, the indication information is carried in higher layer signaling, M target elements corresponding to the M pairs of transmission resources in the two-dimensional matrix are distributed in L' rows, and L' is a positive integer less than or equal to L; the indication information indicates the following content: L' row indexes corresponding to the L' rows, a value of K, and the bitmap; and the bitmap includes L' groups of bits corresponding to the L' rows, each group of bits includes K bits, the K bits in each group of bits are in one-to-one correspondence with K elements in a corresponding row, and a value of each bit indicates whether a candidate transmission resource represented by a corresponding element is included in the M pairs of transmission resources. Alternatively, the M target elements corresponding to the M pairs of transmission resources in the two-dimensional matrix are distributed in K' columns, and K' is a positive integer less than or equal to K; the indication information indicates the following content: K' column indexes corresponding to the K' columns, a value of L, and the bitmap; the bitmap includes K' groups of bits corresponding to the K' columns, each group of bits includes L bits, the L bits in each group of bits are in one-to-one correspondence with L elements in a corresponding column, and a value of each bit indicates whether a candidate transmission resource represented by a corresponding element is included in the M pairs of transmission resources.

Optionally, the indication information includes first indication information and second indication information, and the second indication information is carried in physical layer signaling or MAC layer signaling. The second indication information indicates the bitmap; the bitmap includes L groups of bits corresponding to the L rows in the two-dimensional matrix, each group of bits includes K bits, the K bits in each group of bits are in one-to-one correspondence with K elements in a corresponding row, and a value of each bit indicates whether a candidate transmission resource represented by a corresponding element is included in the M pairs of transmission resources; or the bitmap includes K groups of bits corresponding to the K columns in the two-dimensional matrix, each group of bits includes L bits, the L bits in each group of bits are in one-to-one correspondence with L elements in a corresponding column, and a value of each bit indicates whether a candidate transmission resource represented by a corresponding element is included in the M pairs of transmission resources; and the first indication information indicates the following content: a value of K and a value of L.

Optionally, the indication information includes first indication information and second indication information, and the second indication information is carried in physical layer signaling or MAC layer signaling. M target elements corresponding to the M pairs of transmission resources in the two-dimensional matrix are distributed in L' rows in the L rows, and L' is an integer less than or equal to L; the second indication information indicates the following content: L' row indexes corresponding to the L' rows and the bitmap, the bitmap includes L' groups of bits corresponding to the L' rows, each group of bits includes K bits, the K bits in each group of bits are in one-to-one correspondence with K elements in a corresponding row, and a value of each bit indicates whether a candidate transmission resource represented by a corresponding element is included in the M pairs of transmission resources; and the first indication information indicates the following content: a value of K, indication overheads of each row index, and a value of L'. Alternatively, the M target elements corresponding to the M pairs of transmission resources in the two-dimensional matrix are distributed in K' columns in the K columns, and K' is an integer less than or equal to K; the second indication information indicates the following content: K' column indexes corresponding to the K' columns and the bitmap, the bitmap includes K' groups of bits corresponding to the K' columns, each group of bits includes L bits, the L bits in each group of bits are in one-to-one correspondence with L elements in a corresponding column, and a value of each bit indicates whether a candidate transmission resource represented by a corresponding element is included in the M pairs of transmission resources; and the first indication information indicates the following content: a value of L, indication overheads of each column index, and a value of K'.

Optionally, the indication information includes first indication information and second indication information, and the second indication information is carried in physical layer signaling or MAC layer signaling. M target elements corresponding to the M pairs of transmission resources in the two-dimensional matrix are distributed in L' rows in the L rows, and L' is an integer less than or equal to L; the second indication information indicates the following content: L' row indexes corresponding to the L' rows, the bitmap, and a value of L', the bitmap includes L' groups of bits corresponding to the L' rows, each group of bits includes K bits, the K bits in each group of bits are in one-to-one correspondence with K elements in a corresponding row, and a value of each bit indicates whether a candidate transmission resource represented by a corresponding element is included in the M pairs of transmission resources; and the first indication information indicates the following content: a value of K, indication overheads of each row index, and indication overheads of the value of L'. Alternatively, the M target elements corresponding to the M pairs of transmission resources in the two-dimensional matrix are distributed in K' columns in the K columns, and K' is an integer less than or equal to K; the second indication information indicates the following content: K' column indexes corresponding to the K' columns, the bitmap, and a value of K', the bitmap includes K' groups of bits corresponding to the K' columns, each group of bits includes L bits, the L bits in each group of bits are in one-to-one correspondence with L elements in a corresponding column, and a value of each bit indicates whether a candidate transmission resource represented by a corresponding element is included in the M pairs of transmission resources; and the first indication information indicates the following content: a value of L, indication overheads of each column index, and indication overheads of the value of K'.

Optionally, the N pairs of candidate transmission resources are represented by using a one-dimensional array, the one-dimensional array includes N elements, each element represents one pair of candidate transmission resources, the one-dimensional array is obtained by arranging the N pairs of candidate transmission resources according to a combination rule, and the combination rule indicates a dimension in which traversal is preferentially performed by a transmission antenna port in an antenna port dimension and a frequency domain resource unit dimension when the N pairs of candidate transmission resources are obtained by combining the plurality of candidate antenna ports and the plurality of candidate frequency domain resource units. The processing module 3320 is specifically configured to determine the M pairs of transmission resources based on the indication information and the one-dimensional array.

Optionally, the indication information indicates M indexes corresponding to the M pairs of transmission resources in the one-dimensional array, and the M indexes are determined based on a mapping relationship between the N elements in the one-dimensional array and N indexes.

Optionally, the indication information is carried in higher layer signaling, and the indication information indicates the M indexes.

Optionally, the indication information includes first indication information and second indication information, and the second indication information is carried in physical layer signaling or MAC layer signaling; the second indication information indicates the following content: the M indexes and the value of M; and the first indication information indicates the following content: indication overheads of each index and indication overheads of the value of M.

Optionally, the indication information includes first indication information and second indication information, and the second indication information is carried in physical layer signaling or MAC layer signaling; the second indication information indicates the following content: the M indexes; and the first indication information indicates the following content: indication overheads of each index and the value of M.

Optionally, the indication information indicates a bitmap, the bitmap includes N bits, the N bits are in one-to-one correspondence with the N elements in the one-dimensional array, and a value of each bit indicates whether a candidate transmission resource represented by a corresponding element belongs to the M pairs of transmission resources.

Optionally, the indication information is carried in higher layer signaling, and the indication information indicates the bitmap.

Optionally, the indication information includes first indication information and second indication information, and the second indication information is carried in physical layer signaling or MAC layer signaling; the second indication information indicates the bitmap; and the first indication information indicates a quantity of the plurality of candidate antenna ports and a quantity of the plurality of candidate frequency domain resource units.

Optionally, the indication information includes first indication information and second indication information, and the second indication information is carried in physical layer signaling or MAC layer signaling; the second indication information indicates the following content: a quantity of the plurality of candidate antenna ports, a quantity of the plurality of candidate frequency domain resource units, and the bitmap; and the first indication information includes indication overheads of the quantity of the plurality of candidate antenna ports and indication overheads of the quantity of the plurality of candidate frequency domain resource units.

Optionally, the indication information further indicates one or more of the following: the combination rule and/or a length of the bitmap.

Optionally, the indication of the bitmap by the indication information includes the bitmap or a q-nary value corresponding to values represented by a plurality of bits in the bitmap.

Optionally, the indication information further indicates the number system of the q-nary value.

Optionally, the M pairs of transmission resources are included in at least one of a plurality of resource groups, and the plurality of resource groups are obtained by dividing the N pairs of candidate transmission resources according to a division rule. The indication information is carried in at least one group of fields, the at least one group of fields corresponds to the at least one resource group, and information carried in each group of fields is used to determine a transmission resource included in a corresponding resource group.

Optionally, the indication information further indicates a group index of the resource group corresponding to each group of fields.

It should be understood that the communication apparatus 3300 herein is embodied in a form of functional modules. The term "module" herein may be an application specific integrated circuit (application specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the communication apparatus 3300 may be specifically the network device or the terminal device in the foregoing embodiments, or functions of the network device or the terminal device in the foregoing embodiments may be integrated into the communication apparatus 3300, and the communication apparatus 3300 may be configured to perform procedures and/or steps corresponding to the network device or the terminal device in the foregoing method embodiments. To avoid repetition, details are not described herein again.

The communication apparatus 3300 has a function of implementing corresponding steps performed by the terminal device or the network device in the foregoing method. The function may be implemented by hardware, or may be implemented by hardware executing corresponding software. The hardware or the software includes one or more modules corresponding to the function.

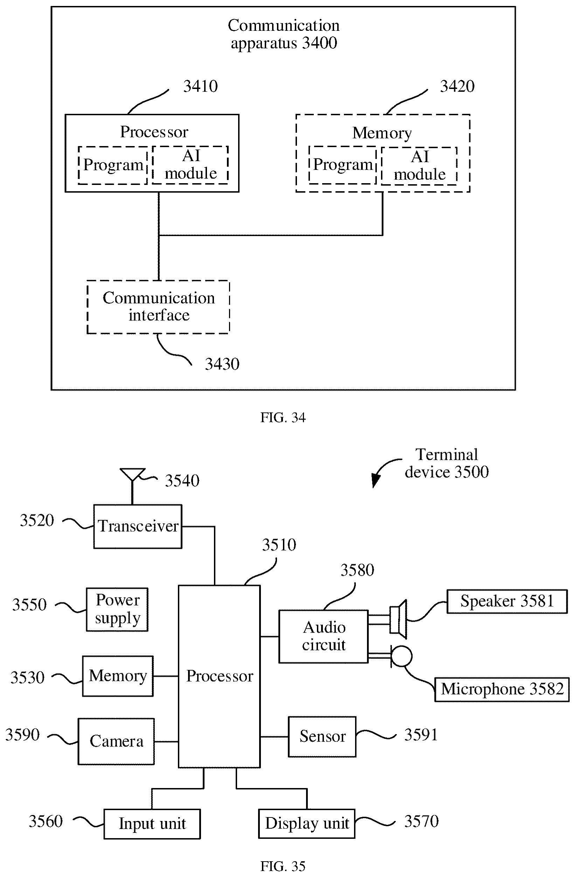

FIG. 34 is another block diagram of a communication apparatus according to an embodiment of this application. As shown in FIG. 34, the communication apparatus 3400 includes one or more processors 3410. The processor 3410 may be a general-purpose processor, a dedicated processor, or the like, for example, may be a baseband processor or a central processing unit. The baseband processor may be configured to process a communication protocol and communication data. The central processing unit may be configured to control the communication apparatus (for example, a terminal device, a network device, or a chip), execute a software program, and process data of the software program.

Optionally, in a design, the processor 3410 may include a program (which may also be referred to as code or instructions). The program may be run on the processor 3410, to enable the communication apparatus 3400 to perform the method performed by the terminal device or the network device in the foregoing method embodiments. In another possible design, the communication apparatus 3400 includes a circuit (not shown in FIG. 34). The circuit is configured to implement a function of the terminal device or the network device in the foregoing method embodiments.

For example, the processor 3410 may be configured to execute a computer program or instructions in a memory, to implement steps performed by the terminal device or the network device in the embodiment shown in FIG. 3.

Optionally, the communication apparatus 3400 may include one or more memories 3420. The memory 3420 stores a program (which sometimes may also be referred to as code or instructions), and the program may be run on the processor 3410, to enable the communication apparatus 3400 to perform the method performed by the terminal device or the network device in the foregoing embodiments.

Optionally, the processor 3410 and/or the memory 3420 may include an artificial intelligence (artificial intelligence, AI) module, and the AI module is configured to implement an AI-related function. The AI module may be implemented by using software, hardware, or a combination of software and hardware. For example, the AI module may include a radio intelligent controller (radio intelligent controller, RIC) module. For example, the AI module may be a near-real-time RIC or a non-real-time RIC.

Optionally, the processor 3410 and/or the memory 3420 may further store data. The processor and the memory may be separately disposed, or may be integrated together.

Optionally, the communication apparatus 3400 may further include a communication interface 3430. The processor 3410 sometimes may also be referred to as a processing unit, and controls the communication apparatus (for example, a RAN node or a terminal). The communication interface 3430 sometimes may also be referred to as a transceiver unit, a transceiver machine, a transceiver circuit, a transceiver, or the like, and is configured to implement a transceiver function of the communication apparatus.

Optionally, the communication apparatus 3400 further includes a communication interface 3430. The processor 3410 and the communication interface 3430 are coupled to each other. It may be understood that the communication interface 3430 may be a transceiver or an input/output interface.

When the communication apparatus 3400 is configured to implement the method shown in FIG. 3, the processor 3410 is configured to perform a function of the processing module, and the communication interface 3430 is configured to perform a function of the transceiver module. Whether the communication interface 3430 is configured to perform sending or receiving may be specifically determined depending on whether the communication interface 3430 is configured to perform a sending action or a receiving action in a solution performed by the communication apparatus 3400.

When the communication apparatus 3400 is a chip used in a terminal device, the chip implements a function of the terminal device in the foregoing method embodiments. The chip of the terminal device receives a signal from another module (for example, a radio frequency module or an antenna) in the terminal device, and the signal may be sent by a network device to the terminal device. Alternatively, the chip of the terminal device sends a signal to another module (for example, a radio frequency module or an antenna) in the terminal device, and the signal may be sent by the terminal device to a network device.

When the communication apparatus 3400 is a chip used in a network device, the chip implements a function of the network device in the foregoing method embodiments. The chip of the network device receives a signal from another module (for example, a radio frequency module or an antenna) in the network device, and the signal may be sent by a terminal device to the network device. Alternatively, the chip of the network device sends a signal to another module (for example, a radio frequency module or an antenna) in the network device, and the signal may be sent by the network device to a terminal device.

It may be understood that when the communication apparatus 3400 is a terminal device or a network device, the communication interface 3430 may be a transceiver, and may specifically include a transmitter and a receiver. The transmitter is configured to send a signal, and the receiver is configured to receive a signal. When the communication apparatus 3400 is a chip used in the terminal device or the network device, the communication interface 3430 may be an input/output circuit. The input circuit may be configured to perform receiving, and the output interface may be configured to perform sending.

FIG. 35 is a diagram of a structure of a terminal device 3500 according to an embodiment of this application. The terminal device 3500 may be used in the system shown in FIG. 1, to perform a function of the terminal device in the foregoing method embodiments. As shown in FIG. 35, the terminal device 3500 includes a processor 3510 and a transceiver 3520. Optionally, the terminal device 3500 further includes a memory 3530. The processor 3510, the transceiver 3520, and the memory 3530 may communicate with each other via an internal connection path to transfer a control signal and/or a data signal. The memory 3530 is configured to store a computer program. The processor 3510 is configured to invoke the computer program from the memory 3530 and run the computer program, to control the transceiver 3520 to receive and send signals. Optionally, the terminal device 3500 may further include an antenna 3540, configured to send, by using a radio signal, uplink data or uplink control signaling output by the transceiver 3520.

The processor 3510 and the memory 3530 may be integrated into one processing apparatus. The processor 3510 is configured to execute program code stored in the memory 3530 to implement the foregoing functions. During specific implementation, the memory 3530 may alternatively be integrated into the processor 3510, or may be independent of the processor 3510. The processor 3510 may correspond to the processing module in FIG. 33.

The transceiver 3520 may correspond to the transceiver module in FIG. 33, and may also be referred to as a transceiver unit. The transceiver 3520 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device 3500 shown in FIG. 35 can implement processes related to the terminal device in the method embodiment shown in FIG. 3. Operations and/or functions of the modules in the terminal device 3500 are respectively used to implement corresponding procedures in the foregoing method embodiment. For details, refer to the descriptions in the foregoing method embodiment. To avoid repetition, detailed descriptions are properly omitted herein.

The processor 3510 may be configured to perform an action that is implemented inside the terminal device and that is described in the foregoing method embodiments, and the transceiver 3520 may be configured to perform an action, described in the foregoing method embodiments, of sending performed by the terminal device to the network device or receiving performed by the terminal device from the network device. For details, refer to the descriptions in the foregoing method embodiments. Details are not described herein again.

Optionally, the terminal device 3500 may further include a power supply 3550, configured to supply power to components or circuits in the terminal device.

In addition, to improve functions of the terminal device, the terminal device 3500 may further include one or more of an input unit 3560, a display unit 3570, an audio circuit 3580, a camera 3590, a sensor 3591, and the like. The audio circuit 3580 may further include a speaker 3571, a microphone 3572, and the like.

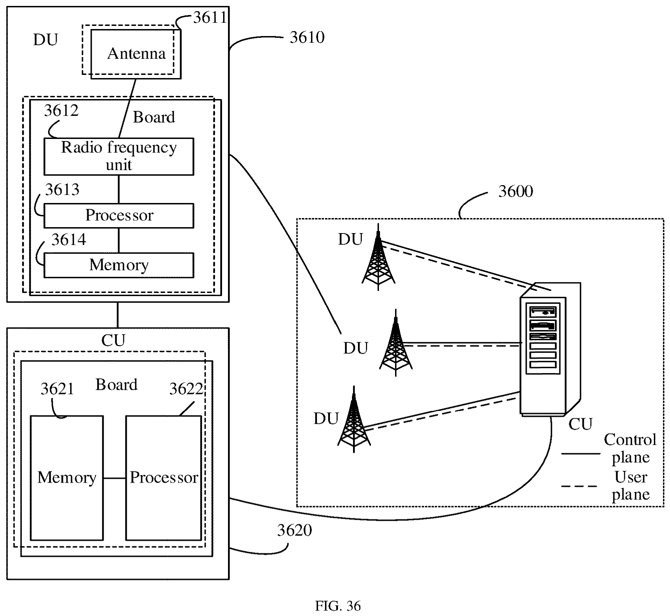

FIG. 36 is a diagram of a structure of a network device 3600 according to an embodiment of this application, for example, may be a diagram of a structure of a base station. The base station 3600 may be used in the system shown in FIG. 1, to perform a function of the network device in the foregoing method embodiments. As shown in FIG. 36, the base station 3600 may include one or more DUs 3610 and one or more CUs 3620. The CU 3620 may communicate with an NG core (next generation core, NC). The DU 3610 may include at least one antenna 3611, at least one radio frequency unit 3612, at least one processor 3613, and at least one memory 3614. The DU 3610 part is mainly configured to: receive and send radio frequency signals, perform conversion between a radio frequency signal and a baseband signal, and perform partial baseband processing. The CU 3620 may include at least one memory 3621 and at least one processor 3622. The CU 3620 and the DU 3610 may communicate with each other through an interface. A control plane (control plane, CP) interface may be Fs-C, for example, F1-C, and a user plane (user plane, UP) interface may be Fs-U, for example, F1-U.

The CU 3620 part is mainly configured to perform baseband processing, control the base station, and the like. The DU 3610 and the CU 3620 may be physically disposed together, or may be physically separated, that is, a distributed base station. The CU 3620 is a control center of the base station, may also be referred to as a processing unit, and is mainly configured to complete a baseband processing function. For example, the CU 3620 may be configured to control the base station to perform an operation procedure related to the access network device in the foregoing method embodiments.

Specifically, baseband processing of the CU and the DU may be divided based on protocol layers of a radio network. For example, functions of a PDCP layer and a protocol layer above the PDCP layer are set on the CU, and functions of protocol layers below PDCP, such as an RLC layer and a MAC layer, are set on the DU. For another example, the CU implements functions of an RRC layer and the PDCP layer, and the DU implements functions of the RLC layer, the MAC layer, and a PHY layer.

In addition, optionally, the base station 3600 may include one or more radio units (RUs), one or more DUs, and one or more CUs. The DU may include at least one processor 3613 and at least one memory 3614, the RU may include at least one antenna 3611 and at least one radio frequency unit 3612, and the CU may include at least one processor 3622 and at least one memory 3621.

In an example, the CU 3620 may include one or more boards, and a plurality of boards may jointly support a radio access network (for example, a 5G network) of a single access standard, or may respectively support radio access networks (for example, an LTE network, a 5G network, or another network) of different access standards. The memory 3621 and the processor 3622 may serve one or more boards. In other words, each board may be provided with a memory and a processor, or a plurality of boards may share a same memory and a same processor. In addition, each board may be further provided with a necessary circuit. The DU 3610 may include one or more boards, and a plurality of boards may jointly support a radio access network (for example, a 5G network) of a single access standard, or may respectively support radio access networks (for example, an LTE network, a 5G network, or another network) of different access standards. The memory 3614 and the processor 3613 may serve one or more boards. In other words, each board may be provided with a memory and a processor, or a plurality of boards may share a same memory and a same processor. In addition, each board may be further provided with a necessary circuit.

It should be understood that the base station 3600 shown in FIG. 36 can implement processes related to the network device in the method embodiment shown in FIG. 3. Operations and/or functions of the modules in the base station 3600 are respectively used to implement corresponding procedures in the foregoing method embodiment. For details, refer to the descriptions in the foregoing method embodiment. To avoid repetition, detailed descriptions are properly omitted herein.

It should be understood that the base station 3600 shown in FIG. 36 is merely a possible architecture of the access network device, and should not constitute any limitation on this application. The method provided in this application is applicable to an access network device of another architecture, for example, an access network device including a CU, a DU, and an AAU. A specific architecture of the access network device is not limited in this application.

It should be understood that FIG. 36 is merely an example instead of a limitation. The foregoing network device including the transceiver unit and the processing unit may not depend on the structure shown in FIG. 36. For example, the network device may include an AAU, and may further include a CU and/or a DU, or the network device may include a BBU, and may further include an adaptive radio unit (adaptive radio unit, ARU). This is not limited in this application.

The CU and/or the DU may be configured to perform an action that is implemented inside the network device and that is described in the foregoing method embodiments, and the AAU may be configured to perform an action, described in the foregoing method embodiments, of sending performed by the network device to the terminal device or receiving performed by the network device from the terminal device. For details, refer to the descriptions in the foregoing method embodiments. Details are not described herein again.

This application further provides a processing apparatus, including a processor and a memory. The memory may be configured to store program code, and the processor may be configured to invoke the program code, to perform the method performed by the terminal device or the method performed by the network device in the foregoing embodiments.

It should be understood that the processing apparatus may be a chip or a chip system. For example, the processing apparatus may be a field programmable gate array (field programmable gate array, FPGA), an application specific integrated circuit (application specific integrated circuit, ASIC), a system on chip (system on chip, SoC), a central processing unit (central process unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, steps in the foregoing method can be completed by using a hardware integrated logical circuit in the processor or instructions in a form of software. The steps of the method disclosed with reference to embodiments of this application may be directly completed by a hardware processor, or may be completed by using a combination of hardware in the processor and a software module. The software module may be located in a storage medium mature in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

It should be noted that, the processor in this embodiment of this application may be an integrated circuit chip, and has a signal processing capability. In an implementation process, steps in the foregoing method embodiments can be completed by using a hardware integrated logical circuit in the processor or instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform the methods, the steps, and logical block diagrams disclosed in embodiments of this application. The general-purpose processor may be a microprocessor, or the processor may be any conventional processor or the like. The steps of the method disclosed with reference to embodiments of this application may be directly completed by a hardware decoding processor, or may be completed by using a combination of hardware in the decoding processor and a software module. The software module may be located in a storage medium mature in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that the memory in this embodiment of this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memories of systems and methods described in this specification are intended to include but are not limited to these and any other memories of proper types.

This application further provides a computer program product. The computer program product includes a computer program (which may also be referred to as code or instructions). When the computer program is run, the method performed by the terminal device or the method performed by the network device in the embodiment shown in FIG. 3 is performed.

This application further provides a computer-readable storage medium. The computer-readable storage medium stores a computer program (which may also be referred to as code or instructions). When the computer program is run, the method performed by the terminal device or the method performed by the network device in the embodiment shown in FIG. 3 is performed.

This application further provides a communication system. The communication system includes the foregoing terminal device and network device.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part of or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal device, wherein the method comprises:

receiving indication information from a network device, wherein the indication information is used to determine M pairs of transmission resources, the M pairs of transmission resources are from N pairs of candidate transmission resources, each of the N pairs of candidate transmission resources is obtained by combining one of a plurality of candidate antenna ports and one of a plurality of candidate frequency domain resource units, candidate antenna ports and/or candidate frequency domain resource units comprised in any two pairs of candidate transmission resources are different, each of antenna ports comprised in the M pairs of transmission resources corresponds to one or more frequency domain resource units, N is greater than or equal to M, and N and M are positive integers; determining the M pairs of transmission resources based on the indication information and the N pairs of candidate transmission resources; and

sending a reference signal on the M pairs of transmission resources.

2. A communication method, applied to a network device, wherein the method comprises:

generating indication information, wherein the indication information is used to determine M pairs of transmission resources, the M pairs of transmission resources are from N pairs of candidate transmission resources, each of the N pairs of candidate transmission resources is obtained by combining one of a plurality of candidate antenna ports and one of a plurality of candidate frequency domain resource units, candidate antenna ports and/or candidate frequency domain resource units comprised in any two pairs of candidate transmission resources are different, each of antenna ports comprised in the M pairs of transmission resources corresponds to one or more frequency domain resource units, N is greater than or equal to M, and N and M are positive integers; and

sending the indication information to a terminal device.

3. The method according to claim 1 or 2, wherein bandwidths of the plurality of candidate frequency domain resource units are less than or equal to a bandwidth part BWP configured by the network device for the terminal device.

4. The method according to claim 3, wherein the plurality of candidate frequency domain resource units belong to a unit BWP, and the unit BWP is consecutive resources in the BWP.

5. The method according to claim 4, wherein a quantity of unit BWPs comprised in the BWP is determined based on a size of the BWP, a start position of the BWP, and a size of the unit BWP.

6. The method according to claim 4 or 5, wherein the BWP comprises a plurality of unit BWPs, the plurality of unit BWPs correspond to a plurality of pieces of indication information, and a resource used to transmit the reference signal is determined based on the plurality of pieces of indication information; or the BWP comprises a plurality of unit BWPs, the plurality of unit BWPs correspond to a same piece of indication information, and the resource used to transmit the reference signal is determined based on the indication information.

7. The method according to any one of claims 1 to 6, wherein a quantity of the plurality of candidate antenna ports is less than or equal to a total quantity of antenna ports of the terminal device.

8. The method according to claim 7, wherein the plurality of candidate antenna ports belong to an antenna port subset, and an antenna port comprised in the antenna port subset is an antenna port of the terminal device; and
the terminal device comprises a plurality of antenna port subsets, the plurality of antenna port subsets correspond to a plurality of pieces of indication information, and the resource used to transmit the reference signal is determined based on the plurality of pieces of indication information; or the terminal device comprises a plurality of antenna port subsets, the plurality of antenna port subsets correspond to a same piece of indication information, and the resource used to transmit the reference signal is determined based on the indication information.

9. The method according to any one of claims 1 to 8, wherein the plurality of candidate frequency domain resource units are consecutive in frequency domain; or
the plurality of candidate frequency domain resource units are inconsecutive in frequency domain, and the plurality of candidate frequency domain resource units are evenly or unevenly distributed in frequency domain.

10. The method according to any one of claims 1 to 9, wherein the indication information indicates one or more of the following: a value of M, frequency domain resource units comprised in the M pairs of transmission resources, or a correspondence between frequency domain resource units and antenna ports in the M pairs of transmission resources.

11. The method according to claim 10, wherein the N pairs of candidate transmission resources are represented by using a two-dimensional matrix, and the two-dimensional matrix comprises L rows and K columns; and the L rows represent L candidate frequency domain resource units, and the K columns represent K candidate antenna ports; or the L rows represent L candidate antenna ports, and the K columns represent K candidate frequency domain resource units, wherein K and L are positive integers, and $K \times L = N$; and
determining the M pairs of transmission resources based on the indication information and the N pairs of candidate transmission resources comprises:

determining the M pairs of transmission resources based on the indication information and the two-dimensional matrix.

12. The method according to claim 11, wherein the indication information indicates row indexes and column indexes respectively corresponding to the M pairs of transmission resources in the two-dimensional matrix, the row indexes respectively corresponding to the M pairs of transmission resources in the two-dimensional matrix are determined based on a mapping relationship between the L rows in the two-dimensional matrix and L row indexes, and the column indexes respectively corresponding to the M pairs of transmission resources in the two-dimensional matrix are determined based on a mapping relationship between the K columns in the two-dimensional matrix and K column indexes.

13. The method according to claim 12, wherein the indication information is carried in higher layer signaling, and the indication information indicates the following content: a row index and a column index that correspond to each of the M pairs of transmission resources in the two-dimensional matrix.

14. The method according to claim 12, wherein the indication information comprises first indication information and second indication information, and the second indication information is carried in physical layer signaling or medium access control MAC layer signaling; the second indication information indicates the following content: at least one of a quantity L' of row indexes or a quantity K' of column indexes corresponding to the M pairs of transmission resources in the two-dimensional matrix, and L' row indexes and K' column indexes corresponding to the M pairs of transmission resources in the two-dimensional matrix; the first indication information indicates the following content: at least one of indication overheads of a value of L' or indication overheads of a value of K', indication overheads of each row index, and indication overheads of each column index; and L' is a positive integer less than or equal to **L,** and K' is a positive integer less than or equal to K.

15. The method according to claim 12, wherein the indication information comprises first indication information and second indication information, and the second indication information is carried in physical layer signaling or MAC layer signaling; the second indication information indicates the following content: L' row indexes and K' column indexes corresponding to the M pairs of transmission resources in the two-dimensional matrix; the first indication information indicates the following content: a value of at least one of L' or K', indication overheads of each row index, and indication overheads of each column index; and L' is a positive integer less than or equal to L, and K' is a positive integer less than or equal to K.

16. The method according to claim 14 or 15, wherein the first indication information further indicates a mapping manner, the mapping manner comprises one-to-one mapping or one-to-many mapping, the one-to-one mapping comprises mapping between one antenna port and one frequency domain resource unit, and the one-to-many mapping comprises mapping between one antenna port and a plurality of frequency domain resource units and/or mapping between one frequency domain resource unit and a plurality of antenna ports.

17. The method according to claim 16, wherein the mapping manner is the one-to-many mapping, L' is less than M and/or K' is less than M, the second indication information further indicates a mapping rule, the mapping rule indicates a quantity of frequency domain resource units corresponding to each antenna port or a quantity of antenna ports corresponding to each frequency domain resource unit, and the first indication information further indicates indication overheads of the mapping rule.

18. The method according to claim 11, wherein the indication information indicates a column index of a target element comprised in each row of the two-dimensional matrix or a row index of a target element comprised in each column of the two-dimensional matrix, a transmission resource represented by each target element is comprised in the M pairs of transmission resources, a row index of each target element is determined based on a mapping relationship between the L rows in the two-dimensional matrix and L row indexes, and a column index of each target element is determined based on a mapping relationship between K column indexes in the two-dimensional matrix and K column indexes.

19. The method according to claim 18, wherein the indication information is carried in higher layer signaling, and the indication information indicates the following content: a quantity of target elements comprised in each row of the two-dimensional matrix, and the column index of the target element comprised in each row; or a quantity of target elements comprised in each column of the two-dimensional matrix, and the row index of the target element comprised in each column.

20. The method according to claim 18, wherein the indication information comprises first indication information and second indication information, and the second indication information is carried in physical layer signaling or MAC layer signaling, wherein

when the indication information indicates the column index of the target element comprised in each row in the two-dimensional matrix, the second indication information indicates the following content: a quantity of target elements comprised in each row of the two-dimensional matrix, the column index of the target element comprised in each row, and the value of M; and the first indication information indicates the following content: indication overheads of the quantity of target elements comprised in each row, indication overheads of each column index, indication overheads of the value of M, and a value of L; or

when the indication information indicates the row index of the target element comprised in each column of the two-dimensional matrix, the second indication information indicates the following content: a quantity of target elements comprised in each column of the two-dimensional matrix, the row index of the target element comprised in each column, and the value of M; and the first indication information indicates the following content: indication overheads of the quantity of target elements comprised in each column, indication overheads of each row index, indication overheads of the value of M, and a value of K.

21. The method according to claim 18, wherein the indication information comprises first indication information and second indication information, and the second indication information is carried in physical layer signaling or MAC layer signaling, wherein

when the indication information indicates the column index of the target element comprised in each row of the two-dimensional matrix, the second indication information indicates the following content: a quantity of target elements comprised in each row of the two-dimensional matrix and the column index of the target element comprised in each row; and the first indication information indicates the following content: indication overheads of the quantity of target elements comprised in each row, indication overheads of each column index, the value of M, and a value of L; or

when the indication information indicates the row index of the target element comprised in each column of the two-dimensional matrix, the second indication information indicates the following content: a quantity of target elements comprised in each column of the two-dimensional matrix and the row index of the target element comprised in each column; and the first indication information indicates the following content: indication overheads of the quantity of target elements comprised in each column, indication overheads of each row index, the value of M, and a value of K.

22. The method according to claim 11, wherein the indication information indicates a bitmap, and the bitmap comprises a plurality of bits in one-to-one correspondence with a plurality of elements in the two-dimensional matrix, and a value of each bit indicates whether a candidate transmission resource represented by a corresponding element belongs to the M pairs of transmission resources.

23. The method according to claim 22, wherein the indication information is carried in higher layer signaling, and the indication information indicates the following content: the quantity of rows comprised in the two-dimensional matrix, the quantity of columns comprised in the two-dimensional matrix, and the bitmap; and the bitmap comprises L groups of bits corresponding to the L rows of the two-dimensional matrix, each group of bits comprises K bits, the K bits in each group of bits are in one-to-one correspondence with K elements in a corresponding row, and a value of each bit indicates whether a candidate transmission resource represented by a corresponding element is comprised in the M pairs of transmission resources; or the bitmap comprises K groups of bits corresponding to the K columns of the two-dimensional matrix, each group of bits comprises L bits, the L bits in each group of bits are in one-to-one correspondence with L elements in a corresponding column, and a value of each bit indicates whether a candidate transmission resource represented by a corresponding element is comprised in the M pairs of transmission resources.

24. The method according to claim 22, wherein the indication information is carried in higher layer signaling, M target elements corresponding to the M pairs of transmission resources in the two-dimensional matrix are distributed in L' rows, and L' is a positive integer less than or equal to L; the indication information indicates the following content: L' row indexes corresponding to the L' rows, a value of K, and the bitmap; and the bitmap comprises L' groups of bits corresponding to the L' rows, each group of bits comprises K bits, the K bits in each group of bits are in one-to-one correspondence with K elements in a corresponding row, and a value of each bit indicates whether a candidate transmission resource represented by a corresponding element is comprised in the M pairs of transmission resources; or

the M target elements corresponding to the M pairs of transmission resources in the two-dimensional matrix are distributed in K' columns, and K' is a positive integer less than or equal to K; the indication information indicates the following content: K' column indexes corresponding to the K' columns, a value of **L,** and the bitmap; the bitmap comprises K' groups of bits corresponding to the K' columns, each group of bits comprises L bits, the L bits in each group of bits are in one-to-one correspondence with L elements in a corresponding column, and a value of each bit indicates whether a candidate transmission resource represented by a corresponding element is comprised in the M pairs of transmission resources.

25. The method according to claim 22, wherein the indication information comprises first indication information and second indication information, and the second indication information is carried in physical layer signaling or MAC layer signaling, wherein
the second indication information indicates the bitmap; the bitmap comprises L groups of bits corresponding to the L rows in the two-dimensional matrix, each group of bits comprises K bits, the K bits in each group of bits are in one-to-one correspondence with K elements in a corresponding row, and a value of each bit indicates whether a candidate transmission resource represented by a corresponding element is comprised in the M pairs of transmission resources; or the bitmap comprises K groups of bits corresponding to the K columns in the two-dimensional matrix, each group of bits comprises L bits, the L bits in each group of bits are in one-to-one correspondence with L elements in a corresponding column, and a value of each bit indicates whether a candidate transmission resource represented by a corresponding element is comprised in the M pairs of transmission resources; and the first indication information indicates the following content: a value of K and a value of L.

26. The method according to claim 22, wherein the indication information comprises first indication information and second indication information, and the second indication information is carried in physical layer signaling or MAC layer signaling, wherein

M target elements corresponding to the M pairs of transmission resources in the two-dimensional matrix are distributed in L' rows in the L rows, and L' is an integer less than or equal to L; the second indication information indicates the following content: L' row indexes corresponding to the L' rows and the bitmap, the bitmap comprises L' groups of bits corresponding to the L' rows, each group of bits comprises K bits, the K bits in each group of bits are in one-to-one correspondence with K elements in a corresponding row, and a value of each bit indicates whether a candidate transmission resource represented by a corresponding element is comprised in the M pairs of transmission resources; and the first indication information indicates the following content: a value of K, indication overheads of each row index, and a value of L'; or
the M target elements corresponding to the M pairs of transmission resources in the two-dimensional matrix are distributed in K' columns in the K columns, and K' is an integer less than or equal to K; the second indication information indicates the following content: K' column indexes corresponding to the K' columns and the bitmap, the bitmap comprises K' groups of bits corresponding to the K' columns, each group of bits comprises L bits, the L bits in each group of bits are in one-to-one correspondence with L elements in a corresponding column, and a value of each bit indicates whether a candidate transmission resource represented by a corresponding element is comprised in the M pairs of transmission resources; and the first indication information indicates the following content: a value of L, indication overheads of each column index, and a value of K'.

27. The method according to claim 22, wherein the indication information comprises first indication information and second indication information, and the second indication information is carried in physical layer signaling or MAC layer signaling, wherein

M target elements corresponding to the M pairs of transmission resources in the two-dimensional matrix are distributed in L' rows in the L rows, and L' is an integer less than or equal to L; the second indication information indicates the following content: L' row indexes corresponding to the L' rows, the bitmap, and a value of L', the bitmap comprises L' groups of bits corresponding to the L' rows, each group of bits comprises K bits, the K bits in each group of bits are in one-to-one correspondence with K elements in a corresponding row, and a value of each bit indicates whether a candidate transmission resource represented by a corresponding element is comprised in the M pairs of transmission resources; and the first indication information indicates the following content: a value of K, indication overheads of each row index, and indication overheads of the value of L'; or
the M target elements corresponding to the M pairs of transmission resources in the two-dimensional matrix are distributed in K' columns in the K columns, and K' is an integer less than or equal to K; the second indication information indicates the following content: K' column indexes corresponding to the K' columns, the bitmap, and a value of K', the bitmap comprises K' groups of bits corresponding to the K' columns, each group of bits comprises L bits, the L bits in each group of bits are in one-to-one correspondence with L elements in a corresponding column, and a value of each bit indicates whether a candidate transmission resource represented by a corresponding element is comprised in the M pairs of transmission resources; and the first indication information indicates the following content: a value of L, indication overheads of each column index, and indication overheads of the value of K'.

28. The method according to claim 10, wherein the N pairs of candidate transmission resources are represented by using a one-dimensional array, the one-dimensional array comprises N elements, each element represents one pair of candidate transmission resources, the one-dimensional array is obtained by arranging the N pairs of candidate transmission resources according to a combination rule, and the combination rule indicates a dimension in which traversal is preferentially performed by a transmission antenna port in an antenna port dimension and a frequency domain resource unit dimension when the N pairs of candidate transmission resources are obtained by combining the plurality of candidate antenna ports and the plurality of candidate frequency domain resource units; and
determining the M pairs of transmission resources based on the indication information and the N pairs of candidate transmission resources comprises:
determining the M pairs of transmission resources based on the indication information and the one-dimensional array.

29. The method according to claim 28, wherein the indication information indicates M indexes corresponding to the M pairs of transmission resources in the one-dimensional array, and the M indexes are determined based on a mapping relationship between the N elements in the one-dimensional array and N indexes.

30. The method according to claim 28, wherein the indication information is carried in higher layer signaling, and the indication information indicates the M indexes.

31. The method according to claim 28, wherein the indication information comprises first indication information and second indication information, and the second indication information is carried in physical layer signaling or MAC layer signaling; the second indication information indicates the following content: the M indexes and the value of M; and the first indication information indicates the following content: indication overheads of each index and indication overheads of the value of M.

32. The method according to claim 29, wherein the indication information comprises first indication information and second indication information, and the second indication information is carried in physical layer signaling or MAC layer signaling; the second indication information indicates the following content: the M indexes; and the first indication information indicates the following content: indication overheads of each index and the value of M.

33. The method according to claim 28, wherein the indication information indicates a bitmap, the bitmap comprises N bits, the N bits are in one-to-one correspondence with the N elements in the one-dimensional array, and a value of each bit indicates whether a candidate transmission resource represented by a corresponding element belongs to the M pairs of transmission resources.

34. The method according to claim 33, wherein the indication information is carried in higher layer signaling, and the indication information indicates the bitmap.

35. The method according to claim 33, wherein the indication information comprises first indication information and second indication information, and the second indication information is carried in physical layer signaling or MAC layer signaling; the second indication information indicates the bitmap; and the first indication information indicates a quantity of the plurality of candidate antenna ports and a quantity of the plurality of candidate frequency domain resource units.

36. The method according to claim 33, wherein the indication information comprises first indication information and second indication information, and the second indication information is carried in physical layer signaling or MAC layer signaling; the second indication information indicates the following content: a quantity of the plurality of candidate antenna ports, a quantity of the plurality of candidate frequency domain resource units, and the bitmap; and the first indication information comprises indication overheads of the quantity of the plurality of candidate antenna ports and indication overheads of the quantity of the plurality of candidate frequency domain resource units.

37. The method according to any one of claims 33 to 36, wherein the indication information further indicates one or more of the following: the combination rule and/or a length of the bitmap.

38. The method according to any one of claims 22 or 33 to 36, wherein the indication of the bitmap by the indication information comprises the bitmap or a q-nary value corresponding to values represented by a plurality of bits in the bitmap.

39. The method according to claim 38, wherein the indication information further indicates a number system of the q-nary value.

40. The method according to any one of claims 1 to 39, wherein the M pairs of transmission resources are comprised in at least one of a plurality of resource groups, and the plurality of resource groups are obtained by dividing the N pairs of candidate transmission resources according to a division rule; and
the indication information is carried in at least one group of fields, the at least one group of fields corresponds to the at least one resource group, and information carried in each group of fields is used to determine a transmission resource comprised in a corresponding resource group.

41. The method according to claim 40, wherein the indication information further indicates a group index of the resource group corresponding to each group of fields.

42. A communication apparatus, comprising a module configured to perform the method according to any one of claims 1 to 41.

43. A processing apparatus, comprising a memory and a processor, wherein

the memory is configured to store program code; and
the processor is configured to invoke the program code to implement the method according to any one of claims 1 to 41.

44. The apparatus according to claim 43, wherein the processing apparatus is a chip or a chip system.

45. A communication system, comprising a terminal device and a network device, wherein

the network device is configured to: generate indication information, and send the indication information to the terminal device, wherein the indication information is used to determine M pairs of transmission resources, the M pairs of transmission resources are from N pairs of candidate transmission resources, each of the N pairs of candidate transmission resources is obtained by combining one of a plurality of candidate antenna ports and one of a plurality of candidate frequency domain resource units, candidate antenna ports and/or candidate frequency domain resource units comprised in any two pairs of candidate transmission resources are different, each of antenna ports comprised in the M pairs of transmission resources corresponds to one or more frequency domain resource units, N is greater than or equal to M, and N and M are positive integers; and
the terminal device is configured to: determine the M pairs of transmission resources based on the indication information and the N pairs of candidate transmission resources; and send a reference signal on the M pairs of transmission resources.

46. A computer-readable storage medium, wherein the computer-readable storage medium stores a computer program, and when the computer program is executed by a processor, an electronic device is enabled to perform the method according to any one of claims 1 to 41.

47. A computer program product, comprising a computer program, wherein when the computer program is run, the computer is enabled to perform the method according to any one of claims 1 to 41.

FIG. 1

FIG. 2

300

| Terminal device | | Network device |

310. Generate indication information, where the indication information is used to determine M pairs of transmission resources

320. Indication information

330. Determine the M pairs of transmission resources based on the indication information and N pairs of candidate transmission resources

340. Send a reference signal on the M pairs of transmission resources

FIG. 3

Frequency domain resource

0 1 2 3 4 5 6 7 8 9 10 11 12 13 14 15 16 17 18 19 20 21 22 23

Consecutive resources

Inconsecutive resources (evenly arranged)

Inconsecutive resources (evenly arranged)

Candidate frequency domain resource unit

FIG. 4

FIG. 5

Row index    A plurality of candidate
                antenna ports

A plurality of
candidate
frequency
domain
resource units

Column index

FIG. 6

| First indication information | Indication overheads of each row index | Indication overheads of each column index | Indication overheads of a value of L' and/or indication overheads of a value of K' |
|---|---|---|---|

| Second indication information | Value of L' and/or value of K' | L' row indexes | K' column indexes |
|---|---|---|---|

FIG. 7

| First indication information | Indication overheads of each row index | Indication overheads of each column index | Value of L' and/or value of K' |
|---|---|---|---|

| Second indication information | L' row indexes | K' column indexes |
|---|---|---|

FIG. 8

EP 4 668 930 A1

| First indication information | Indication overheads of each row index | Indication overheads of each column index | Indication overheads of a quantity L' of row indexes and/or indication overheads of a quantity K' of column indexes | Mapping manner | Indication overheads of a mapping rule |
|---|---|---|---|---|---|

| Second indication information | Quantity L' of row indexes and/ or quantity K' of column indexes | L' row indexes | K' column indexes | Mapping rule |
|---|---|---|---|---|

(a)

| First indication information | Indication overheads of each row index | Indication overheads of each column index | Quantity L' of row indexes and/ or quantity K' of column indexes | Mapping manner | Indication overheads of a mapping rule |
|---|---|---|---|---|---|

| Second indication information | L' row indexes | K' column indexes | Mapping rule |
|---|---|---|---|

(b)

FIG. 9

| Transmission resource | Two-dimensional matrix | |
|---|---|---|
| | Column index | Row index |
| 1 | x0 | y0 |
| 2 | x0 | y10 |
| 3 | x3 | y4 |
| 4 | x3 | y8 |
| 5 | x5 | y2 |

(a)

Transmission resource

(b)

FIG. 10

| First indication information | Indication overheads of a quantity of target elements included in each row | Indication overheads of each column index | Indication overheads of a value of M | Value of L |
|---|---|---|---|---|

| Second indication information | Value of M | Quantity of target elements included in each row | Column index of the target element included in each row | |
|---|---|---|---|---|

FIG. 11

| First indication information | Indication overheads of a quantity of target elements included in each column | Indication overheads of each row index | Indication overheads of a value of M | Value of K |
|---|---|---|---|---|

| Second indication information | Value of M | Quantity of target elements included in each column | Row index of the target element included in each column | |
|---|---|---|---|---|

FIG. 12

| First indication information | Indication overheads of a quantity of target elements included in each row | Indication overheads of each column index | Value of L | Value of M |
|---|---|---|---|---|

| Second indication information | Quantity of target elements included in each row | Column index of the target element included in each row | | |
|---|---|---|---|---|

FIG. 13

| First indication information | Indication overheads of a quantity of target elements included in each column | Indication overheads of each row index | Value of K | Value of M |
|---|---|---|---|---|

| Second indication information | Quantity of target elements included in each column | Row index of the target element included in each column | | |
|---|---|---|---|---|

FIG. 14

EP 4 668 930 A1

| Two-dimensional matrix | |
| --- | --- |
| Column index | Quantity of target elements included in a column |
| x0 | 2 |
| x1 | 0 |
| x2 | 0 |
| x3 | 2 |
| x4 | 0 |
| x5 | 1 |
| x6 | 0 |
| x7 | 0 |

| Two-dimensional matrix | |
| --- | --- |
| Transmission resource | Column index |
| 1 | x0 |
| 2 | x0 |
| 3 | x3 |
| 4 | x3 |
| 5 | x5 |

(a)

| Two-dimensional matrix | |
| --- | --- |
| Transmission resource | Row index |
| 1 | y0 |
| 2 | y10 |
| 3 | y4 |
| 4 | y8 |
| 5 | y2 |

(b)

(c)

FIG. 15

| First indication information | Value of L | Value of K |
|---|---|---|

| Second indication information | Bitmap |
|---|---|

FIG. 16

| First indication information | Value of K | Indication overheads of each row index | Value of L' |
|---|---|---|---|

| Second indication information | Bitmap | L' row indexes |
|---|---|---|

FIG. 17

| First indication information | Value of K | Indication overheads of each row index | Indication overheads of a value of L' |
|---|---|---|---|

| Second indication information | Value of L' | Bitmap | L' row indexes |
|---|---|---|---|

FIG. 18

EP 4 668 930 A1

**Two-dimensional matrix**

| Column index | Bitmap |
|---|---|
| x0 | 100000000010 |
| x1 | 000000000000 |
| x2 | 000000000000 |
| x3 | 000010001000 |
| x4 | 000000000000 |
| x5 | 001000000000 |
| x6 | 000000000000 |
| x7 | 000000000000 |

(a)

| Transmission resource | Two-dimensional matrix | |
|---|---|---|
| | Column index | Row index |
| 1 | x0 | y0 |
| 2 | x0 | y10 |
| 3 | x3 | y4 |
| 4 | x3 | y8 |
| 5 | x5 | y2 |

(b)

Row index    A plurality of candidate antenna ports

A plurality of candidate frequency domain resource units

Column index

Transmission resource

(c)

FIG. 19

Combinations of a plurality of candidate antenna ports and a plurality
of candidate frequency domain resource units

z0  z1  z2  z3  z4  z5  z6  z7  z8  z9  z10 z11 z12 z13          ...          → Index

Antenna port

P1 P2 P3 P4  P1 P2 P3 P4  P1 P2 P3 P4  P1 P2  P3 P4  P1 P2 P3 P4  P1 P2 P3 P4

Frequency domain

f1          f2          f3          f4          f5          f6

(a)

Combinations of a plurality of candidate antenna ports and a plurality
of candidate frequency domain resource units

z0  z1  z2  z3  z4  z5  z6  z7  z8  z9  z10 z11 z12 z13          ...          → Index

Frequency domain

f1 f2 f3 f4 f5 f6  f1 f2 f3 f4 f5 f6  f1 f2 f3 f4 f5 f6  f1 f2 f3 f4 f5 f6

Antenna port

P1          P2          P3          P4

(b)

FIG. 20

| First indication information | Indication overheads of each index | Indication overheads of a value of M |
|---|---|---|

| Second indication information | Value of M | M indexes |
|---|---|---|

FIG. 21

| First indication information | Indication overheads of each index | Value of M |
|---|---|---|

| Second indication information | M indexes |
|---|---|

FIG. 22

| One-dimensional array | |
|---|---|
| Transmission resource | Index |
| 1 | z0 |
| 2 | z21 |

| Transmission resource | Antenna port | Frequency domain resource unit |
|---|---|---|
| 1 | P1 | f1 |
| 2 | P2 | f6 |

(a)                                                      (b)

FIG. 23

| First indication information | Quantity of a plurality of candidate antenna ports | Quantity of a plurality of candidate frequency domain resource units |
| --- | --- | --- |

| Second indication information | Bitmap |
| --- | --- |

FIG. 24

| First indication information | Indication overheads of a quantity of a plurality of candidate antenna ports | Indication overheads of a quantity of a plurality of candidate frequency domain resource units |
| --- | --- | --- |

| Second indication information | Quantity of the plurality of candidate antenna ports | Quantity of the plurality of candidate frequency domain resource units | Bitmap |
| --- | --- | --- | --- |

FIG. 25

| Bitmap |
|---|
| 1000000000000000000000100 |

(a)

| Transmission resource | Index |
|---|---|
| 1 | z0 |
| 2 | z21 |

(b)

| Transmission resource | Antenna port | Frequency domain resource unit |
|---|---|---|
| 1 | P1 | f1 |
| 2 | P2 | f6 |

(c)

FIG. 26

**(b)**

| Two-dimensional matrix | | |
|---|---|---|
| Group index (each group is in 6×4) | Column index | Row index |
| 0 | x0 x3 | y0 y4 |
| 1 | x0 x3 | y4 y2 |
| 2 | x2 | y2 |
| 3 | No need to indicate | No need to indicate |

| Transmission resource | Two-dimensional matrix | |
|---|---|---|
| | Column index | Row index |
| 1 | x0 | y0 |
| 2 | x0 | y10 |
| 3 | x3 | y4 |
| 4 | x3 | y8 |
| 5 | x5 | y2 |

**(a)**

**(c)**

| Two-dimensional matrix | | |
|---|---|---|
| Group index (each group is in 6×4) | Column index | Quantity of target elements in a column |
| 0 | x0 x3 | 1, 0, 0, 1 |
| 1 | x0 x3 | 1, 0, 0, 1 |
| 2 | x2 | 0, 1, 0, 0 |
| 3 | No need to indicate | No need to indicate |

| Transmission resource | Two-dimensional matrix | |
|---|---|---|
| | Column index | Row index |
| 1 | x0 | y0 |
| 2 | x0 | y10 |
| 3 | x3 | y4 |
| 4 | x3 | y8 |
| 5 | x5 | y2 |

**(d)**

| Two-dimensional matrix | |
|---|---|
| Group index (each group is in 6×4) | Bitmap |
| 0 | 0000 0001 0000 0000 0000 1000 |
| 1 | ... |
| 2 | ... |
| 3 | No need to indicate |

| Transmission resource | Two-dimensional matrix | |
|---|---|---|
| | Column index | Row index |
| 1 | x0 | y0 |
| 2 | x0 | y10 |
| 3 | x3 | y4 |
| 4 | x3 | y8 |
| 5 | x5 | y2 |

FIG. 27

Combinations of a plurality of antenna ports and a
plurality of candidate frequency domain resource units

(a)

(b)

(c)

FIG. 28

BWP
{
| |
|---|
| Unit BWP 5 |
| Unit BWP 4 |
| Unit BWP 3 |
| Unit BWP 2 |
| Unit BWP 1 |
| Unit BWP 0 |

FIG. 29

FIG. 30

FIG. 31

Matrix P (in a dimension of r*n)

$$\begin{bmatrix} 0 & 1 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 1 & 0 & 0 & 0 & 0 \\ 0 & 0 & 0 & 0 & 0 & 0 & 0 & 0 & 0 & 0 & 0 & 0 & 0 & 0 & 0 & 1 \end{bmatrix}$$

(a)

| Transmission resource position | |
|---|---|
| Antenna port | Frequency domain position |
| Tx0 | SC0 |
| Tx0 | SC1 |
| Tx1 | SC1 |

Transmission resource of a reference signal

(b)

FIG. 32

Communication apparatus 3300

Transceiver module 3310

Processing module 3320

FIG. 33

Communication
apparatus 3400

3410

Processor

Program | AI
module

3420

Memory

Program | AI
module

Communication
interface

3430

FIG. 34

Terminal
device 3500

3540

3520 Transceiver

3510

3580

3550 Power
supply

Audio
circuit

Speaker 3581

3530 Memory

Processor

Microphone 3582

3590 Camera

Sensor 3591

3560 Input unit

Display unit 3570

FIG. 35

FIG. 36

## INTERNATIONAL SEARCH REPORT

| International application No. |
|---|
| **PCT/CN2023/084052** |

**A.    CLASSIFICATION OF SUBJECT MATTER**

H04W72/04(2023.01)i

According to International Patent Classification (IPC) or to both national classification and IPC

**B.    FIELDS SEARCHED**

Minimum documentation searched (classification system followed by classification symbols)

IPC:H04W,H04Q,H04L

Documentation searched other than minimum documentation to the extent that such documents are included in the fields searched

Electronic data base consulted during the international search (name of data base and, where practicable, search terms used)

CNTXT; WPABS; WPABSC; ENTXT; ENTXTC; 3GPP; CJFD; IEEE; CNKI; CNABS: 资源, 指示, 传输, 候选, 组, 对, 端口, 天线, 频域, 时域, 部分带宽, 二维矩阵, 索引, resource, indication, transmission, candidate, group, pair, port, antenna, frequency domain, time domain, partial bandwidth, BWP, two-dimensional matrix, index

**C.    DOCUMENTS CONSIDERED TO BE RELEVANT**

| Category* | Citation of document, with indication, where appropriate, of the relevant passages | Relevant to claim No. |
|---|---|---|
| Y | CN 107734514 A (ZTE CORP.) 23 February 2018 (2018-02-23)<br>see description, paragraphs [0017]-[0082] | 1-11, 42-47 |
| Y | CN 114866211 A (HUAWEI TECHNOLOGIES CO., LTD.) 05 August 2022 (2022-08-05)<br>see description, paragraphs [0007]-[0042] | 1-11, 42-47 |
| A | CN 110351848 A (HUAWEI TECHNOLOGIES CO., LTD.) 18 October 2019 (2019-10-18)<br>entire document | 1-47 |
| A | WO 2018028158 A1 (ZTE CORP.) 15 February 2018 (2018-02-15)<br>entire document | 1-47 |

☐ Further documents are listed in the continuation of Box C.       ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
|---|---|
| **15 November 2023** | **21 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/084052**

| Patent document cited in search report | | | Publication date (day/month/year) | Patent family member(s) | | | Publication date (day/month/year) |
|---|---|---|---|---|---|---|---|
| CN | 107734514 | A | 23 February 2018 | EP | 3499739 | A1 | 19 June 2019 |
| | | | | EP | 3499739 | A4 | 22 July 2020 |
| CN | 114866211 | A | 05 August 2022 | WO | 2020073991 | A1 | 16 April 2020 |
| CN | 110351848 | A | 18 October 2019 | EP | 3761738 | A1 | 06 January 2021 |
| | | | | EP | 3761738 | A4 | 27 January 2021 |
| | | | | EP | 3761738 | B1 | 02 August 2023 |
| | | | | US | 2021014861 | A1 | 14 January 2021 |
| | | | | US | 11653337 | B2 | 16 May 2023 |
| | | | | WO | 2019192345 | A1 | 10 October 2019 |
| WO | 2018028158 | A1 | 15 February 2018 | US | 2022224389 | A1 | 14 July 2022 |
| | | | | US | 2019260452 | A1 | 22 August 2019 |
| | | | | US | 11265058 | B2 | 01 March 2022 |

Form PCT/ISA/210 (patent family annex) (July 2022)